# EUROPÄISCHE PATENTANMELDUNG

(11) **EP 3 363 879 A2**
(43) Veröffentlichungstag der Anmeldung: **22.08.2018**
(21) Anmeldenummer: 18160616.1
(22) Anmeldetag: 04.12.2014
(51) Int. Cl.: C10L 1/14, C10L 1/196, C10L 10/00, C10L 10/18, C08F 22/00, C08F 222/06, C08F 8/12, C08F 8/44, C10L 1/22, C10L 1/224, C10L 1/236, C10L 10/04, C10L 10/06

(54) **DIESELKRAFTSTOFFE, ENTHALTEND POLYCARBONSÄURE-BASIERTE ADDITIVE**

(30) Priorität: 29.01.2014 EP 14152991
(62) Teilanmeldung aus: 14806325.8
(71) Anmelder: BASF SE, 67056 Ludwigshafen am Rhein (DE)
(72) Erfinder: PERETOLCHIN, Maxim, 67466 Lambrecht (DE); BÖHNKE, Harald, 68163 Mannheim (DE); GRABARSE, Wolfgang, 68163 Mannheim (DE); VÖLKEL, Ludwig, 67117 Limburgerhof (DE); HANSCH, Markus, 67346 Speyer (DE); OETTER, Günter, 67227 Frankenthal (DE); FLORES-FIGUEROA, Aaron, 68161 Mannheim (DE); MÜHLBACH, Klaus, 67269 Grünstadt (DE); GARCIA CASTRO, Ivette, 67067 Ludwigshafen (DE)
(74) Vertreter: Reitstötter Kinzebach

(57) **Zusammenfassung**

Die vorliegende Erfindung betrifft die Verwendung eines Olefin-Carbonsäure-Copolymers, wobei das Copolymer wenigstens eine freie Carbonsäureseitengruppe enthält, oder einer mit Epoxid in Gegenwart eines Olefin-Carbonsäure-Copolymers, wobei das Copolymer wenigstens eine freie Carbonsäureseitengruppe enthält, quaternisierten Stickstoffverbindung, als Kraftstoff- oder Schmierstoffadditiv; Verfahren zur Herstellung derartiger Additive, sowie damit additivierte Kraft - und Schmierstoffe; wie insbesondere als Detergensadditiv; zur Verringerung oder Verhinderung von Ablagerungen in den Einspritzsystemen von direkteinspritzenden Dieselmotoren, insbesondere in Common-Rail-Einspritzsystemen, zur Verringerung des Kraftstoffverbrauches von direkteinspritzenden Dieselmotoren, insbesondere von Dieselmotoren mit Common-Rail-Einspritzsystemen, und zur Minimierung des Leistungsverlustes (power loss) in direkteinspritzenden Dieselmotoren, insbesondere in Dieselmotoren mit Common-Rail-Einspritzsystemen; sowie als Additiv für Ottokraftstoffe, insbesondere zum Betrieb von DISI Motoren.

## Beschreibung

Die vorliegende Erfindung betrifft die Verwendung eines Olefin-Carbonsäure-Copolymers, wobei das Copolymer wenigstens eine freie Carbonsäureseitengruppe enthält, oder einer mit Epoxid in Gegenwart eines Olefin-Carbonsäure-Copolymers, wobei das Copolymer wenigstens eine freie Carbonsäureseitengruppe enthält, quaternisierten Stickstoffverbindung, als Kraftstoff- oder Schmierstoffadditiv; Verfahren zur Herstellung derartiger Additive, sowie damit additivierte Kraft - und Schmierstoffe; wie insbesondere als Detergensadditiv; zur Verringerung oder Verhinderung von Ablagerungen in den Kraftstoffsystemen und insbesondere Einspritzsystemen von direkteinspritzenden Dieselmotoren, insbesondere in Common-Rail-Einspritzsystemen, zur Verringerung des Kraftstoffverbrauches von direkteinspritzenden Dieselmotoren, insbesondere von Dieselmotoren mit Common-Rail-Einspritzsystemen, und zur Minimierung des Leistungsverlustes (power loss) in direkteinspritzenden Dieselmotoren, insbesondere in Dieselmotoren mit Common-Rail-Einspritzsystemen; sowie als Additiv für Ottokraftstoffe, insbesondere zum Betrieb von DISI Motoren.

### Hintergrund der Erfindung:

Bei direkteinspritzenden Dieselmotoren wird der Kraftstoff durch eine direkt in den Brennraum des Motors reichende Mehrloch-Einspritzdüse eingespritzt und feinst verteilt (vernebelt), anstatt wie beim klassischen (Kammer-) Dieselmotor in eine Vor- oder Wirbelkammer eingeführt zu werden. Der Vorteil der direkteinspritzenden Dieselmotoren liegt in ihrer für Dieselmotoren hohen Leistung und einem dennoch geringen Verbrauch. Außerdem erreichen diese Motoren ein sehr hohes Drehmoment schon bei niedrigen Drehzahlen.

Zurzeit werden im Wesentlichen drei Verfahren eingesetzt, um den Kraftstoff direkt in den Brennraum des Dieselmotors einzuspritzen: die konventionelle Verteilereinspritzpumpe, das Pumpe-Düse-System (Unit-Injector-System bzw. Unit-Pump-System) und das Common-Rail-System.

Beim Common-Rail-System wird der Dieselkraftstoff von einer Pumpe mit Drücken bis zu 2000 bar in eine Hochdruckleitung, die Common-Rail gefördert. Ausgehend von der Common-Rail laufen Stichleitungen zu den verschiedenen Injektoren, die den Kraftstoff direkt in den Brennraum injizieren. Dabei liegt auf der Common-Rail stets der volle Druck an, was eine Mehrfacheinspritzung oder eine spezielle Einspritzform ermöglicht. Bei den anderen Injektionssystemen ist dagegen nur eine geringere Variation der Einspritzung möglich. Die Einspritzung beim Common-Rail wird im Wesentlichen in drei Gruppen unterteilt: (1.) Voreinspritzung, durch die im Wesentlichen eine weichere Verbrennung erreicht wird, so dass harte Verbrennungsgeräusche (" Nageln" ) vermindert werden und der Motorlauf ruhig erscheint; (2.) Haupteinspritzung, die insbesondere für einen guten Drehmomentverlauf verantwortlich ist; und (3.) Nacheinspritzung, die insbesondere für einen geringen NOₓ-Wert sorgt. Bei dieser Nacheinspritzung wird der Kraftstoff in der Regel nicht verbrannt, sondern durch Restwärme im Zylinder verdampft. Das dabei gebildete Abgas-/Kraftstoffgemisch wird zur Abgasanlage transportiert, wo der Kraftstoff in Gegenwart geeigneter Katalysatoren als Reduktionsmittel für die Stickoxide NOₓ wirkt.

Durch die variable, zylinderindividuelle Einspritzung kann beim Common-Rail-Einspritzsystem der Schadstoffausstoß des Motors, z.B. der Ausstoß von Stickoxiden (NOₓ), Kohlenmonoxid (CO) und insbesondere von Partikeln (Ruß), positiv beeinflusst werden. Dies ermöglicht beispielsweise, dass mit Common-Rail-Einspritzsystemen ausgerüstete Motoren der Euro 4-Norm theoretisch auch ohne zusätzlichen Partikelfilter genügen können.

In modernen Common-Rail-Dieselmotoren können sich unter bestimmten Bedingungen, beispielsweise bei Verwendung von biodieselhaltigen Kraftstoffen oder von Kraftstoffen mit Metall-Verunreinigungen wie Zink-Verbindungen, Kupfer-Verbindungen, Bleiverbindungen und weiteren Metallverbindungen, an den Injektoröffnungen Ablagerungen bilden, die das Einspritzverhalten des Kraftstoffs negativ beeinflussen und dadurch die Performance des Motors beeinträchtigen, d.h. insbesondere die Leistung verringern, aber zum Teil auch die Verbrennung verschlechtern. Die Bildung von Ablagerungen wird durch bauliche Weiterentwicklungen der Injektoren, insbesondere durch die Veränderung der Geometrie der Düsen (engere, konische Öffnungen mit abgerundetem Auslass) noch verstärkt. Für eine dauerhaft optimale Funktionsweise von Motor und Injektoren müssen solche Ablagerungen in den Düsenöffnungen durch geeignete Kraftstoffadditive verhindert oder reduziert werden.

In den Einspritzsystemen modernen Dieselmotoren verursachen Ablagerungen signifikante Performance-Probleme. Weit verbreitet ist die Erkenntnis, dass derartige Ablagerungen in den Sprühkanälen zu einer Verringerung des Kraftstoffflusses und damit zu Leistungsverlusten (power loss) führen können. Ablagerungen an der Injektorspitze beeinträchtigen dagegen die optimale Ausbildung von Kraftstoff-Sprühnebel und bedingen dadurch eine verschlechterte Verbrennung und damit verbunden höhere Emissionen und vermehrten Kraftstoffverbrauch. Im Gegensatz zu diesen herkömmlichen, "äußeren" Ablagerungsphänomenen bereiten auch "interne" Ablagerungen (zusammengefasst als innere Diesel-Injektor-Ablagerungen (IDID)) in bestimmten Teilen der Injektoren, wie an der Düsennadel, am Steuerkolben, am Ventilkolben, am Ventilsitz, an der Ansteuereinheit und an den Führungen dieser Komponenten zunehmend Performance-Probleme. Herkömmliche Additive zeigen eine unzureichende Wirkung gegen diese IDIDs.

Aus der US 4,248,719 sind quaternisierte Ammoniumsalze beschrieben, welche durch Umsetzung eines Alkenylsuccinimids mit einem Monocarbonsäureester hergestellt werden und als Dispergiermittel in Schmierölen zur Verhinderung von Schlammbildung Anwendung finden. Insbesondere ist beispielsweise die Umsetzung von Polyisobutylbernsteinsäureanhydrid (PIBSA) mit N,N-Dimethylaminopropylamin (DMAPA) und Quaternisierung mit Methylsalicylat beschrieben. Eine Anwendung in Kraftstoffen, insbesondere Dieselkraftstoffen, wird darin jedoch nicht vorgeschlagen. Die Verwendung von PIBSA mit niedrigen Bismaleinierungsgraden < 20 % wird darin nicht beschrieben.

Aus der US 4,171,959 sind quaternisierte Ammoniumsalze von hydrocarbylsubstituierten Succinimiden beschrieben, welche als Detergenzadditive für Ottokraftstoffzusammensetzungen geeignet sind. Zur Quaternisierung werden bevorzugt Alkylhalogenide eingesetzt. Erwähnt sind außerdem organische C₂-C₈-Hydrocarbyl-Carboxylate und - Sulfonate. Folglich weisen die gemäß dortiger Lehre bereitgestellten quaternisierten Ammoniumsalze als Gegenion entweder ein Halogenid oder ein C₂-C₈-Hydrocarbyl-Carboxylat oder ein C₂-C₈-Hydrocarbyl-Sulfonat-Gruppe auf. Die Verwendung von PIBSA mit niedrigen Bismaleinierungsgraden <20 % wird darin ebenfalls nicht beschrieben.

Aus der EP-A-2 033 945 sind Kaltfließverbesserer bekannt, welche durch Quaternisierung spezieller tertiärer Monoamine, die wenigstens einen C₈-C₄₀-Alkylrest tragen, mit einem C₁-C₄-Alkylester spezieller Carbonsäuren hergestellt werden. Beispiele solcher Carbonsäureester sind Dimethyloxalat, Dimethylmaleat, Dimethylphthalat und Dimethylfumarat. Andere Anwendungen als zur Verbesserung des CFPP Werts von Mitteldestillaten sind in der EP-A-2 033 945 nicht belegt.

Die WO 2006/135881 beschreibt quaternisierte Ammoniumsalze, hergestellt durch Kondensation eines Hydrocarbyl-substituierten Acylierungsmittels und einer Sauerstoff- oder Stickstoffatom-haltigen Verbindung mit tertiärer Aminogruppe, und anschließender Quaternisierung mittels Hydrocarbylepoxid in Kombination mit stöchiometrischen Mengen einer Säure, wie insbesondere Essigsäure. Weitere in der WO 2006/135881 beanspruchte Quaternisierungsmittel sind Dialkylsulfate, Benzylhalogenide und hydrocarbylsubstituierte Carbonate, wobei Dimethylsulfat, Benzylchlorid und Dimethylcarbonat experimentell untersucht wurden.

Die WO 2011/146289 beschreibt stickstofffreie Additive aus einem substituierten Kohlenwasserstoff der wenigstens zwei Carboxylgruppen in freier oder als Anhydrid vorliegender Form aufweist, zur Verbesserung der Detergenswirkung in Kraftstoffsystemen, Als Beispiel sind unter anderem hydrocarbylsubstituierte Bernsteinsäureanhydride und hydrolysierte Formen davon offenbart.

Der vorliegenden Erfindung liegt die Aufgabe zugrunde, eine neue Klasse von Carbonsäure- basierten Additiven für den Einsatz in modernen Diesel- und Ottokraftstoffen bereit zu stellen.

### Kurzfassung der Erfindung:

Obige Aufgabe konnte überraschenderweise durch Olefin-Carbonsäure-Copolymerisate der hierin beschriebenen Art gelöst werden. Diese zeichnen sich insbesondere dadurch aus, dass sie gegen verschiedenste Ablagerungen wirken, die die Leistungsfähigkeit von modernen Dieselmotoren beeinträchtigen. Die erfindungsgemäßen Verbindungen wirken beispielsweise gegen Leistungsverlust sowohl hervorgerufen durch Zinkeintrag als auch hervorgerufen durch Natriumeintrag in den Dieselkraftstoff. Hierbei werden im Wesentlichen Ablagerungen in den Sprühkanälen und der Injektorspitze beseitigt bzw. vermieden. Andererseits wirken die erfindungsgemäßen Verbindungen aber auch gegen innere Diesel-Injektor-Ablagerungen (IDID).

### Figurenbeschreibung:

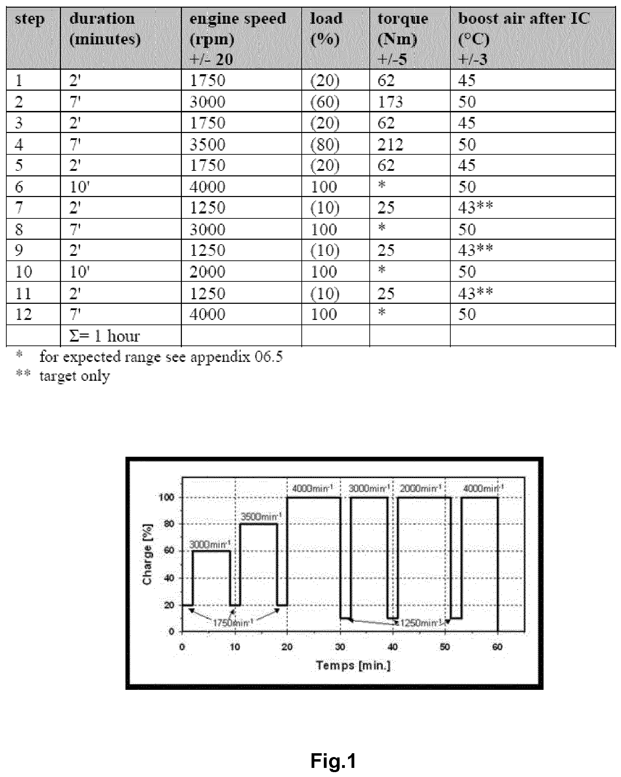

Figur 1 zeigt den Ablauf eines einstündigen Motorentestzyklus gemäß CEC F-098-08.

### Detaillierte Beschreibung der Erfindung:

### A1) Spezielle Ausführungsformen

Spezielle Ausführungsformen der Erfindung sind:
1. Verwendung (a) eines Olefin-polymerisierbare Carbonsäure-Copolymers (d.h. Copolymer aus wenigstens einem Olefin und wenigstens einer polymerisierbaren Carbonsäure), wobei das Copolymer wenigstens eine freie Carbonsäureseitengruppe enthält, oder (b) einer mit Epoxid in Gegenwart eines Olefin-polymerisierbare Carbonsäure-Copolymers, wobei das Copolymer wenigstens eine freie Carbonsäureseitengruppe enthält, quaternisierten Stickstoffverbindung, als Kraftstoff- oder Schmierstoffadditiv, insbesondere Dieselkraftstoffadditiv; insbesondere wobei die polymerisierbare Carbonsäure eine polymerisierbare Mono- oder Polycarbonsäure, insbesondere Monocarbonsäure oder Dicarbonsäure, wie C₄-C₈-Dicarbonsäuren , wie z.B. Acrylsäure, Methacrylsäure oder Maleinsäure, ist; und/oder wobei das Olefin, insbesondere ein α -Olefin, wie z.B. ein C₄-C₄₀- oder C₁₈-C₂₆ -, oder C₁₈-C₂₂ - oder C₂₀-C₂₄- α -Olefin ist..
2. Verwendung eines Copolymers, eines Copolymer-haltigen Reaktionsproduktes, oder einer Copolymer-haltigen Teilfraktion davon, wobei das Copolymer erhältlich ist durch
   (1) Copolymerisation von
      a) mindestens einem ethylenisch ungesättigten, polymerisierbaren Polycarbonsäureanhydrid, insbesondere C₄-C₈-Dicarbonsäureanhydrid, wie z.B. Maleinsäureanhydrid, mit
      b) mindestens einem polymerisierbaren Olefin, insbesondere α -Olefin, wie z.B. ein C₄-C₄₀- oder C₁₈-C₂₆ -, oder C₁₈-C₂₂ - oder C₂₀-C₂₄- α -Olefin;
   (2) anschließende Derivatisierung des Copolymers aus Schritt (1) durch teilweise oder vollständige Umsetzung der Anhydridreste des Copolymers aus Schritt (1) mit Wasser, oder wenigstens einer Hydroxylverbindung, oder wenigstens einem primären oder sekundären Amin, oder Gemischen davon, insbesondere Wasser; unter Bildung eines carboxylgruppenhaltigen Copolymer-Derivats; und gegebenenfalls
   (3) Quaternisierung einer quaternisierbaren (insbesondere tertiären) Stickstoffverbindung mit einem Epoxid und dem Copolymer-Derivat aus Schritt (2);
      als Kraftstoff- oder Schmierstoffadditiv; insbesondere Dieselkraftstoffadditiv.
   In einer speziellen Ausführungsform betrifft die Erfindung die Verwendung eines Copolymers, eines Copolymer-haltigen Reaktionsproduktes, oder einer Copolymer-haltigen Teilfraktion davon, wobei das Copolymer erhältlich ist durch
   (1) Copolymerisation von
      a) mindestens einem ethylenisch ungesättigten, polymerisierbaren C₄-C₈-Dicarbonsäureanhydrid, insbesondere Maleinsäureanhydrid, mit
      b) mindestens einem polymerisierbaren C₁₈-C₂₆ -α -Olefin, wie insbesondere ein C₁₈-C₂₂ -,C₂₀-C₂₄ - oder insbesondere C₂₀-α -Olefin;
   (2) anschließende Derivatisierung des Copolymers aus Schritt (1) durch teilweise oder vollständige Umsetzung der Anhydridreste des Copolymers aus Schritt (1) mit Wasser unter Bildung eines carboxylgruppenhaltigen Copolymer-Derivats.
3. Verwendung eines Copolymers, eines Copolymer-haltigen Reaktionsproduktes, oder einer Copolymer-haltigen Teilfraktion davon, wobei das Copolymer erhältlich ist durch
   (1) Copolymerisation von
      a) mindestens einer ethylenisch ungesättigten, polymerisierbaren Mono- oder Polycarbonsäure, insbesondere Monocarbonsäure oder Dicarbonsäure, z.B. C₄-C₈-Dicarbonsäuren, wie z.B. Acrylsäure, Methacrylsäure oder Maleinsäure, mit
      b) mindestens einem polymerisierbaren Olefin, insbesondere α -Olefin, wie z.B. ein C₄-C₄₀- oder C₁₈-C₂₆- oder C₁₈-C₂₂- oder C₂₀-C₂₄- α -Olefin;
   (2) anschließende Derivatisierung des Copolymers aus Schritt (1) durch teilweise Umsetzung der Carboxylreste des Copolymers mit wenigstens einer Hydroxylverbindung, wenigstens einem primären oder sekundären Amin; oder Gemischen davon, unter Bildung eines Copolymerderivats mit verringertem Gehalt an freien Carboxylgruppen; und gegebenenfalls
   (3) Quaternisierung einer quaternisierbaren Stickstoffverbindung mit einem Epoxid und dem Copolymerderivat aus Schritt (2);
      als Kraftstoff- oder Schmierstoffadditiv; insbesondere Dieselkraftstoffadditiv.
4. Verwendung eines Copolymers, eines Copolymer-haltigen Reaktionsproduktes, oder einer Copolymer-haltigen Teilfraktion davon, wobei das Copolymer erhältlich ist durch
   (1) Copolymerisation von
      a) mindestens eine ethylenisch ungesättigten, polymerisierbaren Mono- oder Polycarbonsäure, insbesondere Monocarbonsäure oder Dicarbonsäure, wie C₄-C₈-Dicarbonsäure ,wie z.B. Acrylsäure oder Maleinsäure, mit
      b) mindestens einem polymerisierbaren Olefin, insbesondere α -Olefin, wie z.B. ein C₄-C₄₀- oder C₁₈-C₂₆ -, C₁₈-C₂₂ - oder C₂₀-C₂₄- α -Olefin; und gegebenenfalls
   (2) Quaternisierung einer quaternisierbaren Stickstoffverbindung mit einem Epoxid und dem Hydrolyseprodukt aus Schritt (1);
      als Kraftstoff- oder Schmierstoffadditiv; insbesondere Dieselkraftstoffadditiv.
5. Verwendung nach einer der Ausführungsformen 1 bis 4 als Additiv zur Verringerung des Kraftstoffverbrauches von direkteinspritzenden Dieselmotoren, insbesondere von Dieselmotoren mit Common-Rail-Einspritzsystemen.
6. Verwendung nach einer der Ausführungsformen als Additiv zur Minimierung des Leistungsverlustes (powerloss) in direkteinspritzenden Dieselmotoren, insbesondere in Dieselmotoren mit Common-Rail-Einspritzsystemen.
7. Verwendung nach Ausführungsform 6 als Additiv zur Minimierung des Leistungsverlustes (powerloss) bedingt durch K-, Zn-, Ca- und/oder Na-Ionen (so genannter K-, Zn-, Ca- bzw. Na-powerloss).
8. Verwendung nach einer der Ausführungsformen als Ottokraftstoffadditiv zur Verringerung von Ablagerungen im Einlasssystem eines Ottomotors, wie insbesondere DISI und PFI (Port Fuel Injector) -Motoren.
9. Verwendung nach einer der vorherigen Ausführungsformen als Dieselkraftstoffadditiv zur Verringerung und/oder Vermeidung von Ablagerungen in den Kraftstoffsystemen, insbesondere Einspritzsystemen, wie insbesondere der Internal Diesel Injector Deposits (IDID) und / oder zur Verringerung und/oder Vermeidung von Ventilkleben in direkteinspritzenden Dieselmotoren, insbesondere in Common-Rail-Einspritzsystemen.
   Die Verwendungen der vorliegenden Erfindung basieren somit insbesondere darauf, dass die erfindungsgemäßen Verbindungen gegen Ablagerungen nicht nur im Einspritzsystem wirken, sondern auch im übrigen Kraftstoffsystem, hier insbesondere gegen Ablagerungen in Kraftstofffiltern und - pumpen.
10. Verwendung nach Ausführungsform 9 als Dieselkraftstoffadditiv zur Verringerung und/oder Vermeidung der Internal Diesel Injector Deposits (IDID) bedingt durch Na-, Ca.- und/oder K-Ionen (so genannte Na-, Ca- bzw. K- Seifen IDID).
11. Verwendung nach Ausführungsform 10 als Dieselkraftstoffadditiv zur Verringerung und/oder Vermeidung der Internal Diesel Injector Deposits (IDID) bedingt durch polymere Ablagerungen.
12. Verwendung nach einer der vorhergehenden Ausführungsformen, wobei die Carbonsäure ein ethylenisch ungesättigte Polycarbonsäureanhydrid und insbesondere das Anhydrid einer ethylenisch ungesättigten C₄-C₄₀- oder insbesondere C₄-C₈-Dicarbonsäure, wie Maleinsäure ist.
13. Verwendung nach Ausführungsform 11, wobei das ethylenisch ungesättigte Polycarbonsäureanhydrid das Maleinsäureanhydrid ist.
14. Verwendung nach einer der vorhergehenden Ausführungsformen, wobei das polymerisierbare Olefin ein C₄-C₄₀- oder C₁₈-C₂₆-, C₁₈-C₂₂-, oder C₂₀-C₂₄- oder insbesondere C₂₀-α -Olefin ist.
15. Verwendung nach einer der vorhergehenden Ausführungsformen, wobei das polymerisierbare Olefin ein Polymer aus C₂-C₄₀-, insbesondere- C₂-C₁₂-α -Olefin-Bausteinen mit wenigstens einer polymerisierbaren Doppelbindung und mit einem Mw im Bereich von 56 bis 10.000 ist.
16. Verwendung nach einer der vorhergehenden Ausführungsformen, wobei die ethylenisch ungesättigte Carbonsäure, eine ethylenisch ungesättigte C₃-C₄₀-Carbonsäure, insbesondere C₃-C₄₀- oder C₃-C₂₀ oder C₃-C₁₀ -oder C₃-C₄- Monocarbonsäure, oder ein Derivat davon ist.
17. Verwendung nach Ausführungsform 15, wobei die ethylenisch ungesättigte Carbonsäure Acrylsäure oder Methacrylsäure ist.
18. Verwendung nach einer der vorhergehenden Ausführungsformen, wobei die quaternisierbare Stickstoffverbindung, wie z.B. ein quaternisierbare Alkylamin, wenigstens eine quaternisierbare, tertiäre Aminogruppe aufweist.
19. Verwendung nach einer der vorhergehenden Ausführungsformen, wobei das Epoxid ein Hydrocarbylepoxid ist.
20. Verwendung nach einer der vorhergehenden Ausführungsformen, wobei das Epoxid ein Epoxid der allgemeinen Formel 4 umfasst 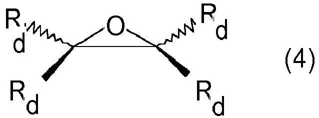 wobei
   die darin enthaltenen Reste R_{d} gleich oder verschieden sind und für H oder für einen Hydrocarbylrest stehen, wobei der Hydrocarbylrest für einen aliphatischen oder aromatischen Rest mit 1 bis 20, insbesondere 1 bis 16 oder 1 bis 10 oder 1 bis 4 Kohlenstoffatomen steht, wie z.B. Propylenoxid
21. Verwendung nach einer der vorhergehenden Ausführungsformen, wobei das Copolymer ein Molekulargewicht M_{w} im Bereich von 400 bis 50.000, insbesondere 800 bis 10.000 g/mol aufweist.
22. Verwendung nach einer der vorhergehenden Ausführungsformen, wobei die quaternisierbare Stickstoffverbindung ein quaternisierbares Amin der folgenden allgemeinen Formel 3 umfasst,

   RₐR_{b}R_{c}N (3)

   worin
   wenigstens einer der Reste Rₐ, R_{b} und R_{c} für einen geradkettigen oder verzweigte, gesättigten oder ungesättigten C₈-C₄₀- oder C₁₀-C₂₀- Hydrocarbylrest, insbesondere geradkettigen oder verzweigte C₈ - C₄₀- oder C₁₀-C₂₀ - Alkyl, steht und die übrigen Reste für gleiche oder verschiedene, geradkettige oder verzweigte, gesättigte oder ungesättigten C₁-C₆-Hydrocarbylreste insbesondere C₁-C₆-Alkyl, stehen, wie z.B. N,N-Dimethyl-N-C_{12/14}-amin; oder
   worin alle Reste Rₐ, R_{b} und R_{c} für gleiche oder verschiedene geradkettige oder verzweigte, gesättigten oder ungesättigten C₈-C₄₀- oder C₁₀-C20 - Hydrocarbylreste, insbesondere geradkettige oder verzweigte C₈ - C₄₀ - oder C₁₀-C₂₀-AlkylReste stehen.
23. Verwendung nach einer der vorhergehenden Ausführungsformen, wobei die quaternisierbare Stickstoffverbindung eine Verbindung der Formel 3 ist, worin zwei der Reste Rₐ, R_{b} und R_{c} gleich oder verschieden sind und für C₁-C₄-Alkyl stehen und der andere der Reste für einen geradkettigen oder verzweigten C₁₀-C₂₀-Alkylrest steht.
24. Verwendung nach einer der vorhergehenden Ausführungsformen, wobei der Kraftstoff ausgewählt unter Dieselkraftstoffen, Biodieselkraftstoffen, Ottokraftstoffen, und Alkanol-haltigen Ottokraftstoffen.
25. Copolymerprodukt, (insbesondere Copolymer oder Copolymer-haltiges Quaternierungsprodukt) gemäß der Definition in einer der Ausführungsformen1 bis 22.
26. Verfahren zur Herstellung eines Copolymers nach Ausführungsform 24 umfassend die
   (1) Copolymerisation der der Monomerkomponenten
   (2) gegebenenfalls anschließende teilweise oder vollständige Umsetzung des Copolymers aus Schritt (1) mit Wasser, wenigstens einer Hydroxylverbindung, wenigstens einem primären oder sekundären Amin; oder Gemischen davon; und/oder gegebenenfalls
   (3) Quaternisierung einer quaternisierbaren Stickstoffverbindung mit einem Epoxid und dem Hydrolyseprodukt aus Schritt (2); oder mit einem Epoxid und dem Copolymer aus Schritt (1) .
27. Additivkonzentrat, enthaltend in Kombination mit weiteren Diesel- oder Ottokraftstoffadditiven oder Schmierstoffadditiven wenigstens ein Copolymer , ein Copolymer-haltiges Reaktionsprodukt, oder eine Copolymer-haltige Teilfraktion davon gemäß der Definition in einer der Ausführungsformen 1 bis 22 oder hergestellt nach Ausführungsform 25.
28. Kraftstoffzusammensetzung, Schmierstoffzusammensetzung oder Kerosinzusammensetzung, insbesondere Dieselkraftstoffzusammensetzung, enthaltend ein Copolymer, ein Copolymer-haltiges Reaktionsprodukt, oder eine Copolymer-haltige Teilfraktion davon gemäß der Definition in einer der Ausführungsformen 1 bis 22 oder hergestellt nach Ausführungsform 25

### A2) Allgemeine Definitionen

Werden keine gegenteiligen Angaben gemacht, so gelten folgende allgemeine Bedeutungen:
Unter dem "Einspritzsystem" wird der Teil des Kraftstoffsystems in Kraftfahrzeugen von Kraftstoffpumpe bis einschließlich Injektorauslass verstanden.

Als "Kraftstoffsystem" werden die Bauteile von Kraftfahrzeugen verstanden, die mit dem jeweiligen Kraftstoff in Kontakt stehen, bevorzugt der Bereich von Tank bis einschließlich Injektorauslass.

" Innere Diesel-Injektor-Ablagerungen (IDID)" , sind insbesondere Ablagerungen bedingt durch Na-, Ca- und/oder K-Ionen (so genannte Na-, Ca- bzw. K- Seifen IDID) und/oder polymere Ablagerungen. Bei Na-, Ca- bzw. K- Seifen IDID handelt es sich um Ablagerungen, die die betreffenden Metallionen mit beliebigen Gegenionen enthalten. Die polymeren Ablagerungen dagegen sind frei von Metallionen und auf hochmolekulares und im Kraftstoff wenig oder unlösliches organisches Material zurückzuführen.

Eine " freie Carbonsäureseitengruppe" im Sinne der Erfindung umfasst zumindest eine Carboxylgruppe der Formel - COOH, die sowohl in protonierter Form oder in Salzform (z.B. Alkalimetallsalz) vorliegen kann, oder als Derivat, wie z.B. als Teil einer Anhydridgruppe oder als Ester, wie z.B. Niedrigalkylester..

Eine " polymerisierbare Carbonsäure" steht für polymerisierbare Mono- oder Polycarbonsäuren, welche wenigstens eine, insbesondere eine, polymerisierbare Gruppe, insbesondere C=C-Gruppe aufweisen, und insbesondere ethylenisch ungesättigt sind. Insbesondere sind dies einfach ungesättigte Mono- oder Polycarbonsäuren, insbesondere einfach ungesättigte Mono- oder Dicarbonsäuren. Ebenfalls umfasst sind die Derivate, insbesondere Ester und Anhydriden davon. Ester sind insbesondere die Niedrigalkylester.

"Quaternisierbare" Stickstoffgruppen oder Aminogruppen umfassen insbesondere primäre, sekundäre und, vor allem, tertiäre Aminogruppen.

"Hydrocarbyl" ist breit auszulegen und umfasst sowohl langkettige als auch kurzkettige, gerade oder verzweigte Kohlenwasserstoffreste mit 1 bis 50 Kohlenstoffatomen, welche ggf. zusätzlich Heteroatome, wie z.B. O, N, NH,S, in ihrer Kette enthalten können. Eine spezielle Gruppe von Hydrocarbyl Resten umfasst sowohl langkettige als auch kurzkettige, geradkettige oder verzweigte Alkylreste mit 1 bis 1000, 3 bis 500 4 bis 400 Kohlenstoffatomen.

"Langkettige" oder "Hochmolekulare" Hydrocarbylreste stehen für geradkettige oder verzweigte Kohlenwasserstoffreste und weisen 7 bis 50 oder 8 bis 50 oder 8 bis 40 oder 10 bis 20 Kohlenstoffatomen, welche ggf. zusätzlich Heteroatome, wie z.B. O, N, NH,S, in ihrer Kette enthalten können. Weiterhin können die Reste ein- oder mehrfach ungesättigt sein und ein oder mehrere nicht-kumulierte, wie z.B. 1 bis 5, wie 1, 2 oder 3 C-C Doppelbindungen oder C-C- Dreifachbindungen, insbesondere 1, 2 oder 3 Doppelbindungen, aufweisen. Sie können natürlichen oder synthetischen Ursprungs sein.

Sie können auch ein zahlengemitteltes Molekulargewicht (Mₙ) von 85 bis 20.000, wie z.B. 113 bis 10.000, oder 200 bis 10.000 oder 350 bis 5.000, wie z.B. 350 bis 3.000, 500 bis 2.500, 700 bis 2.500, oder 800 bis 1.500 aufweisen Sie sind dann insbesondere im Wesentlichen aus C₂₋₆-, insbesondere C₂₋₄-Monomerbausteinen, wie Ethylen, Propylen, n- oder iso-Butylen oder Mischungen davon aufgebaut, wobei die verschiedenen Monomere statistisch verteilt oder als Blöcke einpolymerisiert enthalten sein können. Derartige langkettige Hydrocarbylreste werden auch als Polyalkylenreste oder Poly-C₂₋₆- oder Poly-C₂₋₄-alkylenreste bezeichnet. Geeignete langkettige Hydrocarbylreste und deren Herstellung sind beispielsweise auch beschreiben in der WO2006/135881 und der dort zitierten Literatur.

Beispiele für besonders brauchbare Polyalkylen-Reste sind Polyisobutenyl-Reste, abgeleitet von sogenannten "hochreaktiven" Polyisobutenen, die sich durch einen hohen Gehalt an terminal angeordneten Doppelbindungen auszeichnen. Terminal angeordnete Doppelbindungen sind dabei alpha-olefinische Doppelbindungen des Typs 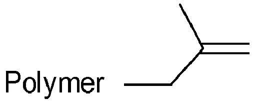 welche zusammen auch als Vinyliden-Doppelbindungen bezeichnet werden. Geeignete hochreaktive Polyisobutene sind beispielsweise Polyisobutene, die einen Anteil an Vinyliden-Doppelbindungen von größer 70 Mol-%, insbesondere größer 80 Mol-% oder größer 85 Mol-% aufweisen. Bevorzugt sind insbesondere Polyisobutene, die einheitliche Polymergerüste aufweisen. Einheitliche Polymergerüste weisen insbesondere solche Polyisobutene auf, die zu wenigstens 85 Gew.-%, vorzugsweise zu wenigstens 90 Gew.-% und besonders bevorzugt zu wenigstens 95 Gew.-% aus Isobuteneinheiten aufgebaut sind. Vorzugsweise weisen solche hochreaktiven Polyisobutene ein zahlenmittleres Molekulargewicht in dem oben genannten Bereich auf. Darüber hinaus können die hochreaktiven Polyisobutene eine Polydispersität im Bereich von 1,05 bis 7, insbesondere von etwa 1,1 bis 2,5, wie z.B. von kleiner 1,9 oder kleiner 1,5, aufweisen. Unter Polydispersität versteht man den Quotienten aus gewichtsmittlerem Molekulargewicht Mw geteilt durch das zahlenmittlere Molekulargewicht Mn.

Besonders geeignete hochreaktive Polyisobutene sind z.B. die Glissopal-Marken der BASF SE, insbesondere Glissopal 1000 (Mn = 1000), Glissopal V 33 (Mn = 550) und Glissopal 2300 (Mn = 2300) und deren Mischungen. Andere zahlenmittlere Molekulargewichte können nach im Prinzip bekannter Weise durch Mischen von Polyisobutenen unterschiedlicher zahlenmittlerer Molekulargewichte oder durch extraktive Anreicherung von Polyisobutenen bestimmter Molekulargewichtsbereiche eingestellt werden.

Eine spezielle Gruppe von langkettigen Hydrocarbyl Resten umfasst geradkettige oder verzweigte Alkylresten ("langkettige" Alkylreste" ) mit 8 bis 50, wie z.B. 8 bis 40 oder 8 bis 30 oder 10 bis 20 Kohlenstoffatomen.

Eine weitere Gruppe spezieller langkettiger Hydrocarbylreste umfasst Polyalkylenreste, die insbesondere im Wesentlichen aus C₂₋₆-, insbesondere C₂₋₄-Monomerbausteinen, wie Ethylen, Propylen, n- oder iso-Butylen oder Mischungen davon aufgebaut sind und einen Polymerisationsgrad von 2 bis 100, oder 3 bis 50 oder 4 bis 25 aufweisen.

"Kurzkettiges Hydrocarbyl" oder "niedermolekulares Hydrocarbyl" steht insbesondere für geradkettiges oder verzweigtes Alkyl oder Alkenyl, gegebenenfalls unterbrochen durch eine oder mehrere, wie z.B. 2, 3 oder 4 Heteroatomgruppen, wie -O- oder - NH-. oder gegebenenfalls ein- oder mehrfach, wie z.B. 2, 3 oder 4-fach substituiert.

"Hydrocarbylen" steht für geradkettige oder ein- oder mehrfach verzweigte Brückengruppen mit 1 bis 10 Kohlenstoffatomen, gegebenenfalls unterbrochen durch eine oder mehrere, wie z.B. 2, 3 oder 4 Heteroatomgruppen, wie -O- oder - NH-. oder gegebenenfalls ein- oder mehrfach, wie z.B. 2, 3 oder 4-fach substituiert.

"Alkyl" oder "Niedrigalkyl" steht insbesondere für gesättigte, geradkettige oder verzweigte Kohlenwasserstoffreste mit 1 bis 4, 1 bis 5, 1 bis 6, oder 1 bis 7, Kohlenstoffatomen, wie z. B. Methyl, Ethyl, n-Propyl, 1-Methylethyl, n-Butyl, 1-Methyl-propyl, 2-Methylpropyl, 1,1-Dimethylethyl, n-Pentyl, 1-Methylbutyl, 2-Methylbutyl, 3-Methylbutyl, 2,2-Di-methylpropyl, 1-Ethylpropyl, n-Hexyl, 1,1-Dimethylpropyl, 1,2-Dimethylpropyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl und 1-Ethyl-2-methylpropyl; sowie n-Heptyl, sowie die ein- oder mehrfach verzweigten Analoga davon.

" Langkettiges Alkyl" steht beispielsweise für gesättigte, geradkettige oder verzweigte Kohlenwasserstoffreste mit 8 bis 50, wie z.B. 8 bis 40 oder 8 bis 30 oder 10 bis 20 Kohlenstoffatomen, wie Octyl, Nonyl, Decyl, Undecyl, Dodecyl, Tridecyl, Tetradecyl, Pentadecyl, Hexadecyl, Heptadecyl, Octadecyl, Nonadecyl, Eicosyl, Heneicosyl, Docosyl, Tricosyl, Tetracosyl, Pentacosyl, Hexacosyl, Heptacosyl, Octacosyl, Nonacosyl, Squalyl, Konstitutionsisomere, insbesondere ein oder mehrfach verzweigte Isomere und höhere Homologe davon.

" Hydroxyalkyl" steht insbesondere für die ein- oder mehrfach, insbesondere einfach hydroxylierten Analoga obiger Alkylreste, wie z.B. die monohydroxylierten Analoga obiger geradkettiger oder verzweigter Alkylreste, wie z.B. die linearen Hydroxyalkylgruppen, wie z.B. solchen mit primärer (endständigen) Hydroxylgruppe, wie Hydroxymethyl, 2-Hydroxyethyl, 3-Hydroxypropyl, 4-Hydroxybutyl, oder solchen mit nichtendständigen Hydroxylgruppen, wie 1-Hydroxyethyl, 1- oder 2-Hydroxypropyl, 1- oder 2-Hydroxybutyl oder 1-, 2- oder 3-Hydroxybutyl.

" Alkenyl" steht für ein- oder mehrfach, insbesondere einfach ungesättigte, geradkettige oder verzweigte Kohlenwasserstoffreste mit 2 bis 4, 2 bis 6, oder 2 bis 7 Kohlenstoffatomen und einer Doppelbindung in einer beliebigen Position, z. B. C₂-C₆-Alkenyl wie Ethenyl, 1-Propenyl, 2-Propenyl, 1-Methylethenyl, 1-Butenyl, 2-Butenyl, 3-Butenyl, 1-Methyl-1-propenyl, 2-Methyl-1-propenyl, 1-Methyl-2-propenyl, 2-Methyl-2-propenyl, 1-Pentenyl, 2-Pentenyl, 3-Pentenyl, 4-Pentenyl, 1-Methyl-1-butenyl, 2-Methyl-1-butenyl, 3-Methyl-1-butenyl, 1-Methyl-2-butenyl, 2-Methyl-2-butenyl, 3-Methyl-2-butenyl, 1-Methyl-3-butenyl, 2-Methyl-3-butenyl, 3-Methyl-3-butenyl, 1,1-Dimethyl-2-propenyl, 1,2-Dimethyl-1-propenyl, 1,2-Dimethyl-2-propenyl, 1-Ethyl-1-propenyl, 1-Ethyl-2-propenyl, 1-Hexenyl, 2-Hexenyl, 3-Hexenyl, 4-Hexenyl, 5-Hexenyl, 1-Methyl-1-pentenyl, 2-Methyl-1-pentenyl, 3-Methyl-1-pentenyl, 4-Methyl-1-pentenyl, 1-Methyl-2-pentenyl, 2-Methyl-2-pentenyl, 3-Methyl-2-pentenyl, 4-Methyl-2-pentenyl, 1-Methyl-3-pentenyl, 2-Methyl-3pentenyl, 3-Methyl-3-pentenyl, 4-Methyl-3-pentenyl, 1-Methyl-4-pentenyl, 2-Methyl-4-pentenyl, 3-Methyl-4-pentenyl, 4-Methyl-4-pentenyl, 1,1-Dimethyl-2-butenyl, 1,1-Dimethyl-3-butenyl, 1,2-Dimethyl-1-butenyl, 1,2-Dimethyl-2-butenyl, 1,2-Dimethyl-3-butenyl, 1,3-Dimethyl-1 -butenyl, 1,3-Dimethyl-2-butenyl, 1,3-Dimethyl-3-butenyl, 2,2-Dimethyl-3-butenyl, 2,3-Dimethyl-1 -butenyl, 2,3-Dimethyl-2-butenyl, 2,3-Dimethyl-3-butenyl, 3,3-Dimethyl-1-butenyl, 3,3-Dimethyl-2-butenyl, 1-Ethyl-1-butenyl, 1-Ethyl-2-butenyl, 1-Ethyl-3-butenyl, 2-Ethyl-1-butenyl, 2-Ethyl-2-butenyl, 2-Ethyl-3-butenyl, 1,1,2-Trimethyl-2-propenyl, 1-Ethyl-1-methyl-2-propenyl, 1-Ethyl-2-methyl-1-propenyl und 1-Ethyl-2-methyl-2-propenyl.

" Hydroxyalkenyl" steht insbesondere für die ein- oder mehrfach, insbesondere einfach hydroxylierten Analoga obiger Alkenylreste

"Aminoalkyl" und "Aminoalkenyl" steht insbesondere für die ein- oder mehrfach, insbesondere einfach aminierten Analoga obiger Alkyl- bzw. Alkenylreste, oder Analoga obiger Hydroxyalkyl, wobei die OH-Gruppe durch eine Aminogruppe ersetzt ist.

" Alkylen" steht für geradkettige oder ein- oder mehrfach verzweigte Kohlenwasserstoff-Brückengruppen mit 1 bis 10 Kohlenstoffatomen, wie z.B. C₁-C₇-Alkylengruppen ausgewählt unter -CH₂-, -(CH₂)₂-, -(CH₂)₃-,-(CH₂)₄-, -(CH₂)₂-CH(CH₃)-, -CH₂-CH(CH₃)-CH₂-, (CH₂)₄-, -(CH₂)₅-, -(CH₂)₆, -(CH₂)₇-, -CH(CH₃)-CH₂-CH₂-CH(CH₃)- oder - CH(CH₃)-CH₂-CH₂-CH₂-CH(CH₃)- oder C₁-C₄-Alkylengruppen ausgewählt unter -CH₂-, -(CH₂)₂-, -(CH₂)₃-,-(CH₂)₄-, -(CH₂)₂-CH(CH₃)-, -CH₂-CH(CH₃)-CH₂- oder für C₂-C₆-Alkylengruppen, wie z.B. -CH₂-CH(CH₃)-, -CH(CH₃)-CH₂-, -CH(CH₃)-CH(CH₃)-, -C(CH₃)₂-CH₂-, -CH₂-C(CH₃)₂-, -C(CH₃)₂-CH(CH₃)-, -CH(CH₃)-C(CH₃)₂-, -CH₂-CH(Et)-, -CH(CH₂CH₃)-CH₂-, -CH(CH₂CH₃)-CH(CH₂CH₃)-, -C(CH₂CH₃)₂-CH₂-, -CH₂-C(CH₂CH₃)₂-, -CH₂-CH(n-Propyl)-, -CH(n-Propyl)-CH₂-, -CH(n-Propyl)-CH(CH₃)-, -CH₂-CH(n-Butyl)-, -CH(n-Butyl)-CH₂-, -CH(CH₃)-CH(CH₂CH₃)-, -CH(CH₃)-CH(n-Propyl)-, -CH(CH₂CH₃)-CH(CH₃)-, -CH(CH₃)-CH(CH₂CH₃)-, oder für C₂-C₄-Alkylengruppen, wie z.B. ausgewählt unter -(CH₂)₂-, -CH₂-CH(CH₃)-, -CH(CH₃)-CH₂-, -CH(CH₃)-CH(CH₃)-, -C(CH₃)₂-CH₂-, -CH₂-C(CH₃)₂-, -CH₂-CH(CH₂CH₃)-, -CH(CH₂CH₃)-CH₂-.

" Oxyalkylen-Reste entsprechen der Definition obiger geradkettiger oder ein- oder mehrfach verzweigter Alkylenreste mit 2 bis 10 Kohlenstoffatomen, wobei die Kohlenkette durch ein Sauerstoff-Heteroatom 1- oder mehrfach, insbesondere 1-fach unterbrochen ist. Als nichtlimitierende Beispiele sind zu nennen: -CH₂-O-CH₂-, -(CH₂)₂-O-(CH₂)₂-, -(CH₂)₃-O-(CH₂)₃-, oder -CH₂-O-(CH₂)₂-, -(CH₂)₂-O-(CH₂)₃-, -CH₂-O-(CH₂)₃

"Aminoalkylen" entsprechen der Definition obiger geradkettiger oder ein- oder mehrfach verzweigter Alkylenreste mit 2 bis 10 Kohlenstoffatomen, wobei die Kohlenkette durch eine Stickstoffgruppe (insbesondere - NH-Gruppe) 1- oder mehrfach, insbesondere 1-fach unterbrochen ist. Als nichtlimitierende Beispiele sind zu nennen: -CH₂-NH-CH₂-, -(CH₂)₂-NH-(CH₂)₂-, -(CH₂)₃-NH-(CH₂)₃-, oder -CH₂-NH-(CH₂)₂-, -(CH₂)₂-NH-(CH₂)₃-, -CH₂-NH-(CH₂)₃.

" Alkenylen" steht für die ein- oder mehrfach, insbesondere einfach ungesättigten Analoga obiger Alkylengruppen mit 2 bis 10 Kohlenstoffatomen, insbesondere für C₂-C₇-Alkenylene oder C₂-C₄-Alkenylen, wie -CH=CH-, -CH=CH-CH₂-, - CH₂-CH=CH-, -CH=CH-CH₂-CH₂-, -CH₂-CH=CH-CH₂-, -CH₂-CH₂-CH=CH-, -CH(CH₃)-CH=CH-, -CH₂-C(CH₃)=CH-.

-" Cycloalkyl" steht für carbocyclische Reste mit 3 bis 20 Kohlenstoffatomen, wie z.B. C₃-C₁₂-Cycloalkyl, wie Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl, Cycloheptyl, sowie Cyclopropyl-methyl, Cyclopropyl-ethyl, Cyclobutyl-methyl, Cyclobutyl-ethyl, Cyclopentyl-methyl, Cyclopentyl-ethyl, Cyclohexyl-methyl oder C₃-C₇-Cycloalkyl, wie Cyclopropyl, Cyclobutyl, Cyclopentyl, Cyclohexyl, Cycloheptyl, Cyclopropyl-methyl, Cyclopropyl-ethyl, Cyclobutyl-methyl, Cyclopentyl-ethyl, Cyclohexyl-methyl, wobei die Anbindung an den Rest des Moleküls über jegliches geeignetes C-Atom erfolgen kann.

"Cycloalkenyl" oder ein- oder mehrfach ungesättigtes Cycloalkyl" steht insbesondere für monocyclische, ein oder mehrfach ungesättigte Kohlenwasserstoffgruppen mit 5 bis 8, vorzugsweise bis 6 Kohlenstoffringgliedern, wie z.B. die einfach ungesättigten Rests Cyclopenten-1-yl, Cyclopenten-3-yl, Cyclohexen-1-yl, Cyclohexen-3-yl und Cyclohexen-4-yl;

"Aryl" steht für ein- oder mehrkernige, vorzugsweise ein- oder zweikernige, gegebenenfalls substituierte aromatische Reste mit 6 bis 20 wie z.B. 6 bis 10 RingKohlenstoffatomen, wie z.B. Phenyl, Biphenyl, Naphthyl wie 1- oder 2-Naphthyl, Tetrahydronaphthyl, Fluorenyl, Indenyl und Phenanthrenyl. Diese Arylreste können gegebenenfalls 1, 2, 3, 4, 5 oder 6 gleiche oder verschiedene Substituenten tragen.

" Alkylaryl" steht für die in beliebiger Ringposition ein- oder mehrfach, insbesondere 1- oder 2-fach, Alkyl-substituierten Analoga obiger Arylreste, wobei Aryl ebenfalls die oben angegebenen Bedeutungen besitzt, wie z.B. C₁-C₄-Alkyl-Phenyl-, wobei der C₁-C₄-Alkylreste in beliebiger Ringposition liegen können.

" Substituenten" für hierin angegebene Reste, sind insbesondere, wenn keine anderen Angaben gemacht werde, ausgewählt sind unter Ketogruppen, - COOH, -COO-Alkyl, - OH, -SH, -CN, Amino, -NO₂, Alkyl, oder Alkenylgruppen.

"Mn" steht für das zahlenmittleres Molekulargewicht und wird in herkömmlicher Weise bestimmt; insbesondere beziehen sich solche Angaben auf Mn-Werte, bestimmt durch Relativmethoden, wie der Gelpermeationschromatographie mit THF als Eluent und Polystyrol-Standards oder Absolutmethoden, wie der Dampfphasenosmometrie unter Verwendung von Toluol als Lösungsmittel.

"Mw" steht für das gewichtsmittlere Molekulargewicht und wird in herkömmlicher Weise bestimmt; insbesondere beziehen sich solche Angaben auf Mw-Werte, bestimmt durch Relativmethoden, wie der Gelpermeationschromatographie mit THF als Eluent und Polystyrol-Standards oder Absolutmethoden, wie der Lichtstreuung.

Der "Polymerisationsgrad" bezeichnet gewöhnlich den zahlenmäßigen mittleren Polymerisationsgrad (Bestimmungsmethode Gelpermeationschromatographie mit THF als Eluent und Polystyrol-Standards; oder GC-MS Kopplung).

### A3) Olefin-Carbonsäure -Copolymere

Die zur Quaternisierung von Stickstoffverbindungen erfindungsgemäß verwendeten Copolymere sind aus an sich bekannten Monomerbausteinen, nämlich polymerisierbares Olefin (m1) und polymerisierbare Carbonsäure (m2) in an sich bekannter Weise zugänglich. Das Copolymer kann als statistisches, alternierendes oder auch als Block Copolymer vorliegen.

In einer Ausführungsform der vorliegenden Erfindung hat Copolymer ein mittleres Molekulargewicht M_{w} im Bereich von 800 bis 50.000, 900 bis 10.000, 1.000 bis 5.000 oder bevorzugt 1.000 bis 3.000 g/mol, z.B. bestimmt durch Gelpermeationschromatographie des nicht hydrolysierten Copolymers in THF (Tetrahydrofuran) mit Polystyrol-Kalibrierung.

### Olefin Baustein (m1):

Beispielsweise kann das polymerisierbare Olefin ein C₄-C₄₀- α -Olefin sein, bevorzugt C₆-C₃₆- α -Olefin, besonders bevorzugt C₈-C₃₂- α -Olefin, ganz besonders bevorzugt C₁₀-C₂₈- α -Olefin, insbesondere C₁₂-C₂₆- α -Olefin und speziell C₁₆-C₂₄-, insbesondereC₁₈-C₂₂- α -Olefin, wie z.B. ein C₂₀ α -Olefin.

In einer anderen Ausführungsform kann das das polymerisierbare Olefin ein Polymer aus C₂-C₁₂-Olefin Bausteinen, bevorzugt enthaltend C₂-C₁₂-α -Olefin-, besonders bevorzugt bestehend aus C₂-C₁₂-α -Olefin-Bausteinen mit wenigstens einer polymerisierbaren Doppelbindung und mit einem Mw im Bereich von 56 bis 10.000 sein.

Namentlich genannt seien Oligomere und Polymere von Propen, 1-Buten, 2-Buten, iso-Buten sowie deren Mischungen, besonders Oligomere und Polymere von Propen oder iso-Buten oder von Mischungen aus 1-Buten und 2-Buten. Unter den Oligomeren sind die Trimere, Tetramere, Pentamere und Hexamere sowie deren Gemische bevorzugt. Nichtlimitierende Beispiele für C₂-C₄₀- α -Olefine sind, Ethylen, Propylen, ein oder mehrfach verzweigte oder unverzweigte Formen von α -C₄H₈, α -C₅H₁₀, α -C₆H₁₂, α -C₇H₁₄, α -C₈H₁₆, α -C₉H₁₈, α -C₁₀H₂₀, α -C₁₂H₂₄, α -C₁₄H₂₈, α -C₁₆H₃₂, α -C₁₈H₃₆, α -C₂₀H₄₀, α -C₂₂H₄₄, α -C₂₄H₄₈, α -C₃₀H₆₀, α -C₄₀H₈₀, α Diisobuten, α -Triisobuten, α -Tetraisobuten, Dimerpropen, Trimerpropen und Tetramerpropen; sowie Polyisobutene mit wenigstens einer polymerisierbaren C=C-Bindung, mit einem mittleren Molekulargewicht M_{w} im Bereich von 250 bis 5000 g/mol.

Das Copolymer kann ein zwei oder mehr verschiedene Monomere m1 enthalten, bevorzugt aber nur ein oder zwei verschiedene Monomere und besonders bevorzugt ein Monomer.

Wenn in einer bevorzugten Ausführungsform das Monomer m1 aus zwei Olefinen (Olefin 1 und Olefin 2) besteht, so ist Olefin 1 ausgewählt aus der Gruppe bestehend aus C₄-C₄₀- α -Olefinen, bevorzugt C₆-C₃₆- α -Olefinen, besonders bevorzugt C₈-C₃₂- α-Olefinen, ganz besonders bevorzugt C₁₀-C₂₈- α -Olefinen, insbesondere C₁₂-C₂₆- α-Olefinen und speziell C16-C24- α -Olefinen, und vor allem C₁₈-C₂₂- α -Olefinen, wie z.B. C₂₀ α -Olefin.

Gleichzeitig handelt es sich bei Olefin 2 um ein 1-Buten, 2-Buten und/oder iso-Buten, bevorzugt iso-Buten in einpolymerisierter Form enthaltendes Oligomer oder Polymer, bevorzugt um Trimere, Tetramere, Pentamere, Hexamere oder Polymere mit einem mittleren Molekulargewicht M_{w} im Bereich von 250 bis 5000 g/mol, bevorzugt 350 bis 3000, besonders bevorzugt 500 bis 1500 g/mol von iso-Buten.

Bevorzugt weisen die iso-Buten in einpolymerisierter Form enthaltenden Oligomere oder Polymere einen hohen Gehalt an terminal angeordneten ethylenischen Doppelbindungen (α -Doppelbindungen) auf, beispielsweise wenigstens 50 Mol-%, bevorzugt wenigstens 60 Mol-%, besonders bevorzugt wenigstens 70 Mol-% und ganz besonders bevorzugt wenigstens 80 Mol-%.

Für die Herstellung solcher iso-Buten in einpolymerisierter Form enthaltender Oligomere oder Polymere eignen sich als Isobuten-Quelle sowohl Rein-Isobuten als auch Isobuten-haltige C4-Kohlenwasserstoffströme, beispielsweise C4-Raffinate, insbesondere "Raffinat 1", C4-Schnitte aus der Isobutan-Dehydrierung, C4-Schnitte aus Steamcrackern und aus FCC-Crackern (fluid catalysed cracking), sofern sie weitgehend von darin enthaltenem 1,3-Butadien befreit sind. Ein C4-Kohlenwasserstoffstrom aus einer FCC-Raffinerieeinheit ist auch als "b/b"-Strom bekannt. Weitere geeignete Isobuten-haltige C4-Kohlenwasserstoffströme sind beispielsweise der Produktstrom einer Propylen-Isobutan-Cooxidation oder der Produktstrom aus einer Metathese-Einheit, welche in der Regel nach üblicher Aufreinigung und/oder Aufkonzentrierung eingesetzt werden. Geeignete C4-Kohlenwasserstoffströme enthalten in der Regel weniger als 500 ppm, vorzugsweise weniger als 200 ppm, Butadien. Die Anwesenheit von 1-Buten sowie von cis- und trans-2-Buten ist weitgehend unkritisch. Typischerweise liegt die Isobutenkonzentration in den genannten C4-Kohlenwasserstoffströmen im Bereich von 40 bis 60 Gew.-%. So besteht Raffinat 1 in der Regel im wesentlichen aus 30 bis 50 Gew.-% Isobuten, 10 bis 50 Gew.-% 1-Buten, 10 bis 40 Gew.-% cis- und trans-2-Buten sowie 2 bis 35 Gew.-% Butanen; beim erfindungsgemäßen Polymerisationsverfahren verhalten sich die unverzweigten Butene im Raffinat 1 in der Regel praktisch inert und nur das Isobuten wird polymerisiert.

In einer bevorzugten Ausführungsform setzt man als Monomerquelle für die Polymerisation einen technischen C₄-Kohlenwasserstoffstrom mit einem Isobuten-Gehalt von 1 bis 100 Gew.-%, insbesondere von 1 bis 99 Gew.-%, vor allem von 1 bis 90 Gew.-%, besonders bevorzugt von 30 bis 60 Gew.-%, insbesondere einen Raffinat 1-Strom, einen b/b-Strom aus einer FCC-Raffinerieeinheit, einen Produktstrom einer Propylen-Isobutan-Cooxidation oder einen Produktstrom aus einer Metathese-Einheit ein.

Insbesondere bei Verwendung eines Raffinat 1-Stromes als Isobutenquelle hat sich die Verwendung von Wasser als alleinigem oder als weiterem Initiator bewährt, vor allem wenn man bei Temperaturen von -20°C bis +30°C, insbesondere von 0°C bis +20°C, polymerisiert. Bei Temperaturen von -20°C bis +30°C, insbesondere von 0°C bis +20°C, kann man bei Verwendung eines Raffinat 1-Stromes als Isobutenquelle jedoch auch auf den Einsatz eines Initiators verzichten.

Das genannte Isobuten-haltige Monomerengemisch kann geringe Mengen an Kontaminanten wie Wasser, Carbonsäuren oder Mineralsäuren enthalten, ohne dass es zu kritischen Ausbeute- oder Selektivitätseinbußen kommt. Es ist zweckdienlich, eine Anreicherung dieser Verunreinigungen zu vermeiden, indem man solche Schadstoffe beispielsweise durch Adsorption an feste Adsorbentien wie Aktivkohle, Molekularsiebe oder Ionenaustauscher, aus dem Isobuten-haltigen Monomerengemisch entfernt.

Es können auch Monomermischungen von Isobuten beziehungsweise des Isobuten-haltigen Kohlenwasserstoffgemischs mit olefinisch ungesättigten Monomeren, welche mit Isobuten copolymerisierbar sind, umgesetzt werden. Sofern Monomermischungen des Isobutens mit geeigneten Comonomeren copolymerisiert werden sollen, enthält die Monomermischung vorzugsweise wenigstens 5 Gew.-%, besonders bevorzugt wenigstens 10 Gew.-% und insbesondere wenigstens 20 Gew.-% Isobuten, und vorzugsweise höchstens 95 Gew.-%, besonders bevorzugt höchstens 90 Gew.-% und insbesondere höchstens 80 Gew.-% Comonomere.

Als copolymerisierbare Monomere kommen in Betracht: Vinylaromaten wie Styrol und α-Methylstyrol, C1- bis C4-Alkylstyrole wie 2-, 3- und 4-Methylstyrol und 4-tert.-Butylstyrol, Halogenstyrole wie 2-, 3- oder 4-Chlorstyrol sowie Isoolefine mit 5 bis 10 Kohlenstoffatomen wie 2-Methylbuten-1, 2-Methylpenten-1, 2-Methylhexen-1, 2-Ethylpenten-1, 2-Ethylhexen-1 und 2-Propylhepten-1. Als Comonomere kommen weiterhin Olefine in Betracht, die eine Silylgruppe aufweisen, wie 1-Trimethoxysilylethen, 1-(Trimethoxysilyl)propen, 1-(Trimethoxysilyl)-2-methylpropen-2, 1-[Tri(methoxyethoxy)silyl]-ethen, 1-[Tri(methoxyethoxy)silyl]propen, und 1-[Tri(meth-oxyethoxy)silyl]-2-methylpropen-2. Weiterhin kommen - abhängig von den Polymerisationsbedingungen - als Comonomere auch Isopren, 1-Buten und cis- und trans-2-Buten in Betracht.

Sollen mit dem erfindungsgemäßen Verfahren Copolymere hergestellt werden, so kann das Verfahren so ausgestaltet werden, dass bevorzugt statistische Polymere oder bevorzugt Blockcoplymere entstehen. Zur Herstellung von Blockcopolymeren kann man beispielsweise die verschiedenen Monomere nacheinander der Polymerisationsreaktion zuführen, wobei die Zugabe des zweiten Comonomers insbesondere erst dann erfolgt, wenn das erste Comonomer zumindest teilweise schon polymerisiert ist. Auf diese Weise sind sowohl Diblock-, Triblock- als auch höhere Blockcopolymere zugänglich, die je nach Reihenfolge der Monomerzugabe einen Block des einen oder anderen Comonomers als terminalen Block aufweisen. Blockcopolymere entstehen in einigen Fällen aber auch dann, wenn alle Comonomere zwar gleichzeitig der Polymerisationsreaktion zugeführt werden, eines davon aber signifikant schneller polymerisiert als das oder die anderen. Dies ist insbesondere dann der Fall, wenn Isobuten und eine vinylaromatische Verbindung, insbesondere Styrol, im erfindungsgemäßen Verfahren copolymerisiert werden. Dabei entstehen vorzugsweise Blockcopolymere mit einem terminalen Polystyrolblock. Dies ist darauf zurückzuführen, dass die vinylaromatische Verbindung, speziell Styrol, signifikant langsamer polymerisiert als Isobuten.

Das molare Verhältnis von Olefin 1 : Olefin 2 (bezogen auf die polymerisierbaren Doppelbindungen) beträgt in der Regel 0,1 : 0,9 bis 0,95 : 0,05, bevorzugt 0,2 : 0,8 bis 0,9 : 0,1, besonders bevorzugt 0,3 : 0,7 bis 0,85 : 0,15, ganz besonders bevorzugt 0,4 : 0,6 bis 0,8 : 0,2 und insbesondere 0,5 : 0,5 bis 0,7 : 0,3.

### Carbonsäure Baustein (m2)

Der erfindungsgemäße Carbonsäure-Baustein kann insbesondere eine ethylenisch ungesättigte Polycarbonsäure, vor allem eine ethylenisch ungesättigte Dicarbonsäure, wie z.B. eine gegebenenfalls substituierte C₄-C₈-Dicarbonsäure oder ein Derivat einer ethylenisch ungesättigten, gegebenenfalls substituierten C₄-C₈-Dicarbonsäure sein. Derivate sind insbesondere Hydrocarbylester (teil oder vollverestert), wie z.B. C₁- C₈ oder C₁-C₆ oder C₁-C₄ Alkylester oder Anhydride.

Nichtlimitierende Beispiele für ethylenisch ungesättigte, gegebenenfalls substituierte C₄-C₈-Dicarbonsäuren sind Maleinsäure, Fumarsäure, Itaconsäure, Mesaconsäure, Citraconsäure, , Pent-2-endisäure, Hex-2-endisäure, Hex-3-endisäure, 5-Methylhex-2-endisäure, 2,3-Dimethylpent-2-endisäure, 2-Methylbut-2-endisäure, 2-Dodecylbut-2-endisäure und 2-Polyisobutylbut-2-endisäure; insbesondere Maleinsäure, oder Derivate ethylenisch ungesättigten C₄-C₈-Dicarbonsäure, beispielsweise des Di- oder vorzugsweise Mono-C₁-C₁₀-Alkylesters und insbesondere Anhydride. Bevorzugt sind Itaconsäureanhydrid, Citraconsäureanhydrid und ganz besonders bevorzugt ist Maleinsäureanhydrid.

Insbesondere sind weiter zu nennen die vollveresterten Niedrigalkylester, d.h. vor allem die die C₁₋₄- oder C₁₋₃-Alkylester, der oben genannten Säuren, insbesondere der Maleinsäure.

Der erfindungsgemäße Carbonsäure-Baustein kann auch eine polymerisierbare, ethylenisch ungesättigte, gegebenenfalls substituierte Monocarbonsäure sein. Geeignete Substituenten sind z.B. Niedrigalkylsubstituenten. Als Beispiele zu nennen sind Acrylsäure und Methacrylsäure, sowie deren Derivate. Derivate sind insbesondere Hydrocarbylester wie z.B. C₁- C₈ oder C₁-C₆ oder C₁-C₄ Alkylester.

Im Anschluss an die Copolymerisation kann das Copolymer, sofern es Carbonsäureester oder -Anhydrid-Reste aufweist, ganz oder teilweise zu Polycarbonsäuren hydrolysiert werden. Gegebenenfalls kann das hydrolysierte Copolymer ganz oder teilweise mit Ammoniak oder organischen Aminen neutralisiert werden.

Das Copolymer kann ein, zwei oder mehr verschiedene Monomere m2 enthalten, insbesondere aber nur ein oder zwei verschiedene Monomere m2.

In einer Ausführungsform der vorliegenden Erfindung liegt das Molverhältnis von (m1) zu (m2) im Bereich von 0,8 : 1 bis 2 : 1.

Die Herstellung von im erfindungsgemäßen Verfahren eingesetzten Copolymeren ist an sich bekannt. Sie kann beispielsweise durch radikalische Copolymerisation der Comonomere (m1) und (m2) bei Temperaturen im Bereich von 50 bis 250°C, bevorzugt im Bereich von 80 bis 200°C erfolgen. Man kann im erfindungsgemäßen Verfahren eingesetzte Copolymere durch Copolymerisation in Substanz oder in Lösung, beispielsweise in einem bei Zimmertemperatur flüssigen Paraffin, herstellen.

Wünscht man zumindest partiell zu neutralisieren, so kann man beispielsweise bei Temperaturen im Bereich von vorzugsweise 20 bis 150°C mit Wasser umsetzen. Der bevorzugte Temperaturbereich für die Hydrolyse beträgt 60 bis 100°C.

Vorzugsweise hydrolysiert man vollständig oder zu größer 95 mol-%.

Beispiele für Copolymere sind gegebenenfalls hydrolysierte Copolymere von
1 mol Maleinsäureanhydrid und 0,9 mol Diisobuten
1 mol Maleinsäureanhydrid und 1 mol Diisobuten
1 mol Maleinsäureanhydrid und 0,8 mol α-C₁₀H₂₀
1 mol Maleinsäureanhydrid und 1 mol α-C₁₀H₂₀
1 mol Maleinsäureanhydrid und 1 mol α-C₁₂H₂₄
1 mol Maleinsäureanhydrid und 1 mol α-C₁₆H₃₂
1 mol Maleinsäureanhydrid und 1 mol α-C₁₈H₃₆
1 mol Itaconsäureanhydrid und 1 mol α-C₁₈H₃₆
1 mol Maleinsäureanhydrid und 1 mol C₂₀₋₂₄-Olefin
1 mol Maleinsäureanhydrid und 0,1 mol α-C₁₀H₂₀ und 0,9 mol α-C₃₀H₆₀
1 mol Maleinsäureanhydrid und 0,3 mol α-C₁₂H₂₄ und 0,7 mol C₂₀₋₂₄-Olefin
1 mol Maleinsäureanhydrid und 0,7 mol α-C₁₂H₂₄ und 0,3 mol Polyisobuten mit Molekulargewicht M_{w} ca. 500 g/mol,
1 mol Maleinsäureanhydrid und 0,3 mol α-C₁₂H₂₄ und 0,7 mol C₂₀₋₂₄-Olefin
1 mol Maleinsäureanhydrid und 0,5 mol α-C₁₆H₃₂ und 0,5 mol C₂₀₋₂₄-Olefin
1 mol Maleinsäureanhydrid und 0,7 mol α-C₁₈H₃₆ und 0,3 mol C₂₀₋₂₄-Olefin
1 mol Maleinsäureanhydrid und 0,9 mol C₂₀₋₂₄-Olefin und 0,1 mol Polyisobuten mit Molekulargewicht M_{w} 500 g/mol.

Dabei stehen Angaben in mol jeweils für das Molverhältnis.

Weitere Beispiele sind Terpolymere, wie zum Beispiel
MSA : Olefin 1 : Olefin 2 mit einem Molverhältnis von 1 : 0,1 : 0,9 bis 1 : 0,95 : 0,05,
bevorzugt mit einem Molverhältnis von 1 : 0,2 : 0,8 bis 1 : 0,9 : 0,1,
besonders bevorzugt mit einem Molverhältnis von 1 : 0,3 : 0,7 bis 1 : 0,85 : 0,15 und
ganz besonders bevorzugt mit einem Molverhältnis von 1 : 0,4 : 0,6 bis 1 : 0,8 : 0,2.

Besonders bevorzugte Ausführungsform stellen die folgenden Terpolymere dar:
MSA : Olefin 1 : Olefin 2 mit einem Molverhältnis von 1 : 0,3 : 0,7.
MSA : Olefin 1 : Olefin 2 mit einem Molverhältnis von 1 : 0,5 : 0,5.
MSA : Olefin 1 : Olefin 2 mit einem Molverhältnis von 1 : 0,1 : 0,9.

Zur Durchführung des erfindungsgemäßen Verfahrens setzt man weiterhin mindestens ein bei Zimmertemperatur flüssiges Paraffin ein, auch Paraffinöl genannt. Zu bei Zimmertemperatur flüssigen Paraffinen zählen jeweils bei Zimmertemperatur flüssige Rohparaffinöle, Gatschraffinate, entölte Rohparaffine, halb- oder vollraffinierte Paraffinöle und gebleichte Paraffinöle. Unter Paraffinen werden im Zusammenhang mit der vorliegenden Erfindung gesättigte Kohlenwasserstoffe verstanden, verzweigt oder unverzweigt, cyclisch oder vorzugsweise acyclisch, einzeln oder vorzugsweise als Gemisch von mehreren gesättigten Kohlenwasserstoffen. Paraffine im Zusammenhang mit der vorliegenden Erfindung sind vorzugsweise zusammengesetzt aus gesättigten Kohlenwasserstoffen mit 6 bis 30 C-Atomen.

Weitere geeignete Lösungsmittel sind aromatische Lösungsmittel wie Toluol, Xylol oder Lösungsmittel der Solvesso-Serie.

In einer Ausführungsform der vorliegenden Erfindung hat bei Zimmertemperatur flüssiges Paraffin einen breiten Siedebereich von 150 bis 230°C bestimmt bei Normaldruck.

In einer weiteren Ausführungsform können die nicht hydrolysierten Copolymere auch mit primären Aminen oder sekundären Aminen oder Alkoholen zu Amiden bzw. Estern umgesetzt werden. Die so erhaltenen Produkte können ebenfalls im Sinne dieser Erfindung eingesetzt werden.

### A4) Quatemisierbare Stickstoffverbindungen

### A4.1) Tertiäre Amine der Formel (3)

Tertiäre Amine der Formel (3) sind an sich bekannte Verbindungen, wie z.B. beschrieben in der EP-A-2 033 945.

Das tertiäre Amin-Edukt 3 trägt vorzugsweise ein Segment der Formel NRₐ R_{b} wobei einer der Reste eine Alkylgruppe mit 8 bis 40 Kohlenstoffatomen und der andere eine Alkylgruppe mit bis zu 40, besonders bevorzugt 8 bis 40 Kohlenstoffatomen aufweist. Der Rest R_{c} ist dabei insbesondere ein kurzkettiger C₁-C₆-Alkylrest, wie eine Methyl-, Ethyl- oder Propyl-Gruppe. Rₐ und R_{b} können geradkettig oder verzweigt sein, und / oder können gleich oder verschieden sein. Beispielsweise können Rₐ und R_{b} eine geradkettige C₁₂-C₂₄-Alkylgruppe sein. Alternativ kann nur einer der beiden Reste langkettig (z.B. mit mit 8 bis 40 Kohlenstoffatomen) sein und der andere eine Methyl-, Ethyl- oder Propyl-Gruppe darstellen.

Zweckmäßig ist das Segment NRₐR_{b} von einem sekundären Amin abgeleitet, wie Dioctadecylamin, Di-Kokosamin, di-hydriertes Talgamin und Methylbehenylamin. Amingemische, wie sie aus natürlichen Materialien erhältlich sind, eignen sich ebenfalls. Beispielsweise ist zu nennen ein sekundäres hydriertes Talg-Amin, wobei die Alkylgruppen von hydriertem Talgfett abgeleitet sind, und etwa 4 Gew.-% C₁₄, 31 Gew.-% C₁₆ und 59 Gew.-% C₁₈-Alkylgruppen aufweisen. Entsprechende tertiäre Amine der Formel 3 werden beispielsweise von der Firma Akzo Nobel unter der Bezeichnung Armeen® M2HT oder Armeen® M2C vertrieben.

Das tertiäre Amin-Edukt 3 kann aber auch so ausgebildet sein, dass die Reste Rₐ, R_{b} und R_{c} gleich oder verschiedene langkettige Alkylreste insbesondere geradkettige oder verzweigte Alkylgruppen mit 8 bis 40 Kohlenstoffatomen aufweisen.

Weitere nichtlimitierende Beispiele für geeignete Amine sind:
N,N-Dimethyl-N-(2-ethylhexyl)amin, N,N-Dimethyl-N-(2-propylheptyl)amin, Dodecyldimethylamin, Hexadecyldimethylamin, Oleyldimethylamin, Cocoyldimethylamin, Dicocoylmethylamin, Talgfettdimethylamin, Ditalgfettmethylamin, Tridodecylamin, Trihexadecylamin, Trioctadecylamin, Sojadimethylamin, Tris(2-ethylhexyl)amin, sowie Alamine 336 (Tri-n-octylamin).

### A4.2) Quatemisierbare, Polyether-substituierte Amin, enthaltend wenigstens eine quatemisierbare, insbesondere tertiäre, Aminogruppe;

Derartige Verbindungen sind z.B. beschrieben in der WO2013/064689 der Anmelderin, worauf hiermit ausdrücklich Bezug genommen wird.

Derartige substituierte Amine besitzen insbesondere wenigstens einen, insbesondere einen Polyether-Substituenten mit Monomereinheiten der allgemeinen Formel Ic

-[-CH(R₃)-CH(R₄)-O-]- (Ic)

worin
R₃ und R₄ gleich oder verschieden sind und für H, Alkyl, Alkylaryl oder Aryl stehen.

Das Polyether-substituierte Amin kann dabei ein zahlenmittleres Molekulargewicht im Bereich von 500 bis 5000, insbesondere 800 bis 3000 oder 900 bis 1500 aufweisen.

Die quaternisierbaren, Polyether-substituierten Amine sind insbesondere Stickstoffverbindung der allgemeinen Formel Ia-1 oder Ib-2 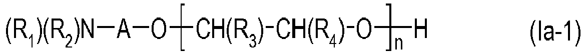 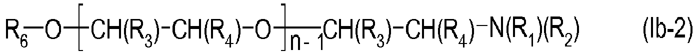 worin
R₁ und R₂ gleich oder verschieden sind und für Alkyl, Alkenyl, Hydroxyalkyl, Hydroxyalkenyl, Aminoalkyl oder Aminoalkenyl stehen, oder R₁ und R₂ zusammen für Alkylen, Oxyalkylen oder Aminoalkylen stehen;
R₃ und R₄ gleich oder verschieden sind und für H, Alkyl, Alkylaryl oder Aryl stehen;
R₆ für Alkyl, Alkenyl, ggf ein oder mehrfach ungesättigtes Cycloalkyl, Aryl, jeweils gegebenenfalls substituiert, wie z.B. mit wenigstens einem Hydroxylrest oder Alkylrest, oder unterbrochen durch wenigstens ein Heteroatom, steht;
A für einen geradkettigen oder verzweigten Alkylenrest steht, der gegebenenfalls durch ein oder mehrere Heteroatome, wie N, O und S, unterbrochen ist; und
n für einen ganzzahligen Wert von 1 bis 50 steht;

Insbesondere sind solche Stickstoffverbindungen der Formeln Ia-1 und Ib-2 zu nennen, worin
R₁ und R₂ gleich oder verschieden sind und für C₁-C₆-Alkyl, Hydroxy-C₁-C₆-alkyl, Hydroxy-C₁-C₆-alkenyl, oder Amino-C₁-C₆-alkyl stehen, oder R₁ und R₂ zusammen eine C₂-C₆-Alkylen-, C₂-C₆-Oxyalkylen- oder C₂-C₆-Aminoalkylen-Rest bilden;
R₃ und R₄ gleich oder verschieden sind und für H, C₁-C₆-Alkyl oder Phenyl stehen;
R₆ für C₁-C₂₀-Alkyl, wie z.B. C₁₀-C₂₀-, C₁₁-C₂₀- oder C₁₂-C₂₀-Alkyl oder Aryl oder Alkylaryl, wobei Alkyl insbesondere für C₁-C₂₀- bedeutet, steht;
A für einen geradkettigen oder verzweigten C₂-C₆-Alkylenrest steht, der gegebenenfalls durch ein oder mehrere Heteroatome, wie N, O und S, unterbrochen ist; und
n für einen ganzzahligen Wert von 1 bis 30.

Weiterhin besonders zu nennen sind Umsetzungsprodukte von N,N-Dimethylethanolamin und Propylenoxid wie beschrieben in Synthesebeispiel 1 der WO 2013/064689. Diese Umsetzung kann auch unkatalysiert oder mit einem Amin (beispielsweise Imidazol) als Katalysator durchgeführt werden, wie z.B. beschrieben in M. lonescu, Chemistry and Technology of Polyols for Polyurethanes, 2005, ISBN 978-85957-501-7.

Stickstoffverbindungen der allgemeinen Formel Ia-1, sind herstellbar wobei man ein Aminoalkanol der allgemeinen Formel II

(R₁)(R₂)N-A-OH (II)

worin
R₁, R₂ und A die oben angegebenen Bedeutungen besitzen,
mit einem Epoxid der allgemeinen Formel III 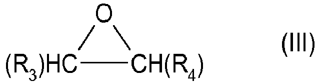 worin
R₃ und R₄ die oben angegebenen Bedeutungen besitzen, alkoxyliert, wobei man ein alkoxyliertes Amin der Formel 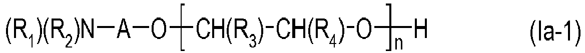 erhält, worin R₁ bis R₄, A und n die oben angegebenen Bedeutungen besitzen.

Stickstoffverbindungen der allgemeinen Formel Ia-2, sind herstellbar wobei man wobei man
einen Alkohol der allgemeinen Formel V

R₆-OH (V)

worin
R₆ die oben angegebenen Bedeutungen besitzt, mit einem Epoxid der allgemeinen Formel III 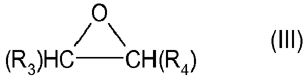 worin
R₃ und R₄ die oben angegebenen Bedeutungen besitzen, alkoxyliert, wobei man einen Polyether der Formel Ib-1 erhält; 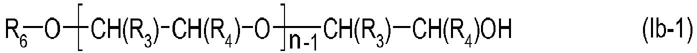 erhält; worin R₃, R₄ und R₆, A und n die oben angegebenen Bedeutungen besitzen und
b) anschließend den so erhaltenen Polyether der Formel Ib-1 mit einem Amin der allgemeinen Formel

   NH(R₁)(R₂) (VII)

   worin R₁ und R₂ die oben angegebenen Bedeutungen besitzen,
   aminiert, wobei man ein Amin der Formel Ib-2 erhält.

Ausgangsverbindungen zur Herstellung Polyether-substituierter, quaternisierbarer Stickstoffverbindungen sind somit:
1) Alkohole
   wie z.B. der allgemeinen Formel V

   Rₑ-OH (V)

   worin R₆ für Alkyl, Alkenyl, ggf ein oder mehrfach ungesättigtes Cycloalkyl, Aryl, jeweils gegebenenfalls substituiert, wie z.B. mit wenigstens einem Hydroxylrest oder Alkylrest, oder unterbrochen durch wenigstens ein Heteroatom, steht;
   und
2) Aminoalkanole
   wie z.B. der allgemeinen Formel II

   (R₁)(R₂)N-A-OH (II)

   worin
   R₁ und R₂ gleich oder verschieden sind und für Alkyl, Alkenyl, Hydroxyalkyl, Hydroxyalkenyl, Aminoalkyl oder Aminoalkenyl stehen, oder R₁ und R₂ zusammen für Alkylen, Oxyalkylen oder Aminoalkylen stehen; und
   A für einen geradkettigen oder verzweigten Alkylen- oder Alkenylenrest steht, der gegebenenfalls durch ein oder mehrere Heteroatome, wie N, O und S, unterbrochen ist;
   Als weitere geeignete Gruppe von quaternisierbaren Aminoalkoholen sind zu nennen Verbindungen, ausgewählt unter Hydroxyalkyl-substituierten Mono- oder Polyaminen mit wenigstens einer quaternisierbaren, primären, sekundären oder tertiären Aminogruppe und wenigstens einer Hydroxylgruppe, welche mit einem Polyetherrest verknüpfbar ist.

Insbesondere ausgewählt sind die quaternisierbaren Stickstoff-Verbindung unter Hydroxyalkyl-substituierten primären, sekundären, und insbesondere tertiären Monoaminen und Hydroxyalkyl-substituierten primären, sekundären und insbesondere tertiären Diaminen.

Beispiele für geeignete " hydroxyalkyl-substituierte Mono- oder Polyamine" sind solche, die mit wenigstens einem, wie z.B. 1, 2, 3, 4, 5 oder 6, Hydroxyalkyl-Substituenen ausgestattet sind.

Ala Beispiele für " Hydroxyalkyl-substituierte Monoamine" können genannt werden: N-Hydroxyalkyl-monoamine, N,N-Dihydroxyalkyl-monoamine und N,N,N-Trihydroxyalkyl-monoamine, wobei die Hydroxyalkylgruppen gleich oder verschieden sind und außerdem wie oben definiert sind. Hydroxyalkyl steht dabei insbesondere für 2-Hydroxyethyl, 3-Hydroxypropyl oder 4-Hydroxybutyl.

Beispielsweise können folgende "Hydroxyalkyl-substituierte Polyamine" und insbesondere "Hydroxyalkyl-substituierte Diamine" genannt werden: (N-Hydroxyalkyl)-alkylendiamine, N,N-Dihydroxyalkyl-alkylendiamine, wobei die Hydroxyalkylgruppen gleich oder verschieden sind und außerdem wie oben definiert sind. Hydroxyalkyl steht dabei insbesondere für 2-Hydroxyethyl, 3-Hydroxypropyl oder 4-Hydroxybutyl; Alkylen steht dabei insbesondere für Ethylen, Propylen oder Butylen.

Folgende quaternisierbare Stickstoffverbindungen seien insbesondere genannt:

| **NAME** | **FORMEL** |
|---|---|
| ***Alkohole mit primärem und sekundärem Amin*** | |
| Ethanolamin | 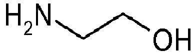 |
| 3-Hydroxy-1-propylamin | 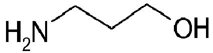 |
| Diethanolamin | 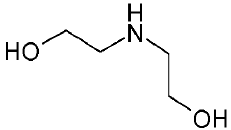 |
| Diisopropanolamin | 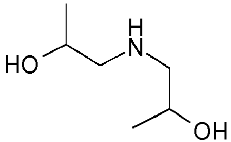 |
| N-(2-Hydroxyethyl)ethylendiamin | 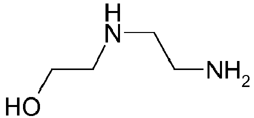 |

| ***Alkohole mit tertiärem Amin*** | |
|---|---|
| Triethanolamin, (2,2^{I},2^{II}-Nitriotriethanol) | 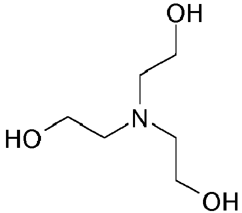 |
| 1-(3-Hydroxypropyl)imidazol | 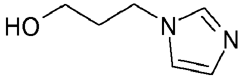 |
| Tris(hydroxymethyl)amin | 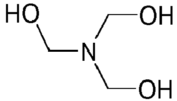 |
| 3-Dimethylamino-1-propanol | 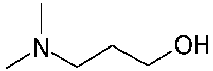 |
| 3-Diethylamino-1-propanol | 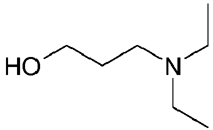 |
| 2-Dimethylamino-1-ethanol | 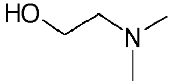 |
| 4-Diethylamino-1-butanol | 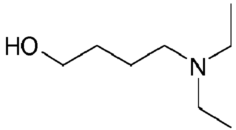 |

Zur Herstellung der Polyethersubstituierten quaternisierbaren Verbindungen (la-1 und Ib-1) kann wie folgt verfahren werden:

### a1) Ausgehend von Aminoalkoholen der Formel II:

Die Aminoalkohole der allgemeinen Formel II können in prinzipiell bekannter Art und Weise alkoxyliert werden, wobei alkoxylierte Amine der allgemeinen Formel Ia-1 erhalten werden.

Die Durchführung von Alkoxylierungen ist dem Fachmann prinzipiell bekannt. Es ist dem Fachmann ebenfalls bekannt, dass man durch die Reaktionsbedingungen, insbesondere die Wahl des Katalysators, die Molekulargewichtsverteilung der Alkoxylate beeinflussen kann.

Zur Alkoxylierung werden C₂- C₁₆-Alkylenoxide eingesetzt, beispielsweise Ethylenoxid, Propylenoxid, oder Butylenoxid. Bevorzugt sind jeweils die 1,2-Alkylenoxide.

Bei der Alkoxylierung kann es sich um eine basenkatalysierte Alkoxylierung handeln. Dazu können die Aminoalkohole (II) in einem Druckreaktor mit Alkalimetallhydroxiden, bevorzugt Kaliumhydroxid oder mit Alkalialkoholaten wie beispielsweise Natriummethylat versetzt werden. Durch verminderten Druck (bspw. <100 mbar) und/oder Erhöhung der Temperatur (30 bis 150°C) kann noch in der Mischung vorhandenes Wasser abgezogen werden. Der Alkohol liegt danach als das entsprechende Alkoholat vor. Anschließend wird mit Inertgas (z.B. Stickstoff) inertisiert und das(die) Alkylenoxid(e) bei Temperaturen von 60 bis 180°C bis zu einem Druck von max. 10 bar schrittweise zugegeben. Am Ende der Reaktion kann der Katalysator durch Zugabe von Säure (z.B. Essigsäure oder Phosphorsäure) neutralisiert und kann bei Bedarf abfiltriert werden. Der basische Katalysator kann aber auch durch Zugabe handelsüblicher Mg-Silikate neutralisiert werden, welche anschließend abfiltriert werden. Optional kann die Alkoxylierung auch in Gegenwart eines Lösungsmittels durchgeführt werden. Dies kann z.B. Toluol, Xylol, Dimethylformamid oder Ethylencarbonat sein.

Die Alkoxylierung der Aminoalkohole kann aber auch mittels anderer Methoden vorgenommen werden, beispielsweise durch säurekatalysierte Alkoxylierung. Weiterhin können beispielsweise Doppelhydroxidtone wie in DE 43 25 237 A1 beschrieben eingesetzt werden, oder es können Doppelmetallcyanid-Katalysatoren (DMC-Katalysatoren) verwendet werden. Geeignete DMC-Katalysatoren sind beispielsweise in der DE 102 43 361 A1, insbesondere den Abschnitten [0029] bis [0041] sowie der darin zitierten Literatur offenbart. Beispielsweise können Katalysatoren vom Zn-Co-Typ eingesetzt werden. Zur Durchführung der Reaktion kann der Aminoalkohol mit dem Katalysator versetzt, die Mischung wie oben beschrieben entwässert und mit den Alkylenoxiden wie beschrieben umgesetzt werden. Es werden üblicherweise nicht mehr als 1000 ppm Katalysator bezüglich der Mischung eingesetzt, und der Katalysator kann aufgrund dieser geringen Menge im Produkt verbleiben. Die Katalysatormenge kann in der Regel geringer sein als 1000 ppm, beispielsweise 250 ppm und weniger.

Die Alkoxylierung kann alternativ auch durch Reaktion der Verbindungen (IV) und (V) mit cyclischen Carbonaten wie beispielsweise Ethylencarbonat vorgenommen werden.

### a2) Ausgehend von Alkanolen der Formel V:

Wie unter dem vorherigen Abschnitt a1) für Aminoalkohole (II) beschrieben können analog auch Alkanole R₆OH in prinzipiell bekannter Weise zu Polyethern (lb-1) alkoxyliert werden. Die so erhaltenen Polyether können anschließend durch reduktive Aminierung mit Ammoniak, primären Aminen oder sekundären Aminen (VII) nach üblichen Methoden in kontinuierlichen oder diskontinuierlichen Verfahren unter Verwendung hierfür üblicher Hydrier- bzw. Aminierungskatalysatoren wie beispielsweise solchen, die katalytisch aktive Bestandteile auf Basis der Elemente Ni, Co, Cu, Fe, Pd, Pt, Ru, Rh, Re, Al, Si, Ti, Zr, Nb, Mg, Zn, Ag, Au, Os, Ir, Cr, Mo,, W oder Kombinationen dieser Elemente untereinander enthalten, in üblichen Mengen zu den entsprechenden Polyetheraminen (lb-2) umgesetzt werden. Die Umsetzung kann ohne Lösungsmittel oder bei hohen Polyetherviskositäten in Gegenwart eines Lösungsmittels, vorzugsweise in Gegenwart verzweigter Aliphaten wie beispielsweise Isododekan durchgeführt werden.

Die Aminkomponente (VII) wird dabei im Allgemeinen im Überschuss, z.B. im 2- bis 100-fachen Überschuss, vorzugsweise 10- bis 80-fachem Überschuss, eingesetzt. Die Reaktion wird bei Drücken von 10 bis 600 bar durchgeführt über einen Zeitraum von 10 Minuten bis 10 Stunden. Nach dem Abkühlen trennt man den Katalysator durch Filtrieren ab, verdampft überschüssige Aminkomponente (VII) und destilliert das Reaktionswasser azeotrop oder unter einem leichten Stickstoffstrom ab.

Sollte das resultierende Polyetheramin (lb-2) primäre oder sekundäre Aminfunktionalitäten aufweisen (R₁ und/oder R₂ gleich H), kann dieses nachfolgend in ein Polyetheramin mit tertiärer Aminfunktion überführt werden (R₁ und R₂ ungleich H). Die Alkylierung kann in prinzipiell bekannter Weise durch Umsetzung mit Alkylierungsmitteln erfolgen. Geeignet sind prinzipiell alle Alkylierungsmittel wie beispielsweise Alkylhalogenide, Alkylarylhalogenide, Dialkylsulfate, Alkylenoxide ggf. in Kombination mit Säure; aliphatische oder aromatische Carbonsäureester, wie insbesondere Dialkylcarboxylate; Alkanoate; cyclische nichtaromatische oder aromatische Carbonsäureester; Dialkylcarbonate; und Mischungen davon. Die Umsetzungen zum tertiären Polyetheramin können auch durch reduktive Aminierung durch Umsetzung mit einer Carbonylverbindung wie beispielsweise Formaldehyd in Gegenwart eines Reduktionsmittels stattfinden. Geeignete Reduktionsmittels sind Ameisensäure oder Wasserstoff in Gegenwart eines geeigneten heterogenen oder homogenen Hydrierkatalysators. Die Reaktionen können ohne Lösungsmittel oder in Gegenwart von Lösungsmitteln durchgeführt werden. Geeignete Lösungsmittel sind beispielsweise H₂O, Alkanole wie Methanol oder Ethanol, oder 2-Ethylhexanol, aromatische Lösungsmitteln wie Toluol, Xylol oder Lösungsmittelgemischen der Solvesso-Serie, oder aliphatische Lösungsmittel, insbesondere Gemische verzweigter aliphatischer Lösungsmittel. Die Reaktionen werden bei Temperaturen von 10°C bis 300°C bei Drücken von 1 bis 600 bar über einen Zeitraum von 10 Minuten bis 10 h durchgeführt. Das Reduktionsmittel wird dabei mindestens stöchiometrisch, vorzugsweise im Überschuss eingesetzt, insbesondere im 2- bis 10-fachen Überschuss.

Das so gebildete Reaktionsprodukt (Polyetheramin Ib-1 oder Ib-2) kann theoretisch weiter aufgereinigt oder das Lösungsmittel entfernt werden. Gewöhnlich ist dies aber nicht zwingend notwendig, so dass das Reaktionsprodukt ohne weitere Aufreinigung in den nächsten Syntheseschritt, der Quaternisierung, überführt werden kann.

### A4.3) Polyalkensubstituierte Amine mit wenigstens einer tertiären, quatemisierbaren Stickstoffgruppe

Weiterhin als quaternisierbare Stickstoffverbindungen geeignet sind polyalkensubstituierte Amine mit wenigstens einer tertiären Stickstoffgruppe. Diese Verbindungsgruppe ist ebenfalls bekannt und z.B. beschrieben in der WO 2008/060888 oder US 2008/0113890 und dem darin genannten weiteren Stand dter Technik, worauf hiermit ausdrücklich Bezug genommen wird.

Derartige Polyalken-substituierten Amine mit mindestens einer tertiären Aminogruppe sind aus einem Olefin-Polymer und einem Amin wie Ammoniak, Monoaminen, Polyaminen oder Gemischen davon, ableitbar. Sie können durch eine Vielzahl von Verfahren hergestellt werden, wie z.B. die folgenden beispielhaft aufgeführten Verfahren:
Ein Verfahren zur Herstellung eines Polyalken-substituierten Amins umfasst die Umsetzung eines halogenierten Olefin-Polymers mit einem Amin, wie in den US-Patenten 3,275,554, 3,438,757, 3,454,555, 3,565,804, 3,755,433 und 3,822,289 beschrieben.

Ein weiteres Verfahren zur Herstellung eines Polyalken-substituierten Amins umfasst die Umsetzung eines hydroformylierten Olefins mit einem Polyamin und Hydrierung des Reaktionsprodukts, wie in US 5,567,845 und 5,496,383 beschrieben

Ein weiteres Verfahren zur Herstellung eines Polyalken-substituierten Amins umfasst die Umwandlung eines Polyalkens mit Hilfe eines herkömmlichen Epoxidierungsreagenz mit oder ohne Katalysator, in das entsprechende Epoxid und die Umsetzung des Epoxids zum Polyalken-substituierten Amin durch Umsetzung mit Ammoniak oder einem Amin unter den Bedingungen der reduktiven Animation, wie in US 5,350,429 beschrieben.

Ein weiteres Verfahren zur Herstellung von Polyalken-substituierten Amins umfasst die Hydrierung eines ß-Aminonitrils, das durch Umsetzung eines Amins mit einem Nitril hergestellt wurde, wie in US 5,492,641, beschrieben.

Ein weiteres Verfahren zur Herstellung eines Polyalken-substituierten Amins umfasst Hydroformylierung eines Polybutens oder Polyisobutylens mit einem Katalysator, wie Rhodium oder Kobalt, in Gegenwart von CO und und Wasserstoff bei erhöhten Drücken und Temperaturen, wie in US 4,832,702 beschrieben.

In einer Ausführungsform der Erfindung sind die zur Herstellung verwendeten Polyalkene von Olefin-Polymeren abgeleitet. Die Olefin-Polymere können Homopolymere und Copolymere von polymerisierbaren Olefinmonomeren mit 2 bis etwa 16 Kohlenstoffatomen, 2 bis etwa 6 Kohlenstoffatomen oder 2 bis etwa 4 Kohlenstoffatomen umfassen.

Interpolymere sind solche, in denen zwei oder mehr Olefinmonomere nach bekannten herkömmlichen Methoden interpolymerisiert werden, wobei Polyalkene anfallen mit Einheiten innerhalb ihrer Struktur, die von jedem der der zwei oder mehr Olefinmonomeren abgeleitetet sind.

Somit umfassen "Interpolymere" Copolymere, Terpolymere und Tetrapolymere.

"Polyalkene", von denen die Polyalken-substituierten Amine abgeleitet sind, werden herkömmlich häufig auch als "Polyolefine" bezeichnet.

Die Olefinmonomeren, von denen die Olefinpolymere abgeleitet sind, sind polymerisierbare Olefinmonomere, die eine oder mehrere ethylenisch ungesättigte Gruppen (d.h. >C=C< ) aufweisen., das heißt, sie sind monoolefinische Monomeren, wie Ethylen, Propylen , 1-Buten, Isobuten (2-methyl-1-buten), 1-Octen oder polyolefinische Monomere (gewöhnlich diolefinische Monomere) wie 1,3-Butadien und Isopren.

Die Olefinmonomere sind gewöhnlich polymerisierbare endständige Olefine, das heißt, Olefine, die in ihrer Struktur die Gruppe > C=CH₂ aufweisen. Es können aber auch polymerisierbare innenständige Olefinmonomere eingesetzt werden, die durch Gruppen der Formel >C-C=C-C< gekennzeichnet sind

Spezifische Beispiele für endständige und innenständige Olefinmonomere, die verwendet werden können, um die Polyalkene nach herkömmlichen Methoden herzustellen, sind: Ethylen, Propylen, die Butene (Butylen), insbesondere 1-Buten, 2-Buten und Isobutylen, 1-Penten, 1-Hexen, 1-Hepten, 1-Octen, 1-Nonen, 1-Decen, 2-Penten, Propylen-Tetramer, Diisobutylen, Isobutylen-Trimer, 1,2-Butadien, 1,3-Butadien , 1,2-Pentadien, 1,3-Pentadien, 1,4-Pentadien, Isopren, 1,5-Hexadien, 2-Methyl-5-propyl-1-hexen, 3-Penten, 4-Octen und 3, 3-Dimethyl-1-penten.

In einer anderen Ausführungsform ist das Olefin-Polymer durch Polymerisation eines C₄-Raffineriestroms mit einem Butengehalt von etwa 35 bis etwa 75 Gewichtsprozent und einem Isobutengehalt von etwa 30 bis etwa 60 Gewichtsprozent in Gegenwart einer Lewis-Säure Katalysators wie Aluminiumtrichlorid oder Bortrifluorid herstellbar. Diese Polybutene enthalten üblicherweise vorwiegend (mehr als etwa 80% der gesamten Wiederholungseinheiten) Isobuten-Wiederholungseinheiten des Typs (-CH₂-C(CH₃)₂-)

In einer weiteren Ausführungsform ist der Polyalken-Substituent des Polyalkensubstituierte Amin von einem Polyisobutylen abgeleitet.

In einer anderen Ausführungsform umfassen die Amine, die verwendet werden können, um das Polyalken-substituierte Amin zu bilden, Ammoniak, Monoaminen, Polyaminen oder Gemischen davon, einschließlich Mischungen von verschiedenen Monoamine, Mischungen verschiedener Polyamine und Mischungen von Monomaminen und Polyaminen (die Diamine). Die Amine umfassenaliphatische, aromatische, heterocyclische und carbocyclische Amine. Monoamine und Polyamine sind durch die Anwesenheit in ihrer Struktur von mindestens einer HN <-Gruppe gekennzeichnet. Die Amine können aliphatisch, cycloaliphatisch, aromatisch oder heterocyclisch sein.
Die Monoamine sind im allgemeinen durch eine Kohlenwasserstoffgruppe mit 1 bis 50 Kohlenstoffatomen substituiert. Diese Kohlenwasserstoffgruppen können insbesondere aliphatisch und frei von acetylenisch ungesättigten Gruppen sein und 1 bis etwa 30 Kohlenstoffatome aufweisen. Insbesondere sind zu nenenn gesättigte aliphatische Kohlenwasserstoffreste mit 1 bis 30 Kohlenstoffatomen.

In einer weiteren Ausführungsform können die Monoamine die Formel HNR₁R₂ aufweisen, wobei R₁ eine Kohlenwasserstoffgruppe mit bis zu 30 Kohlenstoffatomen und R₂ Wasserstoff oder eine Hydrocarbylgruppe von bis zu etwa 30 Kohlenstoffatomen ist.

Beispiele für geeignete Monoamine sind Methylamin, Ethylamin, Diethylamin, 2-Ethylhexylamin, Di-(2-ethylhexyl)-amin, n-Butylamin, Di-n-butylamin, Allylamin, Isobutylamin, Kokosamin, Stearylamin, Laurylamin, Methyllaurylamine und Oleylamin.

Aromatische Monoamine sind jene Monoamine, bei denen ein Kohlenstoffatom der aromatischen Ringstruktur direkt an das Aminstickstoffatom gebunden ist. Der aromatische Ring wird gewöhnlich ein einkerniger aromatischer Ring (d.h. von Benzol abgeleitet) sein, kann aber kondensierte aromatische Ringe aufweisen, und insbesondere solche von Naphthalin abgeleitet sein. Beispiele für aromatische Monoamine sind Anilin, Di (para-methylphenyl) amin, Naphthylamin, N-(n-Butyl) anilin. Beispiele für aliphatisch-substituierte, cycloaliphatisch-substituierte und heterocyclisch-substituierte aromatische Monoamine sind: para-Dodecylanilin, Cyclohexyl-substituiertes Naphthylamin und Thienyl-substituiertes Anilin.

Hydroxyamine sind ebenfalls geeigneter Monoamine. Derartige Verbindungen sind die Hydroxyhydrocarbyl-substituierten Analoga der vorstehend erwähnten Monoamine.

In einer Ausführungsform sind Hydroxy-Monoamine solche der Formel HNR₃R₄, wobei R₃ eine hydroxysubstituierte Alkylgruppe mit bis zu etwa 30 Kohlenstoffatomen darstellt, und in einer Ausführungsform bis zu etwa 10 Kohlenstoffatome aufweist; und R₄ eine hydroxysubstituierte Alkylgruppe mit bis zu etwa 30 Kohlenstoffatomen, Wasserstoff oder eine Hydrocarbylgruppe mit bis zu etwa 10 Kohlenstoffatomen darstellt. Beispiele für Hydroxy-substituierte Monoamine umfassen: Ethanolamin, Di-3-Propanolamin, 4-Hydroxybutylamin, Diethanolamin und N-Methyl-2-hydroxypropylamin.

In einer anderen Ausführungsform kann das Amin der Polyalken-substituierten Amine ein Polyamin sein. Das Polyamin kann aliphatisch, cycloaliphatisch, heterocyclisch oder aromatisch sein. Beispiele für die Polyamine umfassen: Alkylenpolyamine, Hydroxygruppen-enthaltende Polyamine, Arylpolyamine und heterocyclische Polyamine.

Die Alkylenpolyamine umfassen solche der folgenden Formel

HN(R⁵)-(Alkylen-N(R⁵))ₙ-(R⁵)

worin n im Bereich von 1 bis etwa 10 und z.B. im Bereich von 2 bis etwa 7, oder von 2 bis etwa 5 liegt, und die "Alkylen"-Gruppe 1 bis etwa 10 Kohlenstoffatome , wie z.B. 2 bis etwa 6, oder 2 bis etwa 4 Kohlenstoffatome aufweist;
die Reste R⁵ unabhängig voneinander für Wasserstoff, eine aliphatische Gruppe, eine Hydroxyl-oder Amin-substituierte aliphatische Gruppe von jeweils bis zu etwa 30 Kohlenstoffatome stehen. Typischerweise bedeutet R⁵ H oder Niedrigalkyl (eine Alkylgruppe mit 1 bis etwa 5 Kohlenstoffatome), insbesondere H. Solche Alkylenpolyamine umfassen: Methylenpolyamine, Ethylenpolyamine, Butylenpolyamine, Propylenpolyamine, Pentylenpolyamine, Hexylenpolyamine und Heptylenpolyamine. Die höheren Homologen solcher Amine und verwandte Aminoalkyl-substituierte Piperazine sind ebenfalls eingeschlossen.

Spezifische Alkylenpolyamine zur Herstellung der Polyalken-substituierte Amine sind die folgenden: Ethylendiamin, Diethylentriamin, Triethylentetramin, Tetraethylenpentamin, Propylendiamin, 3-Dimethylaminopropylamin, Trimethylendiamin, Hexamethylendiamin, Decamethylendiamin, Octamethylendiamin, Di (Heptamethylen) triamin, Tripropylentetramin, Pentaethylenhexamin, Di (trimethylen-triamin), N-(2-Aminoethyl) piperazin und 1,4-Bis-(2-Aminoethyl) piperazin.

Ethylenpolyamine, wie die vorstehend genannten, sind besonders aus Gründen der Kosten und Effektivität geeignet. Solche Polyamine sind im Detail im Kapitel "Diamine und höhere Amine" in Encyclopedia of Chemical Technology, zweite Ausgabe, Kirk - Othemer, Band 7, Seiten 27-39, Interscience Publishers, Abteilung von John Wiley & Sons, 1965 beschrieben. Solche Verbindungen werden am bequemsten durch die Umsetzung eines Alkylenchlorids mit Ammoniak oder durch Umsetzung eines Ethylenimins mit einem ringöffnenden Reagenz wie Ammoniak, hergestellt. Diese Reaktionen führen zur Herstellung von komplexen Gemischen von Alkylenpolyaminen, einschließlich cyclischer Kondensationsprodukte wie Piperazinen.

Andere geeignete Typen von Polyamingemischen sind die durch Stripping der vorstehend beschriebenen Polyamingemische als Rückstand gebildeten und häufig als "Polyamin-Sumpf" bezeichneten Produkte. Im allgemeinen sind Alkylenpolyamin-Sumpfprodukte solche, die weniger als zwei, gewöhnlich weniger als 1 Gew.% Material enthalten das unter etwa 200 °C siedet. Eine typisches Beispiel für solche Ethylenpolyaminsümpfe sind mit "E-100" bezeichneten Produkte von Dow Chemical Company in Freeport, Texas. Diese Alkylenpolyamin-Sümpfe umfassen cyclische Kondensationsprodukte wie Piperazin und höhere Analoga von Diethylentriamin, Triethylenetetriamine und dergleichen.

Hydroxylgruppen-enthaltende Polyamine umfassen: Hydroxyalkylalkylenpolyamine mit einem oder mehreren Hydroxyalkyl-Substituenten an den Stickstoffatomen. Solche Polyamine können durch Umsetzen der vorstehend beschriebenen Alkylenpolyamine mit einem oder mehreren Alkylenoxiden (z. B. Ethylenoxid, Propylenoxid und Butylenoxid) hergestellt werden. Ähnliche Alkylenoxid-Alkanolamin-Reaktionsprodukte können auch beispielsweise die Produkte der Umsetzung von primären, sekundären oder tertiären Alkanolamine mit Ethylen, Propylen oder höheren Epoxiden in einem MolVerhältnis von 1:1 bis 1:2 sein. Reaktantenverhältnisse und Temperaturen zur Durchführung solcher Umsetzungen sind dem Fachmann bekannt.

In einer anderen Ausführungsform kann das Hydroxyalkyl-substituierte Alkylenpolyamin, eine Verbindung sein in der die Hydroxyalkylgruppe eine Hydroxy-Niedrigalkylgruppe ist, d.h. weniger als acht Kohlenstoffatomen aufweist. Beispiele für solche Hydroxyalkyl-substituierten Polyamine umfassen N-(2-Hydroxyethyl) ethylendiamin (auch bekannt als 2 - (2-Aminoethylamino) ethanol), N, N-Bis (2-hydroxyethyl) ethylendiamin, 1 - (2 - Hydroxyethyl) piperazin, monohydroxypropyl substituiertes Diethylentriamin, Dihydroxypropyl-substituiertes Tetraethylenpentamin und N-(3-Hydroxybutyl) tetramethylendiamin.

Arylpolyamine sind Analoga zu den oben genannten aromatischen Monoamine. Beispiele für Arylpolyamine umfassen: N, N'-Di-n-butyl-para-phenylendiamin und Bis-(para-aminophenyl) methan.
Heterocyclische Mono-und Polyamine können, umfassen: Aziridine, Azetidine, Azolidine, Pyridine, Pyrrole, Indole, Piperidine, Imidazole, Piperazine, Isoindole, Purine, Morpholine, Thiomorpholine, N-Aminoalkylmorpholine, N-aminoalkylthiomorpholines, N-Aminoalkylpiperazine, N, N'-Diamino-Alkylpiperazine, Azepine, Azocine, Azonine, Azecine und Tetra-, Di-und Perhydroderivate von jeder der vorstehenden Verbindungen und Gemische von zwei oder mehreren dieser heterocyclischen Amine. Typische heterocyclische Amine sind gesättigte 5 - und 6-gliedrige heterocyclische Amine, die nur Stickstoff, Sauerstoff und / oder Schwefel im Heterocyclus aufweisen, insbesondere Piperidine, Piperazine, Thiomorpholine, Morpholine, Pyrrolidine und dergleichen. Piperidin, Aminoalkyl-substituierte Piperidine, Piperazin, Aminoalkyl-substituierte Piperazine, Morpholin, Aminoalkyl-substituierte Morpholine, Pyrrolidin und Aminoalkyl-substituierte Pyrrolidine sind besonders bevorzugt. Gewöhnlich sind die Aminoalkylsubstituenten an einem Stickstoffatom gebunden, das Teil des Heterocyclus ist.

Spezielle Beispiele solcher heterocyclischer Amine umfassen N-Aminopropylmorpholin, N-Aminoethylpiperazin und N, N'-Diaminoethylpiperazin. Hydroxy-heterocyclische Polyamine sind auch geeignet, Beispiele umfassen: N-(2-Hydroxyethyl) cyclohexylamin, 3-Hydroxycyclopentylamin, parahydroxy-anilin und N-Hydroxyethylpiperazin.

Beispiele von Polyalken-substituierten Amine sind die folgenden: Poly (propylen) amin, Poly (buten)-amin, N, N-dimethylpolyisobutyleneamine; polybutenemorpholine N-, N-Poly (buten)-ethylendiamin, N-Poly (propylen) trimethylendiamin, N-Poly (buten), Diethylentriamin, N ', N'-Poly (buten) Tetraethylenpentamin und N, N-Dimethyl-N'poly (propylen) -1,3-propylendiamin.

Das zahlenmittlere Molekulargewichts solcher Polyalken-substituierten Amine beträgt etwa 500 bis etwa 5000, wie z.B. 1000 bis etwa 1500 oder etwa 500 bis etwa 3000.

Jedes der oben genannten Polyalken-substituierten Amine, die sekundäre oder primäre Amine sind, können zu tertiären Aminen mit Alkylierungsmitteln alkyliert werden, welche auch als Quaternisierungsmittel bekannt sind, wie Dialkylsulfate, Alkylhalogenide, Hydrocarbyl-substituierte Carbonate; Hydrocarbylepoxiden in Kombination mit einer Säure und Mischungen davon. Wenn bestimmte Quaternisierungsmittel, wie Alkylhalogenide oder Dialkylsulfate verwendet werden, so kann es erforderlich sein, eine Base oder basische Mittel, wie Natriumcarbonat oder Natriumhydroxid, bereitzustellen, um die freie tertiäre Aminform zu ergeben. Primäre Amine erfordern zwei Äquivalenten Alkylierungsmittel und zwei Äquivalente Base, um ein tertiäres Amin zu erhalten. In einer anderen Ausführungsform kann die Alkylierung von primären Aminen häufig in vier aufeinanderfolgenden Schritten durchgeführt werden, zunächst eine Behandlung mit dem Alkylierungsmittel und eine zweite Behandlung mit einer Base und dann Wiederholen der beiden Schritte. In einer anderen Ausführungsform wird die Alkylierung eines primären Amins in einem Schritt erfolgen, beispielsweise unter Verwendung von zwei Mol Alkylhalogenid in Gegenwart eines Überschusses von heterogenen Base, wie Natriumcarbonat. Das Polyamin kann in an sich bekannter Weise erschöpfend oder partiell alkyliert sein.

In einer anderen Ausführungsform kann die Alkylierung primärer Amine und sekundärer Amine zu tertiären Aminen mit Epoxiden erfolgen. Anders als mit den Alkylhalogeniden, ist bei Verwendung eines Epoxids keine Behandlung mit Base erforderlich, um das freie Amin zu erhalten. Typischerweise wird bei Alkylierung von Aminen mit Epoxiden mindestens ein Mol Epoxid für jedes Wasserstoffatom am Amin eingesetzt. Bei der Alkylierung zum tertiären Amin mit einem Epoxid sind weder zusätzliche Säure noch Base erforderlich.

Weiterhin besonders bevorzugt ist Polyisobutendimethylamin erhältlich durch Hydroformylierung von Polyisobuten (Mn 1000) und anschließende reduktive Aminierung mit Dimethylamin, siehe Example B der WO 2008/060888.

### A4.4) Reaktionsprodukte eines hydrocarbylsubstituierten Acylierungsmittels und einer Verbindung enthaltend ein Stickstoff- oder Sauerstoffatom und zusätzlich enthaltend wenigstens eine quaternisierbare Aminogruppe

Derartige Verbindungen sind z.B. beschrieben in der WO2013/000997 der Anmelderin, worauf hiermit ausdrücklich Bezug genommen wird.

Als geeignete Hydrocarbyl-substituierte Polycarbonsäure-Verbindungen, bzw. hydrocarbylsubstituierten Acylierungsmittels sind zu nennen:
Die eingesetzten Polycarbonsäure-Verbindungen sind aliphatische zwei- oder mehrwertige (wie z.B. 3- oder 4-wertig), insbesondere von Di-, Tri- oder Tetracarbonsäuren, sowie Analoga davon, wie Anhydride oder Niedrigalkylester (teilweise oder vollständig verestert), und gegebenenfalls durch einen oder mehrere (wie z.B. 2 oder 3), insbesondere einem langkettigen Alkylrest und/oder einem hochmolekularen Hydrocarbylrest, insbesondere einem Polyalkylenrest substituiert. Beispiele sind C₃ - C₁₀ Polycarbonsäuren, wie die Dicarbonsäuren Malonsäure, Bernsteinsäure, Glutarsäure, Adipinsäure, Pimelinsäure, Suberinsäure, Azelainsäure und Sebacinsäure, und deren verzweigte Analoga; sowie die Tricarbonsäure Citronensäure; sowie Anhydride oder Niedrigalkylester davon. Die Polycarbonsäure-Verbindungen können auch aus den entsprechenden einfach ungesättigten Säuren und Addition wenigstens eines langkettigen Alkylrests und/oder hochmolekularen Hydrocarbylrests erzeugt werden. Beispiele geeigneter einfach ungesättigter Säuren sind Fumarsäure, Maleinsäure, Itaconsäure.

Der hydrophobe "langkettige" oder "hochmolekulare" Hydrocarbylrest, welcher für die ausreichende Löslichkeit des quaternisierten Produkts im Kraftstoff sorgt, hat ein zahlengemitteltes Molekulargewicht (Mₙ) von 85 bis 20.000, wie z.B. 113 bis 10.000, oder 200 bis 10.000 oder 350 bis 5.000, wie z.B. 350 bis 3.000, 500 bis 2.500, 700 bis 2.500, oder 800 bis 1.500. Als typische hydrophobe Hydrocarbylreste sind zu nennen Polypropenyl-, Polybutenyl- und Polyisobutenylreste, z.B. mit einem zahlenmittleren Molekulargewicht Mₙ von 3.500 bis 5.000, 350 bis 3.000, 500 bis 2.500, 700 bis 2.500 und 800 bis 1.500.

Geeignete Hydrocarbyl substituierte Verbindungen sind z.B. beschrieben in der DE 43 19 672 und der WO2008/138836.

Geeignete Hydrocarbyl-substituierte Polycarbonsäure-Verbindungen umfassen auch polymere, insbesondere dimere Formen solcher Hydrocarbyl-substituierten Polycarbonsäure-Verbindungen. Dimere Formen enthalten z.B. zwei Säureanhydridgruppen welche unabhängig voneinander im erfindungsgemäßen Herstellungsverfahren mit der quaternisierbaren Stickstoffverbindung umgesetzt werden können.

Die mit obiger Polycarbonsäure-Verbindung reaktiven, quaternisierbaren Stickstoff-Verbindungen sind ausgewählt unter
a) Hydroxyalkyl-substituierten Mono- oder Polyaminen mit wenigstens einer quarternisierten (z.B. Cholin) oder quaternisierbaren, primären, sekundären oder tertiären Aminogruppe,
b) geradkettigen oder verzweigtem, cyclischen, heterocyclischen, aromatischen oder nichtaromatischen Polyaminen mit wenigstens einer primären oder sekundären (anhydridreaktiven) Aminogruppe und mit wenigstens einer quarternisierten oder quaternisierbaren, primären, sekundären oder tertiären Aminogruppe;
c) Piperazinen.

Insbesondere ausgewählt sind die quaternisierbaren Stickstoff-Verbindungen unter
d) Hydroxyalkyl-substituierten primären, sekundären, tertiären oder quartären Monoaminen und Hydroxyalkyl-substituierten primären, sekundären, tertiären oder quartären Diaminen.
e) geradkettigen oder verzweigten aliphatischen Diaminen mit zwei primären Aminogruppen; Di- oder Polyaminen mit wenigstens einer primären und wenigstens einer sekundären Aminogruppe; Di- oder Polyaminen mit wenigstens einer primären und wenigstens einer tertiären Aminogruppe; Di- oder Polyaminen mit wenigstens einer primären und wenigstens einer quartären Aminogruppe; aromatischen carbo-cyclischen Diaminen mit zwei primären Aminogruppen; aromatischen heterocyclischen Polyaminen mit zwei primären Aminogruppen; aromatischen oder nichtaromatischen Heterozyklen mit einer primären und einer tertiären Aminogruppe;

Beispiele für geeignete " hydroxyalkyl-substituierte Mono- oder Polyamine" sind solche die mit wenigstens einem, wie z.B. 1, 2, 3, 4, 5 oder 6, Hydroxyalkyl-Substituierten ausgestattet sind.

Als Beispiele für "Hydroxyalkyl-substituierte Monoamine" können genannt werden: N-Hydroxyalkyl-monoamine, N,N-Dihydroxyalkyl-monoamine und N,N,N-Trihydroxyalkyl-monoamine, wobei die Hydroxyalkylgruppen gleich oder verschieden sind und außerdem wie oben definiert sind. Hydroxyalkyl steht dabei insbesondere für 2-Hydroxyethyl, 3-Hydroxypropyl oder 4-Hydroxybutyl.

Beispielsweise können folgende "Hydroxyalkyl-substituierte Polyamine" und insbesondere "Hydroxyalkyl-substituierte Diamine" genannt werden: (N-Hydroxyalkyl)-alkylendiamine, N,N-Dihydroxyalkyl-alkylendiamine, wobei die Hydroxyalkylgruppen gleich oder verschieden sind und außerdem wie oben definiert sind. Hydroxyalkyl steht dabei insbesondere für 2-Hydroxyethyl, 3-Hydroxypropyl oder 4-Hydroxybutyl; Alkylen steht dabei insbesondere für Ethylen, Propylen oder Butylen.

Geeignete "Diamine" sind Alkylendiamine, sowie die N-alkylsubstituierten Analoga davon, wie N-monoalkylierten Alkylendiamine und die N,N- oder N, N' -dialkylierten Alkylendiamine. Alkylen steht insbesondere für geradkettiges oder verzweigtes C₁₋₇ oder C₁₋₄₋Alkylen, wie oben definiert. Alkyl steht insbesondere für C₁₋₄-Alkyl gemäß obiger Definition. Beispiele sind insbesondere Ethylendiamin, 1,2-Propylendiamin, 1,3-Propylendiamin, 1,4-Butylendiamin und Isomere davon, Pentandiamin und Isomere davon, Hexandiamin und Isomere davon, Heptandiamin und Isomere davon, sowie ein- oder mehrfach, wie z.B. ein - oder zweifach C₁-C₄-alkylierte, wie z.B. methylierte, Derivate der vorher genannten Diamin-Verbindungen, wie 3-Dimethylamino-1-propylamin (DMAPA), N,N-Diethylaminopropylamin, und N,N-Dimethylaminoethylamin.

Geeignete geradkettige "Polyamine" sind beispielsweise Dialkylentriamin, Trialkylentetramin, Tetraalkylenpentamin, Pentaalkylenhexamin, sowie die N-alkylsubstituierten Analoga davon, wie N-monoalkylierten und die N,N- oder N, N' - dialkylierten Alkylenpolyamine. Alkylen steht insbesondere für geradkettiges oder verzweigtes C₁₋₇ oder C₁₋₄₋Alkylen, wie oben definiert. Alkyl steht insbesondere für C₁₋₄-Alkyl gemäß obiger Definition.

Beispiele sind insbesondere Diethylentriamin, Triethylentetramin, Tetraethylenpentamin, Pentaethylenhexamin, Dipropylentriamin, Tripropylenetetramin, Tetrapropylenpentamin, Pentapropylenhexamin, Dibutylentriamin, Tributylentetramin, Tetrabutylenpentamin, Pentabutylenhexamin; sowie die N,N-Dialkylderivate davon, insbesondere die N,N-Di-C₁₋₄-alkylderivate davon. Als Beispiele können genannt werden: N,N-Dimethyldimethylentriamin, N,N-Diethyldimethylentriamin, N,N-Dipropyldimethylentriamin, N,N-Dimethyldiethylen-1,2-triamin, N,N-Diethyldiethylen-1,2-triamin, N,N-Dipropyldiethylen-1,2-triamin, N,N-Dimethyldipropylen-1,3-triamin (i.e. DMAPAPA), N,N-Diethyldipropylen-1,3-triamin, N,N-Dipropyldipropylen-1,3-triamin, N,N-Dimethyldibutylen-1,4-triamin, N,N-Diethyldibutylen-1,4-triamin, N,N-Dipropyldibutylen-1,4-triamin, N,N-Dimethyldipentylen-1,5-triamin, N,N-Diethyldipentylen-1,5-triamin, N,N-Dipropyldipentylen-1,5-triamin, N,N-Dimethyldihexylen-1,6-triamin, N,N-Diethyldihexylen-1,6-triamin und N,N-Dipropyldihexylen-1,6-triamin,

"Aromatische carbocyclischen Diamine" mit zwei primären Aminogruppen sind die di-aminosubstituierten Derivate von Benzol, Biphenyl, Naphthalin, Tetrahydronaphthalin, Fluoren, Inden und Phenanthren.

"Aromatische oder nicht-aromatische heterocyclische Polyamine" mit zwei primären Aminogruppen sind die mit zwei Aminogruppen substituierten Derivate von folgenden Heterocyclen:
- 5- oder 6-gliedriges gesättigtes oder einfach ungesättigtes Heterocyclen, enthaltend ein bis zwei Stickstoffatome und/oder ein Sauerstoff- oder Schwefelatom oder ein oder zwei Sauerstoff- und/oder Schwefelatome als Ringglieder, z. B. Tetrahydrofuran, Pyrrolidin, Isoxazolidin, Isothiazolidin, Pyrazolidin, Oxazolidin, Thiazolidin, Imidazolidin, Pyrrolin, Piperidin, Piperidinyl, 1,3- Dioxan, Tetrahydropyran, Hexahydropyridazin, Hexahydropyrimidin, Piperazin;
- 5-gliedrige aromatische Heterocyclen, enthaltend neben Kohlenstoffatomen ein, zwei oder drei Stickstoffatome oder ein oder zwei Stickstoffatome und ein Schwefel- oder Sauerstoffatom als Ringglieder, z. B. Furan, Thian, Pyrrol, Pyrazol, Oxazol, Thiazol, Imidazol und 1,3,4-Triazol; Isoxazol, Isothiazol, Thiadiazol, Oxadiazol
- 6-gliedrige Heterocyclen enthaltend neben Kohlenstoffatomen ein oder zwei bzw. ein, zwei oder drei Stickstoffatome als Ringglieder, z. B. Pyridinyl, Pyridazin, Pyrimidin, Pyrazinyl, 1,2,4-Triazin , 1,3,5-Triazin-2-yl;

" Aromatische oder nichtaromatische Heterozyklen mit einer primären und einer tertiären Aminogruppe" sind beispielsweise die oben genannten N-Heterocyclen, welche an wenigstens einem Ring-N-Atom aminoalkyliert sind, und insbesondere eine Amino-C₁₋₄-alkylgruppe tragen.

"Aromatischen oder nichtaromatischen Heterozyklen mit einer tertiären Aminogruppe und einer Hydroxyalkylgruppe" sind beispielsweise die oben genannten N-Heterocyclen, welche an wenigstens einem Ring-N-Atom hydroxyalkyliert sind, und insbesondere eine Hydroxy-C₁₋₄-alkylgruppe tragen.

Folgende Gruppen einzelner Verbindungsklassen quaternisierbarer Stickstoffverbindungen seien insbesondere genannt:

**Gruppe 1:**

| **NAME** | **FORMEL** |
|---|---|
| ***Diamine mit primärem zweiten N-Atom*** | |
| Ethylendiamin | 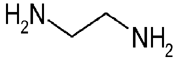 |
| 1,2-Propylendiamin | 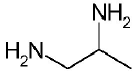 |
| 1,3-Propylendiamin | 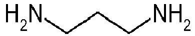 |
| Isomere Butylendiamine, wie z.B. | 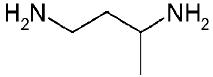 |
| 1,5-Pentylendiamin | 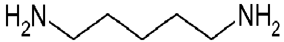 |
| Isomere Pentandiamine, wie z.B. | 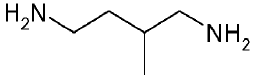 |
| Isomere Hexandiamine, wie z.B. | 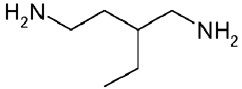 |
| Isomere Heptandiamine, wie z.B. | 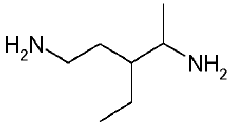 |

| ***Di- und Polyamine mit sekundärem zweiten N-Atom*** | |
|---|---|
| Diethylentriamin (DETA) | 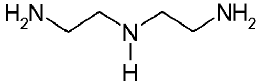 |
| Dipropylentriamin (DPTA), 3,3'-Iminobis(N,N-dimethylpropylamin) | 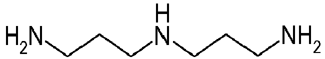 |
| Triethylentetramin (TETA) | 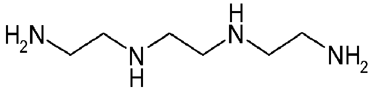 |
| Tetraethylenpentamin (TEPA) | 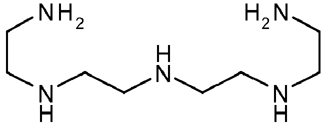 |
| Pentaethylenhexamin | 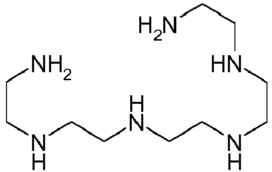 |
| N-Methyl-3-amino-1-propylamin | 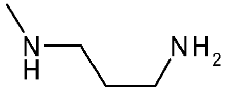 |
| Bishexamethylentriamin | 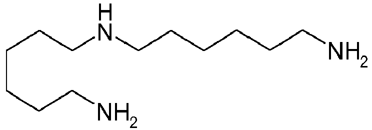 |

| ***Aromaten*** | |
|---|---|
| Diaminobenzole, wie z.B. | 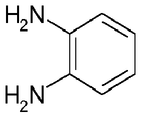 |
| Diaminopyridine, wie z.B. | 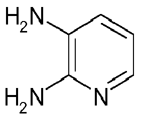 |

**Gruppe 2:**

| **NAME** | **FORMEL** |
|---|---|
| ***Heterozyklen*** | |
| 1-(3-Aminopropyl)imidazol | 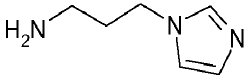 |
| 4-(3-Aminopropyl)-morpholin | 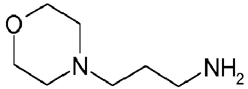 |
| 1-(2-Aminoethylpiperidin) | 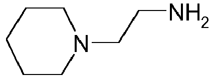 |
| 2-(1-Piperazinyl)ethylamin (AEP) | 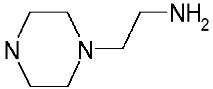 |
| N-Methylpiperazin | 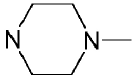 |

| ***Amine mit tertiärem zweiten N-Atom*** | |
|---|---|
| 3,3-Diamino-N-methyldipropylamin | 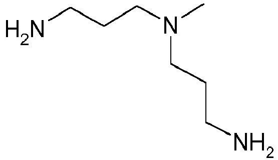 |
| 3-Dimethylamino-1-propylamin (DMAPA) | 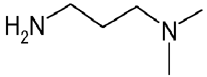 |
| N,N-Diethylaminopropylamin | 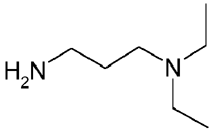 |
| N,N-Dimethylaminoethylamin | 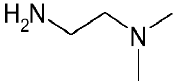 |

**Gruppe 3:**

| **NAME** | **FORMEL** |
|---|---|
| ***Alkohole mit primärem und sekundärem Amin*** | |
| Ethanolamin | 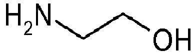 |
| 3-Hydroxy-1-propylamin | 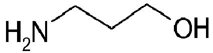 |
| Diethanolamin | 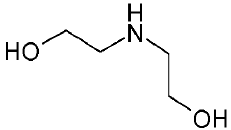 |
| Diisopropanolamin | 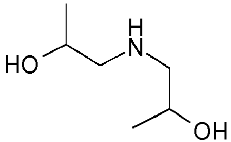 |
| N-(2-Hydroxyethyl)ethylendiamin | 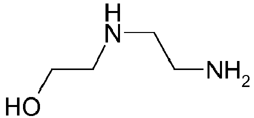 |

| ***Alkohole mit tertiärem Amin*** | |
|---|---|
| Triethanolamin, (2,2^{I},2^{II}-Nitrilotriethanol) | 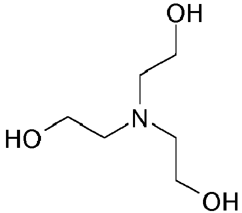 |
| 1-(3-Hydroxypropyl)imidazol | 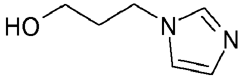 |
| Tris(hydroxymethyl)amin | 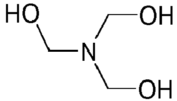 |
| 3-Dimethylamino-1-propanol | 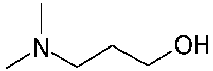 |
| 3-Diethylamino-1-propanol | 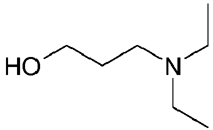 |
| 2-Dimethylamino-1-ethanol | 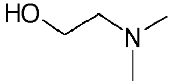 |
| 4-Diethylamino-1-butanol | 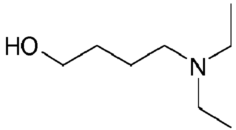 |

Die Umsetzung der Hydrocarbyl-substituierten Polycarbonsäure-Verbindung mit der quaternisierbaren Stickstoffverbindung kann unter thermisch kontrollierten Bedingungen erfolgen, so dass im Wesentlichen keine Kondensationsreaktion erfolgt. Insbesondere ist dann keine Bildung von Reaktionswasser zu beobachten. Insbesondere erfolgt eine derartige Reaktion bei einer Temperatur im Bereich von 10 bis 80, insbesondere 20 bis 60 oder 30 bis 50 °C. Die Reaktionsdauer kann dabei im Bereich von wenigen Minuten oder einigen Stunden, wie z.B. etwa 1 Minute bis zu etwa 10 Stunden liegen.

Der Umsetzung kann dabei bei etwa 0,1 bis 2 atm Druck, insbesondere aber etwa bei Normaldruck erfolgen. Beispielsweise ist eine Inertgas-Atmosphäre, wie z.B. Stickstoff, zweckmäßig

Insbesondere kann die Reaktion auch unter erhöhten, eine Kondensation begünstigenden Temperaturen, z. B. im Bereich von oder 90 bis 100 °C oder 100 bis 170 °C erfolgen. Die Reaktionsdauer kann dabei im Bereich von wenigen Minuten oder einigen Stunden, wie z.B. etwa 1 Minute bis zu etwa 10 Stunden liegen. Der Umsetzung kann dabei bei etwa 0,1 bis 2 atm Druck, insbesondere aber etwa bei Normaldruck erfolgen.

Die Reaktanden werden insbesondere in etwa äquimolaren Mengen vorgelegt, gegebenenfalls ist ein geringer, z. B. 0,05 bis 0,5-facher, wie z.B. 0,1 bis 0,3 facher, molarer Überschuss der Polycarbonsäureverbindung wünschenswert. Falls erforderlich können die Reaktanden in einem geeigneten inerten organischen aliphatischen oder aromatischen Lösungsmittel oder einem Gemisch davon, vorgelegt werden. Typischen Beispiele sind z.B. Lösungsmittel der Solvesso Serie, Toluol oder Xylol. Das Lösungsmittel kann beispielsweise auch dazu dienen, Kondensationswasser azeotrop aus dem Reaktionsgemisch zu entfernen. Insbesondere werden die Reaktionen aber ohne Lösungsmittel durchgeführt.

Das so gebildete Reaktionsprodukt kann theoretisch weiter aufgereinigt oder das Lösungsmittel entfernt werden. Gewöhnlich ist dies aber nicht zwingend notwendig, so dass das Reaktionsprodukt ohne weitere Aufreinigung in den nächsten Syntheseschritt, der Quaternisierung, überführt werden kann.

Besonders zu nennen ist das Kondensationprodukt von Polyisobutylenbernsteinsäureanhydrid (Glissopal® SA der Fa. BASF hergestellt aus Polyisobuten (Mn 1000) und Maleinsäureanhydrid in bekannter Weise) und N,N-Dimethyl-1,3-diaminopropan (CAS 109-55-7), siehe Herstellungsbeispiel 1 der WO 2013/000997.

### A5) Epoxide der Formel (4):

Erfindungsgemäß erfolgt die Quaternisierung des mindestens einen quaternisierbaren tertiären Stickstoffatoms mit mindestens einem Quaternisierungsmittel ausgewählt aus Epoxiden, insbesondere Hydrocarbyl-Epoxiden. 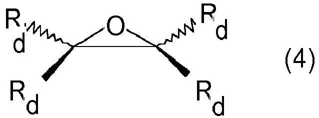 wobei die darin enthaltenen R_{d} Reste gleich oder verschieden sind und für H oder für einen Hydrocarbylrest stehen, wobei der Hydrocarbylrest wenigstens 1 bis 10 Kohlenstoffatome aufweist. Insbesondere sind dies aliphatische oder aromatische Reste, wie z.B. lineare oder verzweigte C_{1- 10}-Alkylreste oder aromatische Reste, wie Phenyl oder C₁₋₄-Alkylphenyl.

Als Hydrocarbyl-Epoxide eignen sich beispielsweise aliphatische und aromatische Alkylenoxide, wie insbesondere C₂₋₁₂-Alkylenoxide, wie Ethylenoxid, Propylenoxid, 1,2-Butylenoxid, 2,3-Butylenoxid, 2-Methyl-1,2-propenoxid (Isobutenoxid), 1,2-Pentenoxid, 2,3-Pentenoxid, 2-Methyl-1,2-butenoxid, 3-Methyl-1,2-butenoxid, 1,2-Hexenoxid, 2,3-Hexenoxid, 3,4-Hexenoxid, 2-Methyl-1,2-pentenoxid, 2-Ethyl-1,2-butenoxid, 3-Methyl-1,2-pentenoxid, 1,2-Decenoxid, 1,2-Dodecenoxid oder 4-Methyl-1,2-pentenoxid; sowie aromatensubstituierte Ethylenoxide, wie gegebenenfalls substituiertes Styroloxid, insbesondere Styroloxid oder 4-Methyl-styroloxid.

### A6) Herstellung erfindungsgemäßer Additive:

### a) Quaternisierung

Die Quaternisierung wird in an sich bekannter Weise durchgeführt

Zur Durchführung der Quaternisierung versetzt man das tertiäre Amin mit wenigstens einer Verbindung obiger Formel 2, insbesondere in den erforderlichen stöchiometrischen Mengen, um die gewünschte Quaternisierung zu erreichen. Pro Äquivalent an quaternisierbarem tertiären Stickstoffatom kann man z.B. 0,1 bis 5,0, oder 0,2 bis 3,0, oder 0,5 bis 2,5 Äquivalente, an Quaternisierungsmittel einsetzen. Insbesondere werden aber etwa 1 bis 2 Äquivalente Quaternisierungsmittel in Relation zum tertiären Amin eingesetzt, um die tertiäre Amingruppe vollständig zu quaternisieren.

Man arbeitet hierbei typischerweise bei Temperaturen im Bereich von 50 bis 180°C, wie z.B. 90 bis 160 °C oder 100 bis 140 °C. Die Reaktionsdauer kann dabei im Bereich von wenigen Minuten oder einigen Stunden, wie z.B. etwa 10 Minuten bis zu etwa 24 Stunden liegen. Der Umsetzung kann dabei bei etwa 0,1 bis 20 bar, wie z.B. 1 bis 10 oder 1,5 bis 3 bar Druck, insbesondere aber etwa bei Normaldruck erfolgen.

Falls erforderlich können die Reaktanden in einem geeigneten inerten organischen aliphatischen oder aromatischen Lösungsmittel oder einem Gemisch davon, für die Quaternisierung vorgelegt werden. Typischen Beispiele sind z.B. Lösungsmittel der Solvesso Serie, Toluol oder Xylol oder Ethylhexanol. Die Quaternisierung kann aber auch in Abwesenheit eines Lösungsmittels durchgeführt werden

Zur Durchführung der Quaternisierung kann die Zugabe katalytisch wirksamer Mengen einer Säure zweckmäßig sein. Bevorzugt sind dabei aliphatische Monocarbonsäuren, wie z.B. C₁-C₁₈-Monocarbonsäuren wie insbesondere Laurinsäure, Isononansäure oder 3,5,5--Trimethylhexansäure oder Neodecansäure, aber auch aliphatische Dicarbonsäuren oder höherwertige aliphatische Carbonsäuren mit einer C-Atomzahl im oben angegebenen Bereich. Die Quaternisierung kann auch in Anwesenheit einer Lewis-Säure durchgeführt werden. Die Quaternisierung kann aber auch in Abwesenheit jeglicher Säure durchgeführt werden.

### b) Umesterung

Geeignete Bedingungen sind allgemein bekannt und z.B. beschrieben in Standardlehrbüchern der organischen Chemie, wie z.B. Vollhardt, Organische Chemie, Wiley Verlag, Morrison Boyd, Lehrbuch der organischen Chemie VCh, Otera, Esterification, Wiley Verlag..

### c) Amidierung

Geeignete Bedingungen sind allgemein bekannt und z.B. beschrieben in Standardlehrbüchern der organischen Chemie, wie z.B. Vollhardt, Organische Chemie, Wiley Verlag, Morrison Boyd, Lehrbuch der organischen Chemie, VCh.

### d) Aufarbeitung des Reaktionsgemisches

Das so gebildete Reaktionsendprodukt kann theoretisch weiter aufgereinigt oder das Lösungsmittel kann entfernt werden. Gegebenenfalls kann überschüssiges Reagenz, wie beispielsweise überschüssiges Epoxid, Amin und/oder Alkohol entfernt werden. Dies kann beispielsweise durch Einleiten von Stickstoff bei Normaldruck oder unter vermindertem Druck geschehen. Um die weitere Prozessierbarkeit der Produkte zu verbessern kann aber auch nach der Reaktion Lösungsmittel zugesetzt werden, wie z.B. Lösungsmittel der Solvesso Reihe, 2-Ethylhexanol, oder im Wesentlichen aliphatische Lösungsmittel. Gewöhnlich ist dies aber nicht zwingend notwendig, so dass das Reaktionsprodukt ohne weitere Aufreinigung als Additiv, gegebenenfalls nach Abmischung mit weiteren Additivkomponenten (s. unten) einsetzbar ist.

### B1) Additivkombinationen

In einer bevorzugten Ausführungsform können die erfindungsgemäßen Verbindungen kombiniert werden mit quaternisierten Verbindungen, wie beschrieben in WO 2012/004300, dort bevorzugt Seite 5, Zeile 18 bis Seite 33, Zeile 5, besonders bevorzugt des Herstellungsbeispiels 1, was hiermit jeweils durch Bezugnahme ausdrücklich Bestandteil der vorliegenden Offenbarung sei.

In einer weiteren bevorzugten Ausführungsform können die erfindungsgemäßen Verbindungen kombiniert werden mit quaternisierten Verbindungen, wie beschrieben in der unveröffentlichten Internationalen Anmeldung mit dem Aktenzeichen PCT/EP2014/061834 und dem Einreichedatum 6. Juni 2014, dort bevorzugt Seite 5, Zeile 21 bis Seite 47, Zeile 34, besonders bevorzugt der Herstellungsbeispiele 1 bis 17.

In einer weiteren bevorzugten Ausführungsform können die erfindungsgemäßen Verbindungen kombiniert werden mit quaternisierten Verbindungen, wie beschrieben in WO 11/95819 A1, dort bevorzugt Seite 4, Zeile 5 bis Seite 13, Zeile 26, besonders bevorzugt Herstellungsbeispiel 2.

In einer weiteren bevorzugten Ausführungsform können die erfindungsgemäßen Verbindungen kombiniert werden mit quaternisierten Verbindungen, wie beschrieben in WO 11/110860 A1, dort bevorzugt Seite 4, Zeile 7 bis Seite 16, Zeile 26, besonders bevorzugt der Herstellungsbeispiele 8, 9, 11 und 13.

In einer weiteren bevorzugten Ausführungsform können die erfindungsgemäßen Verbindungen kombiniert werden mit quaternisierten Verbindungen, wie beschrieben in WO 06/135881 A2, dort bevorzugt Seite 5, Zeile 14 bis Seite 12, Zeile 14, besonders bevorzugt Beispiele 1 bis 4.

In einer weiteren bevorzugten Ausführungsform können die erfindungsgemäßen Verbindungen kombiniert werden mit quaternisierten Verbindungen, wie beschrieben in WO 10/132259 A1, dort bevorzugt Seite 3, Zeile 29 bis Seite 10, Zeile 21, besonders bevorzugt Beispiel 3.

In einer weiteren bevorzugten Ausführungsform können die erfindungsgemäßen Verbindungen kombiniert werden mit quaternisierten Verbindungen, wie beschrieben in WO 08/060888 A2, dort bevorzugt Seite 6, Zeile 15 bis Seite 14, Zeile 29, besonders bevorzugt Beispiele 1 bis 4.

In einer weiteren bevorzugten Ausführungsform können die erfindungsgemäßen Verbindungen kombiniert werden mit quaternisierten Verbindungen, wie beschrieben in GB 2496514 A, dort bevorzugt Absätze [00012] bis [00039], besonders bevorzugt Beispiele 1 bis 3.

In einer weiteren bevorzugten Ausführungsform können die erfindungsgemäßen Verbindungen kombiniert werden mit quaternisierten Verbindungen, wie beschrieben in WO 2013 070503 A1, dort bevorzugt Absätze [00011] bis [00039], besonders bevorzugt Beispiele 1 bis 5.

Als nichtlimitierendes Beispiel für eine geeignete Gruppe erfindungsgemäßer Verbindungen, die in oben genannten Kombinationen einsetzbar sind, sind insbesondere solche der oben aufgeführten Ausführungsformen 1 und 2 zu nennen.

Zu nennen sind Olefin-polymerisierbare Carbonsäure-Copolymers (d.h. Copolymer aus wenigstens einem Olefin und wenigstens einer polymerisierbaren Carbonsäure), wobei das Copolymer wenigstens eine freie Carbonsäureseitengruppe enthält; wobei die polymerisierbare Carbonsäure eine polymerisierbare Mono- oder Polycarbonsäure, insbesondere Monocarbonsäure oder Dicarbonsäure, wie C₄-C₈-Dicarbonsäuren, wie z.B. Acrylsäure, Methacrylsäure oder Maleinsäure, ist und das Olefin mindestens ein polymerisierbares C₁₈-C₂₆ - α -Olefin, wie insbesondere ein C₁₈-C₂₂-, C₂₀-C₂₄ - oder insbesondere C₂₀-α -Olefin ist.

Weiterhin zu nennen sind Copolymere, Copolymer-haltigen Reaktionsprodukte, oder eine Copolymer-haltigen Teilfraktion davon, wobei das Copolymer erhältlich ist durch
(1) Copolymerisation von
   a) mindestens einem ethylenisch ungesättigten, polymerisierbaren C₄-C₈-Dicarbonsäureanhydrid, insbesondere Maleinsäureanhydrid, mit
   b) mindestens einem polymerisierbaren C₁₈-C₂₆ -α -Olefin, wie insbesondere ein C₁₈-C₂₂-, C₂₀-C₂₄- oder insbesondere C₂₀-α -Olefin;
(2) anschließende Derivatisierung des Copolymers aus Schritt (1) durch teilweise oder vollständige Umsetzung der Anhydridreste des Copolymers aus Schritt (1) mit Wasser unter Bildung eines carboxylgruppenhaltigen Copolymer-Derivats.

### B2) Weitere Additivkomponenten

Der mit dem erfindungsgemäßen quaternisierten Additiv additivierte Kraftstoff ist ein Ottokraftstoff oder insbesondere ein Mitteldestillat-Kraftstoff, vor allem ein Dieselkraftstoff.

Der Kraftstoff kann weitere übliche Additive zur Wirksamkeitsverbesserung und/oder Verschleißunterdrückung enthalten.

Im Falle von Dieselkraftstoffen sind dies in erster Linie übliche Detergenz-Additive, Trägeröle, Kaltfließverbesserer, Schmierfähigkeitsverbesserer (Lubricity Improver), Korrosionsinhibitoren, Demulgatoren, Dehazer, Antischaummittel, Cetanzahlverbesserer, Verbrennungsverbesserer, Antioxidantien oder Stabilisatoren, Antistatika, Metallocene, Metalldeaktivatoren, Farbstoffe und/oder Lösungsmittel.

Im Falle von Ottokraftstoffen sind dies vor allem Schmierfähigkeitsverbesserer (Friction Modifier), Korrosionsinhibitoren, Demulgatoren, Dehazer, Antischaummittel, Verbrennungsverbesserer, Antioxidantien oder Stabilisatoren, Antistatika, Metallocene, Metalldeaktivatoren, Farbstoffe und/oder Lösungsmittel.

Typische Beispiele geeigneter Co-Additive sind im folgenden Abschnitt aufgeführt:

### B1) Detergenz-Additive

Vorzugsweise handelt es sich bei den üblichen Detergenz-Additiven um amphiphile Substanzen, die mindestens einen hydrophoben Kohlenwasserstoffrest mit einem zahlengemittelten Molekulargewicht (Mₙ) von 85 bis 20.000 und mindestens eine polare Gruppierung besitzen, die ausgewählt ist unter:
(Da) Mono- oder Polyaminogruppen mit bis zu 6 Stickstoffatomen, wobei mindestens ein Stickstoffatom basische Eigenschaften hat;
(Db) Nitrogruppen, gegebenenfalls in Kombination mit Hydroxylgruppen;
(Dc) Hydroxylgruppen in Kombination mit Mono- oder Polyaminogruppen, wobei mindestens ein Stickstoffatom basische Eigenschaften hat;
(Dd) Carboxylgruppen oder deren Alkalimetall- oder Erdalkalimetallsalzen;
(De) Sulfonsäuregruppen oder deren Alkalimetall- oder Erdalkalimetallsalzen;
(Df) Polyoxy-C₂- bis C₄-alkylengruppierungen, die durch Hydroxylgruppen, Mono- oder Polyaminogruppen, wobei mindestens ein Stickstoffatom basische Eigenschaften hat, oder durch Carbamatgruppen terminiert sind;
(Dg) Carbonsäureestergruppen;
(Dh) aus Bernsteinsäureanhydrid abgeleiteten Gruppierungen mit Hydroxy- und/oder Amino- und/oder Amido- und/oder Imidogruppen; und/oder
(Di) durch Mannich-Umsetzung von substituierten Phenolen mit Aldehyden und Mono- oder Polyaminen erzeugten Gruppierungen.

Der hydrophobe Kohlenwasserstoffrest in den obigen Detergenz-Additiven, welcher für die ausreichende Löslichkeit im Kraftstoff sorgt, hat ein zahlengemitteltes Molekulargewicht (Mₙ) von 85 bis 20.000, vorzugsweise von 113 bis 10.000, besonders bevorzugt von 300 bis 5.000, stärker bevorzugt von 300 bis 3.000, noch stärker bevorzugt von 500 bis 2.500 und insbesondere von 700 bis 2.500, vor allem von 800 bis 1500. Als typischer hydrophober Kohlenwasserstoffrest, insbesondere in Verbindung mit den polaren Gruppen, kommen insbesondere Polypropenyl-, Polybutenyl- und Polyisobutenylreste mit einem zahlenmittleren Molekulargewicht Mₙ von vorzugsweise jeweils 300 bis 5.000, besonders bevorzugt 300 bis 3.000, stärker bevorzugt 500 bis 2.500 noch stärker bevorzugt 700 bis 2.500 und insbesondere 800 bis 1.500 in Betracht.

Als Beispiele für obige Gruppen von Detergenz-Additiven seien die folgenden genannt:
Mono- oder Polyaminogruppen (Da) enthaltende Additive sind vorzugsweise Polyalkenmono- oder Polyalkenpolyamine auf Basis von Polypropen oder von hochreaktivem (d.h. mit überwiegend endständigen Doppelbindungen) oder konventionellem (d.h. mit überwiegend mittenständigen Doppelbindungen) Polybuten oder Polyisobuten mit Mₙ = 300 bis 5000, besonders bevorzugt 500 bis 2500 und insbesondere 700 bis 2500. Derartige Additive auf Basis von hochreaktivem Polyisobuten, welche aus dem Polyisobuten, das bis zu 20 Gew.-% n-Buten-Einheiten enthalten kann, durch Hydroformylierung und reduktive Aminierung mit Ammoniak, Monoaminen oder Polyaminen wie Dimethylaminopropylamin, Ethylendiamin, Diethylentriamin, Triethylentetramin oder Tetraethylenpentamin hergestellt werden können, sind insbesondere aus der EP-A 244 616 bekannt. Geht man bei der Herstellung der Additive von Polybuten oder Polyisobuten mit überwiegend mittenständigen Doppelbindungen (meist in der β- und γ-Position) aus, bietet sich der Herstellweg durch Chlorierung und anschließende Aminierung oder durch Oxidation der Doppelbindung mit Luft oder Ozon zur Carbonyl- oder Carboxylverbindung und anschließende Aminierung unter reduktiven (hydrierenden) Bedingungen an. Zur Aminierung können hier Amine, wie z. B. Ammoniak, Monoamine oder die oben genannten Polyamine, eingesetzt werden. Entsprechende Additive auf Basis von Polypropen sind insbesondere in der WO-A 94/24231 beschrieben.

Weitere besondere Monoaminogruppen (Da) enthaltende Additive sind die Hydrierungsprodukte der Umsetzungsprodukte aus Polyisobutenen mit einem mittleren Polymerisationsgrad P = 5 bis 100 mit Stickoxiden oder Gemischen aus Stickoxiden und Sauerstoff, wie sie insbesondere in der WO-A 97/03946 beschrieben sind.

Weitere besondere Monoaminogruppen (Da) enthaltende Additive sind die aus Polyisobutenepoxiden durch Umsetzung mit Aminen und nachfolgender Dehydratisierung und Reduktion der Aminoalkohole erhältlichen Verbindungen, wie sie insbesondere in der DE-A 196 20 262 beschrieben sind.

Nitrogruppen (Db), gegebenenfalls in Kombination mit Hydroxylgruppen, enthaltende Additive sind vorzugsweise Umsetzungsprodukte aus Polyisobutenen des mittleren Polymerisationsgrades P = 5 bis 100 oder 10 bis 100 mit Stickoxiden oder Gemischen aus Stickoxiden und Sauerstoff, wie sie insbesondere in der WO-A96/03367 und in der WO-A 96/03479 beschrieben sind. Diese Umsetzungsprodukte stellen in der Regel Mischungen aus reinen Nitropolyisobutenen (z. B. α ,β -Dinitropolyisobuten) und gemischten Hydroxynitropolyisobutenen (z. B. α -Nitro-β -hydroxypolyisobuten) dar.

Hydroxylgruppen in Kombination mit Mono- oder Polyaminogruppen (Dc) enthaltende Additive sind insbesondere Umsetzungsprodukte von Polyisobutenepoxiden, erhältlich aus vorzugsweise überwiegend endständige Doppelbindungen aufweisendem Polyisobuten mit Mₙ = 300 bis 5000 mit Ammoniak, Mono- oder Polyaminen, wie sie insbesondere in der EP-A 476 485 beschrieben sind.

Carboxylgruppen oder deren Alkalimetall- oder Erdalkalimetallsalze (Dd) enthaltende Additive sind vorzugsweise Copolymere von C₂- bis C₄₀-Olefinen mit Maleinsäureanhydrid mit einer Gesamt-Molmasse von 500 bis 20.000, deren Carboxylgruppen ganz oder teilweise zu den Alkalimetall- oder Erdalkalimetallsalzen und ein verbleibender Rest der Carboxylgruppen mit Alkoholen oder Aminen umgesetzt sind. Solche Additive sind insbesondere aus der EP-A 307 815 bekannt. Derartige Additive dienen hauptsächlich zur Verhinderung von Ventilsitzverschleiß und können, wie in der WO-A 87/01126 beschrieben, mit Vorteil in Kombination mit üblichen Kraftstoffdetergenzien wie Poly(iso)-butenaminen oder Polyetheraminen eingesetzt werden.

Sulfonsäuregruppen oder deren Alkalimetall- oder Erdalkalimetallsalze (De) enthaltende Additive sind vorzugsweise Alkalimetall- oder Erdalkalimetallsalze eines Sulfobernsteinsäurealkylesters, wie er insbesondere in der EP-A 639 632 beschrieben ist. Derartige Additive dienen hauptsächlich zur Verhinderung von Ventilsitzverschleiß und können mit Vorteil in Kombination mit üblichen Kraftstoffdetergenzien wie Poly(iso)buten-aminen oder Polyetheraminen eingesetzt werden.

Polyoxy-C₂-C₄-alkylengruppierungen (Df) enthaltende Additive sind vorzugsweise Polyether oder Polyetheramine, welche durch Umsetzung von C₂- bis C₆₀-Alkanolen, C₆- bis C₃₀-Alkandiolen, Mono- oder Di-C₂- bis C₃₀-alkylaminen, C₁- bis C₃₀-Alkylcyclo-hexanolen oder C₁- bis C₃₀-Alkylphenolen mit 1 bis 30 mol Ethylenoxid und/oder Propylenoxid und/oder Butylenoxid pro Hydroxylgruppe oder Aminogruppe und, im Falle der Polyetheramine, durch anschließende reduktive Aminierung mit Ammoniak, Monoaminen oder Polyaminen erhältlich sind. Derartige Produkte werden insbesondere in der EP-A 310 875, EP-A 356 725, EP-A 700 985 und US-A 4 877 416 beschrieben. Im Falle von Polyethern erfüllen solche Produkte auch Trägeröleigenschaften. Typische Beispiele hierfür sind Tridecanol- oder Isotridecanolbutoxylate, Isononylphenolbutoxylate sowie Polyisobutenolbutoxylate und -propoxylate sowie die entsprechenden Umsetzungsprodukte mit Ammoniak.

Carbonsäureestergruppen (Dg) enthaltende Additive sind vorzugsweise Ester aus Mono-, Di- oder Tricarbonsäuren mit langkettigen Alkanolen oder Polyolen, insbesondere solche mit einer Mindestviskosität von 2 mm²/s bei 100 °C, wie sie insbesondere in der DE-A 38 38 918 beschrieben sind. Als Mono-, Di- oder Tricarbonsäuren können aliphatische oder aromatische Säuren eingesetzt werden, als Esteralkohole bzw. -polyole eignen sich vor allem langkettige Vertreter mit beispielsweise 6 bis 24 C-Atomen. Typische Vertreter der Ester sind Adipate, Phthalate, iso-Phthalate, Terephthalate und Trimellitate des iso-Octanols, iso-Nonanols, iso-Decanols und des iso-Tridecanols. Derartige Produkte erfüllen auch Trägeröleigenschaften.

Aus Bernsteinsäureanhydrid abgeleitete Gruppierungen mit Hydroxy- und/oder Amino- und/oder Amido- und/oder insbesondere Imidogruppen (Dh) enthaltende Additive sind vorzugsweise entsprechende Derivate von Alkyl- oder Alkenyl-substituiertem Bernsteinsäureanhydrid und insbesondere die entsprechenden Derivate von Polyisobutenylbernsteinsäureanhydrid, welche durch Umsetzung von konventionellem oder hochreaktivem Polyisobuten mit Mₙ = vorzugsweise 300 bis 5000, besonders bevorzugt 300 bis 3000, stärker bevorzugt 500 bis 2500, noch stärker bevorzugt 700 bis 2500 und insbesondere 800 bis 1500, mit Maleinsäureanhydrid auf thermischem Weg in einer En-Reaktion oder über das chlorierte Polyisobuten erhältlich sind. Bei den Gruppierungen mit Hydroxy- und/oder Amino- und/oder Amido- und/oder Imidogruppen handelt es sich beispielsweise um Carbonsäuregruppen, Säureamide von Monoaminen, Säureamide von Di- oder Polyaminen, die neben der Amidfunktion noch freie Amingruppen aufweisen, Bernsteinsäurederivate mit einer Säure- und einer Amidfunktion, Carbonsäureimide mit Monoaminen, Carbonsäureimide mit Di- oder Polyaminen, die neben der Imidfunktion noch freie Amingruppen aufweisen, oder Diimide, die durch die Umsetzung von Di- oder Polyaminen mit zwei Bernsteinsäurederivaten gebildet werden. Beim Vorliegen von Imidogruppierungen D(h) wird das weitere Detergenz-Additiv im Sinne der vorliegenden Erfindung jedoch nur bis maximal 100 % der Gewichtsmenge an Verbindungen mit Betainstruktur eingesetzt. Derartige Kraftstoffadditive sind allgemein bekannt und beispielsweise in den Dokumenten (1) und (2) beschrieben. Bevorzugt handelt es sich um die Umsetzungsprodukte von Alkyl- oder Alkenyl-substituierten Bernsteinsäuren oder Derivaten davon mit Aminen und besonders bevorzugt um die Umsetzungsprodukte von Polyisobutenyl-substituierten Bernsteinsäuren oder Derivaten davon mit Aminen. Von besonderem Interesse sind hierbei Umsetzungsprodukte mit aliphatischen Polyaminen (Polyalkylenimine) wie insbesondere Ethylendiamin, Diethylentriamin, Triethylentetramin, Tetraethylenpentamin, Pentaethylenhexamin und Hexaethylenheptamin, welche eine Imidstruktur aufweisen.
Durch Mannich-Umsetzung von substituierten Phenolen mit Aldehyden und Mono- oder Polyaminen erzeugte Gruppierungen (Di) enthaltende Additive sind vorzugsweise Umsetzungsprodukte von Polyisobuten-substituierten Phenolen mit Formaldehyd und Mono- oder Polyaminen wie Ethylendiamin, Diethylentriamin, Triethylentetramin, Tetraethylenpentamin oder Dimethylaminopropylamin. Die Polyisobutenyl-substituierten Phenole können aus konventionellem oder hochreaktivem Polyisobuten mit Mₙ = 300 bis 5000 stammen. Derartige "Polyisobuten-Mannichbasen" sind insbesondere in der EP-A 831 141 beschrieben.

Dem Kraftstoff können ein oder mehrere der genannten Detergenz-Additive in solch einer Menge zugegeben werden, dass die Dosierrate an diesen Detergenz-Additiven vozugsweise 25 bis 2500 Gew.-ppm, insbesondere 75 bis 1500 Gew.-ppm, vor allem 150 bis 1000 Gew.-ppm, beträgt.

### B2) Trägeröle

Mitverwendete Trägeröle können mineralischer oder synthetischer Natur sein. Geeignete mineralische Trägeröle sind bei der Erdölverarbeitung anfallende Fraktionen, wie Brightstock oder Grundöle mit Viskositäten wie beispielsweise aus der Klasse SN 500 bis 2000, aber auch aromatische Kohlenwasserstoffe, paraffinische Kohlenwasserstoffe und Alkoxyalkanole. Brauchbar ist ebenfalls eine als "hydrocrack oil" bekannte und bei der Raffination von Mineralöl anfallende Fraktion (Vakuumdestillatschnitt mit einem Siedebereich von etwa 360 bis 500 °C, erhältlich aus unter Hochdruck katalytisch hydriertem und isomerisiertem sowie entparaffiniertem natürlichen Mineralöl). Ebenfalls geeignet sind Mischungen oben genannter mineralischer Trägeröle.

Beispiele für geeignete synthetische Trägeröle sind Polyolefine (Polyalphaolefine oder Polyinternalolefine), (Poly)ester, Poly)alkoxylate, Polyether, aliphatische Polyetheramine, alkylphenolgestartete Polyether, alkylphenolgestartete Polyetheramine und Carbonsäureester langkettiger Alkanole.

Beispiele für geeignete Polyolefine sind Olefinpolymerisate mit Mₙ = 400 bis 1800, vor allem auf Polybuten- oder Polyisobuten-Basis (hydriert oder nicht hydriert).

Beispiele für geeignete Polyether oder Polyetheramine sind vorzugsweise Polyoxy-C₂- bis C₄-alkylengruppierungen enthaltende Verbindungen, welche durch Umsetzung von C₂- bis C₆₀-Alkanolen, C₆- bis C₃₀-Alkandiolen, Mono- oder Di-C₂- bis C₃₀-alkylaminen, C₁- bis C₃₀-Alkyl-cyclohexanolen oder C₁- bis C₃₀-Alkylphenolen mit 1 bis 30 mol Ethylenoxid und/ oder Propylenoxid und/oder Butylenoxid pro Hydroxylgruppe oder Aminogruppe und, im Falle der Polyetheramine, durch anschließende reduktive Aminierung mit Ammoniak, Monoaminen oder Polyaminen erhältlich sind. Derartige Produkte werden insbesondere in der EP-A 310 875, EP-A 356 725, EP-A 700 985 und der US-A 4,877,416 beschrieben. Beispielsweise können als Polyetheramine Poly-C₂- bis C₆-Alkylenoxidamine oder funktionelle Derivate davon verwendet werden. Typische Beispiele hierfür sind Tridecanol- oder Isotridecanolbutoxylate, Isononylphenolbutoxylate sowie Polyisobutenolbutoxylate und -propoxylate sowie die entsprechenden Umsetzungsprodukte mit Ammoniak.

Beispiele für Carbonsäureester langkettiger Alkanole sind insbesondere Ester aus Mono-, Di- oder Tricarbonsäuren mit langkettigen Alkanolen oder Polyolen, wie sie insbesondere in der DE-A 38 38 918 beschrieben sind. Als Mono-, Di- oder Tricarbonsäuren können aliphatische oder aromatische Säuren eingesetzt werden, als Esteralkohole bzw. -polyole eignen sich vor allem langkettige Vertreter mit beispielsweise 6 bis 24 Kohlenstoffatomen. Typische Vertreter der Ester sind Adipate, Phthalate, iso-Phthalate, Terephthalate und Trimellitate des Isooctanols, Isononanols, Isodecanols und des Iso-tridecanols, z. B. Di-(n- oder Isotridecyl)phthalat.

Weitere geeignete Trägerölsysteme sind beispielsweise in der DE-A 38 26 608, DE-A 41 42 241, DE-A 43 09 074, EP-A 452 328 und der EP-A 548 617 beschrieben.

Beispiele für besonders geeignete synthetische Trägeröle sind alkoholgestartete Polyether mit etwa 5 bis 35, vorzugsweise etwa 5 bis 30, besonders bevorzugt 10 bis 30 und insbesondere 15 bis 30 C₃- bis C₆-Alkylenoxideinheiten, z. B. Propylenoxid-, n-Butylenoxid- und Isobutylenoxid-Einheiten oder Gemischen davon, pro Alkoholmolekül. Nichtlimitierende Beispiele für geeignete Starteralkohole sind langkettige Alkanole oder mit langkettigem Alkyl-substituierte Phenole, wobei der langkettige Alkylrest insbesondere für einen geradkettigen oder verzweigten C₆- bis C₁₈-Alkylrest steht. Als besondere Beispiele sind zu nennen Tridecanol und Nonylphenol. Besonders bevorzugte alkoholgestartete Polyether sind die Umsetzungsprodukte (Polyveretherungsprodukte) von einwertigen aliphatischen C₆- bis C₁₈-Alkoholen mit C₃- bis C₆-Alkylenoxiden. Beispiele für einwertige aliphatische C₆-C₁₈-Alkohole sind Hexanol, Heptanol, Octanol, 2-Ethylhexanol, Nonylalkohol, Decanol, 3-Propylheptanol, Undecanol, Dodecanol, Tridecanol, Tetradecanol, Pentadecanol, Hexadecanol, Octadecanol und deren Konstitutions- und Stellungsisomere. Die Alkohole können sowohl in Form der reinen Isomere als auch in Form technischer Gemische eingesetzt werden. Ein besonders bevorzugter Alkohol ist Tridecanol. Beispiele für C₃- bis C₆-Alkylenoxide sind Propylenoxid, wie 1,2-Propylenoxid, Butylenoxid, wie 1,2-Butylenoxid, 2,3-Butylenoxid, Isobutylenoxid oder Tetrahydrofuran, Pentylenoxid und Hexylenoxid. Besonders bevorzugt sind hierunter C₃- bis C₄-Alkylenoxide, d.h. Propylenoxid wie 1,2-Propylenoxid und Butylenoxid wie 1,2-Butylenoxid, 2,3-Butylenoxid und Isobutylenoxid. Speziell verwendet man Butylenoxid.

Weitere geeignete synthetische Trägeröle sind alkoxylierte Alkylphenole, wie sie in der DE-A 10 102 913 beschrieben sind.

Besondere Trägeröle sind synthetische Trägeröle, wobei die zuvor beschriebenen alkoholgestarteten Polyether besonders bevorzugt sind.

Das Trägeröl bzw. das Gemisch verschiedener Trägeröle wird dem Kraftstoff in einer Menge von vorzugsweise 1 bis 1000 Gew.-ppm, besonders bevorzugt von 10 bis 500 Gew.-ppm und insbesondere von 20 bis 100 Gew.-ppm zugesetzt.

### B3) Kaltfließverbesserer

Geeignete Kaltfließverbesserer sind im Prinzip alle organischen Verbindungen, welche in der Lage sind, das Fließverhalten von Mitteldestillat-Kraftstoffen bzw. Dieselkraftstoffen in der Kälte zu verbessern. Zweckmäßigerweise müssen sie eine ausreichende Öllöslichkeit aufweisen. Insbesondere kommen hierfür die üblicherweise bei Mitteldestillaten aus fossilem Ursprung, also bei üblichen mineralischen Dieselkraftstoffen, eingesetzten Kaltfließverbesserer (" middle distillate flow improvers" , " MDFI" ) in Betracht. Jedoch können auch organische Verbindungen verwendet werden, die beim Einsatz in üblichen Dieselkraftstoffen zum Teil oder überwiegend die Eigenschaften eines Wax Anti-Settling Additivs (" WASA" ) aufweisen. Auch können sie zum Teil oder überwiegend als Nukleatoren wirken. Es können aber auch Mischungen aus als MDFI wirksamen und/oder als WASA wirksamen und/oder als Nukleatoren wirksamen organischen Verbindungen eingesetzt werden.

Typischerweise wird der Kaltfließverbesserer ausgewählt aus:
(K1) Copolymeren eines C₂- bis C₄₀-Olefins mit wenigstens einem weiteren ethylenisch ungesättigten Monomer;
(K2) Kammpolymeren;
(K3) Polyoxyalkylenen;
(K4) polaren Stickstoffverbindungen;
(K5) Sulfocarbonsäuren oder Sulfonsäuren oder deren Derivaten; und
(K6) Poly(meth)acrylsäureestern.

Es können sowohl Mischungen verschiedener Vertreter aus einer der jeweiligen Klassen (K1) bis (K6) als auch Mischungen von Vertretern aus verschiedenen Klassen (K1) bis (K6) eingesetzt werden.

Geeignete C₂- bis C₄₀-Olefin-Monomere für die Copolymeren der Klasse (K1) sind beispielsweise solche mit 2 bis 20, insbesondere 2 bis10 Kohlenstoffatomen sowie mit 1 bis 3, vorzugsweise mit 1 oder 2, insbesondere mit einer Kohlenstoff-Kohlenstoff-Doppelbindung. Im zuletzt genannten Fall kann die Kohlenstoff-Kohlenstoff-Doppelbindung sowohl terminal (α -Olefine) als auch intern angeordnet sein kann. Bevorzugt sind jedoch α -Olefine, besonders bevorzugt α -Olefine mit 2 bis 6 Kohlenstoffatomen, beispielsweise Propen, 1-Buten, 1-Penten, 1-Hexen und vor allem Ethylen.

Bei den Copolymeren der Klasse (K1) ist das wenigstens eine weitere ethylenisch ungesättigte Monomer vorzugsweise ausgewählt unter Carbonsäurealkenylestern, (Meth)Acrylsäureestern und weiteren Olefinen.

Werden weitere Olefine mit einpolymerisiert, sind dies vorzugsweise höhermolekulare als das oben genannte C₂- bis C₄₀-Olefin-Basismonomere. Setzt man beispielsweise als Olefin-Basismonomer Ethylen oder Propen ein, eignen sich als weitere Olefine insbesondere C₁₀- bis C₄₀-α -Olefine. Weitere Olefine werden in den meisten Fällen nur dann mit einpolymerisiert, wenn auch Monomere mit Carbonsäureester-Funktionen eingesetzt werden.

Geeignete (Meth)Acrylsäureester sind beispielsweise Ester der (Meth)Acrylsäure mit C₁- bis C₂₀-Alkanolen, insbesondere C₁- bis C₁₀-Alkanolen, vor allem mit Methanol, Ethanol, Propanol, Isopropanol, n-Butanol, sec.-Butanol, Isobutanol, tert.-Butanol, Pentanol, Hexanol, Heptanol, Octanol, 2-Ethylhexanol, Nonanol und Decanol sowie Strukturisomeren hiervon.

Geeignete Carbonsäurealkenylester sind beispielsweise C₂- bis C₁₄-Alkenylester, z.B. die Vinyl- und Propenylester, von Carbonsäuren mit 2 bis 21 Kohlenstoffatomen, deren Kohlenwasserstoffrest linear oder verzweigt sein kann. Bevorzugt sind hierunter die Vinylester. Unter den Carbonsäuren mit verzweigtem Kohlenwasserstoffrest sind solche bevorzugt, deren Verzweigung sich in der α-Position zur Carboxylgruppe befindet, wobei das α-Kohlenstoffatom besonders bevorzugt tertiär ist, d. h. die Carbonsäure eine sogenannte Neocarbonsäure ist. Vorzugsweise ist der Kohlenwasserstoffrest der Carbonsäure jedoch linear.

Beispiele für geeignete Carbonsäurealkenylester sind Vinylacetat, Vinylpropionat, Vinylbutyrat, Vinyl-2-ethylhexanoat, Neopentansäurevinylester, Hexansäurevinylester, Neononansäurevinylester, Neodecansäurevinylester und die entsprechenden Propenyl-ester, wobei die Vinylester bevorzugt sind. Ein besonders bevorzugter Carbonsäurealkenylester ist Vinylacetat; typische hieraus resultierende Copolymere der Gruppe (K1) sind die mit am häufigsten eingesetzten Ethylen-Vinylacetat-Copolymere ("EVA").
Besonders vorteilhaft einsetzbare Ethylen-Vinylacetat-Copolymere und ihre Herstellung sind in der WO 99/29748 beschrieben.

Als Copolymere der Klasse (K1) sind auch solche geeignet, die zwei oder mehrere voneinander verschiedene Carbonsäurealkenylester einpolymerisiert enthalten, wobei diese sich in der Alkenylfunktion und/oder in der Carbonsäuregruppe unterscheiden. Ebenfalls geeignet sind Copolymere, die neben dem/den Carbonsäurealkenylester(n) wenigstens ein Olefin und/oder wenigstens ein (Meth)Acrylsäureester einpolymerisiert enthalten.

Auch Terpolymere aus einem C₂- bis C₄₀-α -Olefin, einem C₁- bis C₂₀-Alkylester einer ethylenisch ungesättigten Monocarbonsäure mit 3 bis 15 Kohlenstoffatomen und einem C₂- bis C₁₄-Alkenylester einer gesättigten Monocarbonsäure mit 2 bis 21 Kohlenstoffatomen sind als Copolymere der Klasse (K1) geeignet. Derartige Terpolymere sind in der WO 2005/054314 beschrieben. Ein typisches derartiges Terpolymer ist aus Ethylen, Acrylsäure-2-ethylhexylester und Vinylacetat aufgebaut.

Das wenigstens eine oder die weiteren ethylenisch ungesättigten Monomeren sind in den Copolymeren der Klasse (K1) in einer Menge von vorzugsweise 1 bis 50 Gew.-%, insbesondere von 10 bis 45 Gew.-% und vor allem von 20 bis 40 Gew.-%, bezogen auf das Gesamtcopolymer, einpolymerisiert. Der gewichtsmäßige Hauptanteil der Monomereinheiten in den Copolymeren der Klasse (K1) stammt somit in der Regel aus den C₂- bis C₄₀-Basis-Olefinen.

Die Copolymere der Klasse (K1) weisen vorzugsweise ein zahlenmittleres Molekulargewicht Mₙ von 1000 bis 20.000, besonders bevorzugt von 1000 bis 10.000 und insbesondere von 1000 bis 8000 auf.

Typische Kammpolymere der Komponente (K2) sind beispielsweise durch die Copolymerisation von Maleinsäureanhydrid oder Fumarsäure mit einem anderen ethylenisch ungesättigten Monomer, beispielsweise mit einem α -Olefin oder einem ungesättigten Ester wie Vinylacetat, und anschließende Veresterung der Anhydrid- bzw. Säurefunktion mit einem Alkohol mit wenigstens 10 Kohlenstoffatomen erhältlich. Weitere geeignete Kammpolymere sind Copolymere von α -Olefinen und veresterten Comonomeren, beispielsweise veresterte Copolymere von Styrol und Maleinsäureanhydrid oder veresterte Copolymere von Styrol und Fumarsäure. Geeignete Kammpolymere können auch Polyfumarate oder Polymaleinate sein. Außerdem sind Homo- und Copolymere von Vinylethern geeignete Kammpolymere. Als Komponente der Klasse (K2) geeignete Kammpolymere sind beispielsweise auch solche, die in der WO 2004/035715 und in " Comb-Like Polymers. Structure and Properties" , N. A. Plate und V. P. Shibaev, J. Poly. Sci. Macromolecular Revs. 8, Seiten 117 bis 253 (1974)" beschrieben sind. Auch Gemische von Kammpolymeren sind geeignet.

Als Komponente der Klasse (K3) geeignete Polyoxyalkylene sind beispielsweise Polyoxyalkylenester, Polyoxyalkylenether, gemischte Polyoxyalkylenesterether und Gemische davon. Bevorzugt enthalten diese Polyoxyalkylenverbindungen wenigstens eine, vorzugsweise wenigstens zwei lineare Alkylgruppen mit jeweils 10 bis 30 Kohlenstoffatomen und eine Polyoxyalkylengruppe mit einem zahlenmittleren Molekulargewicht von bis zu 5000. Derartige Polyoxyalkylenverbindungen sind beispielsweise in der EP-A 061 895 sowie in der US 4 491 455 beschrieben. Besondere Polyoxyalkylenverbindungen basieren auf Polyethylenglykolen und Polypropylenglykolen mit einem zahlenmittleren Molekulargewicht von 100 bis 5000. Weiterhin sind Polyoxyalkylenmono- und -diester von Fettsäuren mit 10 bis 30 Kohlenstoffatomen wie Stearinsäure oder Behensäure geeignet.

Als Komponente der Klasse (K4) geeignete polare Stickstoffverbindungen können sowohl ionischer als auch nicht ionischer Natur sein und besitzen vorzugsweise wenigstens einen, insbesondere wenigstens zwei Substituenten in Form eines tertiären Stickstoffatoms der allgemeinen Formel >NR⁷, worin R⁷ für einen C₈- bis C₄₀-Kohlenwasserstoffrest steht. Die Stickstoffsubstituenten können auch quaternisiert, das heißt in kationischer Form, vorliegen. Beispiele für solche Stickstoffverbindungen sind Ammoniumsalze und/oder Amide, die durch die Umsetzung wenigstens eines mit wenigstens einem Kohlenwasserstoffrest substituierten Amins mit einer Carbonsäure mit 1 bis 4 Carboxylgruppen bzw. mit einem geeignetem Derivat davon erhältlich sind. Vorzugsweise enthalten die Amine wenigstens einen linearen C₈- bis C₄₀-Alkylrest. Zur Herstellung der genannten polaren Stickstoffverbindungen geeignete primäre Amine sind beispielsweise Octylamin, Nonylamin, Decylamin, Undecylamin, Dodecylamin, Tetradecylamin und die höheren linearen Homologen, hierzu geeignete sekundäre Amine sind beispielsweise Dioctadecylamin und Methylbehenylamin. Geeignet sind hierzu auch Amingemische, insbesondere großtechnisch zugängliche Amingemische wie Fettamine oder hydrierte Tallamine, wie sie beispielsweise in Ullmanns Encyclopedia of Industrial Chemistry, 6. Auflage, im Kapitel " Amines, aliphatic" beschrieben werden. Für die Umsetzung geeignete Säuren sind beispielsweise Cyclohexan-1,2-dicarbonsäure, Cyclohexen-1,2-dicarbonsäure, Cyclopentan-1,2-dicarbonsäure, Naphthalindicarbonsäure, Phthalsäure, Isophthalsäure, Terephthalsäure und mit langkettigen Kohlenwasserstoffresten substituierte Bernsteinsäuren.

Insbesondere ist die Komponente der Klasse (K4) ein öllösliches Umsetzungsprodukt aus mindestens eine tertiäre Aminogruppe aufweisenden Poly(C₂- bis C₂₀-Carbon-säuren) mit primären oder sekundären Aminen. Die diesem Umsetzungsprodukt zugrundeliegenden mindestens eine tertiäre Aminogruppe aufweisenden Poly(C₂- bis C₂₀-Carbonsäuren) enthalten vorzugsweise mindestens 3 Carboxylgruppen, insbesondere 3 bis 12, vor allem 3 bis 5 Carboxylgruppen. Die Carbonsäure-Einheiten in den Polycarbonsäuren weisen vorzugsweise 2 bis 10 Kohlenstoffatome auf, insbesondere sind es Essigsäure-Einheiten. Die Carbonsäure-Einheiten sind in geeigneter Weise zu den Polycarbonsäuren verknüpft, meist über ein oder mehrere Kohlenstoff- und/oder Stickstoffatome. Vorzugsweise sind sie an tertiäre Stickstoffatome angebunden, die im Falle mehrerer Stickstoffatome über Kohlenwasserstoffketten verbunden sind.

Vorzugsweise ist die Komponente der Klasse (K4) ein öllösliches Umsetzungsprodukt auf Basis von mindestens eine tertiäre Aminogruppe aufweisenden Poly(C₂- bis C₂₀-Carbonsäuren) der allgemeinen Formel IIa oder IIb 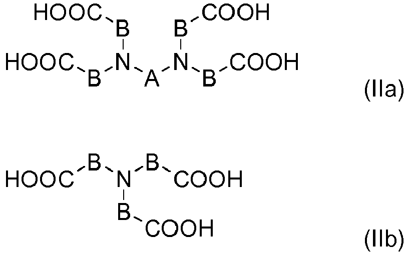 in denen die Variable A eine geradkettige oder verzweigte C₂- bis C₆-Alkylengruppe oder die Gruppierung der Formel III 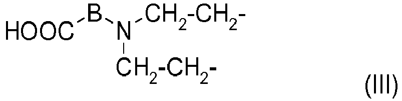 darstellt und die Variable B eine C₁- bis C₁₉-Alkylengruppe bezeichnet. Die Verbindungen der allgemeinen Formel IIa und IIb weisen insbesondere die Eigenschaften eines WASA auf.

Weiterhin ist das bevorzugte öllösliche Umsetzungsprodukt der Komponente (K4), insbesondere das der allgemeinen Formel IIa oder IIb, ein Amid, ein Amidammoniumsalz oder ein Ammoniumsalz, in dem keine, eine oder mehrere Carbonsäuregruppen in Amidgruppen übergeführt sind.

Geradkettige oder verzweigte C₂- bis C₆-Alkylengruppen der Variablen A sind beispielsweise 1,1-Ethylen, 1,2-Propylen, 1,3-Propylen, 1,2-Butylen, 1,3-Butylen, 1,4-Butylen, 2-Methyl-1,3-propylen, 1,5-Pentylen, 2-Methyl-1,4-butylen, 2,2-Dimethyl-1,3-propylen, 1,6-Hexylen (Hexamethylen) und insbesondere 1,2-Ethylen. Vorzugsweise umfasst die Variable A 2 bis 4, insbesondere 2 oder 3 Kohlenstoffatome.

C₁- bis C₁₉-Alkylengruppen der Variablen B sind vor beispielsweise 1,2-Ethylen, 1,3-Propylen, 1,4-Butylen, Hexamethylen, Octamethylen, Decamethylen, Dodecamethylen, Tetradecamethylen, Hexadecamethylen, Octadecamethylen, Nonadecamethylen und insbesondere Methylen. Vorzugsweise umfasst die Variable B 1 bis 10, insbesondere 1 bis 4 Kohlenstoffatome.

Die primären und sekundären Amine als Umsetzungspartner für die Polycarbonsäuren zur Bildung der Komponente (K4) sind üblicherweise Monoamine, insbesondere aliphatische Monoamine. Diese primären und sekundären Amine können aus einer Vielzahl von Aminen ausgewählt sein, die - gegebenenfalls miteinander verbundene - Kohlenwasserstoffreste tragen.

Meist sind diese den öllöslichen Umsetzungsprodukten der Komponente (K4) zugrundeliegenden Amine sekundären Amine und weisen die allgemeine Formel HN(R⁸)₂ auf, in der die beiden Variablen R⁸ unabhängig voneinander jeweils geradkettige oder verzweigte C₁₀- bis C₃₀-Alkylreste, insbesondere C₁₄- bis C₂₄-Alkylreste bedeuten. Diese längerkettigen Alkylreste sind vorzugsweise geradkettig oder nur in geringem Grade verzweigt. In der Regel leiten sich die genannten sekundären Amine hinsichtlich ihrer längerkettigen Alkylreste von natürlich vorkommenden Fettsäuren bzw. von deren Derivaten ab. Vorzugsweise sind die beiden Reste R⁸ gleich.

Die genannten sekundären Amine können mittels Amidstrukturen oder in Form der Ammoniumsalze an die Polycarbonsäuren gebunden sein, auch kann nur ein Teil als Amidstrukturen und ein anderer Teil als Ammoniumsalze vorliegen. Vorzugsweise liegen nur wenige oder keine freien Säuregruppen vor. Vorzugsweise liegen die öllöslichen Umsetzungsprodukte der Komponente (K4) vollständig in Form der Amidstrukturen vor.

Typische Beispiele für derartige Komponenten (K4) sind Umsetzungsprodukte der Nitrilotriessigsäure, der Ethylendiamintetraessigsäure oder der Propylen-1,2-diamintetraessigsäure mit jeweils 0,5 bis 1,5 Mol pro Carboxylgruppe, insbesondere 0,8 bis 1,2 Mol pro Carboxylgruppe, Dioleylamin, Dipalmitinamin, Dikokosfettamin, Distearylamin, Dibehenylamin oder insbesondere Ditalgfettamin. Eine besonders bevorzugte Komponente (K4) ist das Umsetzungsprodukt aus 1 Mol Ethylendiamintetraessigsäure und 4 Mol hydriertem Ditalgfettamin.

Als weitere typische Beispiele für die Komponente (K4) seien die N,N-Dialkylammoniumsalze von 2-N' ,N' -Dialkylamidobenzoaten, beispielsweise das Reaktionsprodukt aus 1 Mol Phthalsäureanhydrid und 2 Mol Ditalgfettamin, wobei letzteres hydriert oder nicht hydriert sein kann, und das Reaktionsprodukt von 1 Mol eines Alkenylspirobislactons mit 2 Mol eines Dialkylamins, beispielsweise Ditalgfettamin und/oder Talgfettamin, wobei die beiden letzteren hydriert oder nicht hydriert sein können, genannt.

Weitere typische Strukturtypen für die Komponente der Klasse (K4) sind cyclische Verbindungen mit tertiären Aminogruppen oder Kondensate langkettiger primärer oder sekundärer Amine mit carbonsäurehaltigen Polymeren, wie sie in der WO 93/18115 beschrieben sind.

Als Kaltfließverbesserer der Komponente der Klasse (K5) geeignete Sulfocarbonsäuren, Sulfonsäuren oder deren Derivate sind beispielsweise die öllöslichen Carbonsäureamide und Carbonsäureester von ortho-Sulfobenzoesäure, in denen die Sulfonsäurefunktion als Sulfonat mit alkylsubstituierten Ammoniumkationen vorliegt, wie sie in der EP-A261 957 beschrieben werden.

Als Kaltfließverbesserer der Komponente der Klasse (K6) geeignete Poly(meth)acrylsäureester sind sowohl Homo- als auch Copolymere von Acryl- und Methacrylsäureestern. Bevorzugt sind Copolymere von wenigstens zwei voneinander verschiedenen (Meth)Acrylsäureestern, die sich bezüglich des einkondensierten Alkohols unterscheiden. Gegebenenfalls enthält das Copolymer noch ein weiteres, davon verschiedenes olefinisch ungesättigtes Monomer einpolymerisiert. Das gewichtsmittlere Molekulargewicht des Polymers beträgt vorzugsweise 50.000 bis 500.000. Ein besonders bevorzugtes Polymer ist ein Copolymer von Methacrylsäure und Methacrylsäureestern von gesättigten C₁₄- und C₁₅-Alkoholen, wobei die Säuregruppen mit hydriertem Tallamin neutralisiert sind. Geeignete Poly(meth)acrylsäureester sind beispielsweise in der WO 00/44857 beschrieben.

Dem Mitteldestillat-Kraftstoff bzw. Dieselkraftstoff wird der Kaltfließverbesserer bzw. das Gemisch verschiedener Kaltfließverbesserer in einer Gesamtmenge von vorzugsweise 10 bis 5000 Gew.-ppm, besonders bevorzugt von 20 bis 2000 Gew.-ppm, stärker bevorzugt von 50 bis 1000 Gew.-ppm und insbesondere von 100 bis 700 Gew.-ppm, z.B. von 200 bis 500 Gew.-ppm, zugegeben.

### B4) Schmierfähigkeitsverbesserer

Geeignete Schmierfähigkeitsverbesserer (Lubricity Improver bzw. Friction Modifier) basieren üblicherweise auf Fettsäuren oder Fettsäureestern. Typische Beispiele sind Tallölfettsäure, wie beispielsweise in der WO 98/004656 beschrieben, und Glycerinmonooleat. Auch die in der US 6 743 266 B2 beschriebenen Reaktionsprodukte aus natürlichen oder synthetischen Ölen, beispielsweise Triglyceriden, und Alkanolaminen sind als solche Schmierfähigkeitsverbesserer geeignet.

### B5) Korrosionsinhibitoren

Geeignete Korrosionsinhibitoren sind z.B. Bernsteinsäureester, vor allem mit Polyolen, Fettsäurederivate, z.B. Ölsäureester, oligomerisierte Fettsäuren, substituierte Ethanolamine und Produkte, die unter dem Handelsnamen RC 4801 (Rhein Chemie Mannheim, Deutschland) oder HiTEC 536 (Ethyl Corporation) vertrieben werden.

### B6) Demulgatoren

Geeignete Demulgatoren sind z.B. die Alkali- oder Erdalkalisalze von Alkyl-substituierten Phenol- und Naphthalinsulfonaten und die Alkali- oder Erdalkalisalze von Fettsäuren, außerdem neutrale Verbindungen wie Alkoholalkoxylate, z.B. Alkoholethoxylate, Phenolalkoxylate, z.B. tert-Butylphenolethoxylat oder tert-Pentylphenolethoxylat, Fettsäuren, Alkylphenole, Kondensationsprodunkte von Ethylenoxid (EO) und Propylenoxid (PO), z.B. auch in Form von EO/PO-Blockcopolymeren, Polyethylenimine oder auch Polysiloxane.

### B7) Dehazer

Geeignete Dehazer sind z.B. alkoxylierte Phenol-Formaldehyd-Kondensate, wie beispielsweise die unter dem Handelsnamen erhältlichen Produkte NALCO 7D07 (Nalco) und TOLAD 2683 (Petrolite).

### B8) Antischaummittel

Geeignete Antischaummittel sind z.B. Polyether-modifizierte Polysiloxane, wie beispielsweise die unter dem Handelsnamen erhältlichen Produkte TEGOPREN 5851 (Goldschmidt), Q 25907 (Dow Corning) und RHODOSIL (Rhone Poulenc).

### B9) Cetanzahlverbesserer

Geeignete Cetanzahlverbesserer sind z.B. aliphatische Nitrate wie 2-Ethylhexylnitrat und Cyclohexylnitrat sowie Peroxide wie Di-tert-butylperoxid.

### B10) Antioxidantien

Geeignete Antioxidantien sind z.B. substituierte Phenole, wie 2,6-Di-tert.-butylphenol und 6-Di-tert.-butyl-3-methylphenol sowie Phenylendiamine wie N,N'-Di-sec.-butyl-p-phenylendiamin.

### B11) Metalldeaktivatoren

Geeignete Metalldeaktivatoren sind z.B. Salicylsäurederivate wie N,N'-Disalicyliden-1,2-propandiamin.

### B12) Lösungsmittel

Geeignete sind z.B. unpolare organische Lösungsmittel wie aromatische und aliphatische Kohlenwasserstoffe, beispielsweise Toluol, Xylole, "white spirit" und Produkte, die unter dem Handelsnamen SHELLSOL (Royal Dutch/Shell Group) und EXXSOL (ExxonMobil) vertrieben werden, sowie polare organische Lösungsmittel, beispielsweise Alkohole wie 2-Ethylhexanol, Decanol und Isotridecanol. Derartige Lösungsmittel gelangen meist zusammen mit den vorgenannten Additiven und Co-Additiven, die sie zur besseren Handhabung lösen oder verdünnen sollen, in den Dieselkraftstoff.

### C) Kraftstoffe

Das erfindungsgemäße Additiv eignet sich in hervorragender Weise als Kraftstoffzusatz und kann im Prinzip in jeglichen Kraftstoffen eingesetzt werden. Es bewirkt eine ganze Reihe von vorteilhaften Effekten beim Betrieb von Verbrennungsmotoren mit Kraftstoffen. Bevorzugt wird das erfindungsgemäße quaternisierte Additiv in Mitteldestillat-Kraftstoffen, insbesondere Dieselkraftstoffen, eingesetzt.

Gegenstand der vorliegenden Erfindung sind daher auch Kraftstoffe, insbesondere Mitteldestillat-Kraftstoffe, mit einem als Zusatzstoff zur Erzielung von vorteilhaften Effekten beim Betrieb von Verbrennungsmotoren, beispielsweise von Dieselmotoren, insbesondere von direkteinspritzenden Dieselmotoren, vor allem von Dieselmotoren mit Common-Rail-Einspritzsystemen, wirksamen Gehalt an dem erfindungsgemäßen quaternisierten Additiv. Dieser wirksame Gehalt (Dosierrate) liegt in der Regel bei 10 bis 5000 Gew.-ppm, vorzugsweise bei 20 bis 1500 Gew.-ppm, insbesondere bei 25 bis 1000 Gew.-ppm, vor allem bei 30 bis 750 Gew.-ppm, jeweils bezogen auf die Gesamtmenge an Kraftstoff.

Bei Mitteldestillat-Kraftstoffen wie Dieselkraftstoffen oder Heizölen handelt es sich vorzugsweise um Erdölraffinate, die üblicherweise einen Siedebereich von 100 bis 400°C haben. Dies sind meist Destillate mit einem 95%-Punkt bis zu 360°C oder auch darüber hinaus. Dies können aber auch so genannte "Ultra Low Sulfur Diesel" oder "City Diesel" sein, gekennzeichnet durch einen 95%-Punkt von beispielsweise maximal 345°C und einem Schwefelgehalt von maximal 0,005 Gew.-% oder durch einen 95%-Punkt von beispielsweise 285°C und einem Schwefelgehalt von maximal 0,001 Gew.-%. Neben den durch Raffination erhältlichen mineralischen Mitteldestillat-Kraftstoffen bzw. Dieselkraftstoffen sind auch solche, die durch Kohlevergasung oder Gasverflüssigung ["gas to liquid" (GTL)-Kraftstoffe] oder durch Biomasse-Verflüssigung ["biomass to liquid" (BTL)-Kraftstoffe] erhältlich sind, geeignet. Geeignet sind auch Mischungen der vorstehend genannten Mitteldestillat-Kraftstoffe bzw. Dieselkraftstoffe mit regenerativen Kraftstoffen, wie Biodiesel oder Bioethanol.

Die Qualitäten der Heizöle und Dieselkraftstoffe sind beispielsweise in DIN 51603 und EN 590 näher festgelegt (vgl. auch Ullmann' s Encyclopedia of Industrial Chemistry, 5. Auflage, Band A12, S. 617 ff.).

Das erfindungsgemäße quaternisierte Additiv kann neben seiner Verwendung in den oben genannten Mitteldestillat-Kraftstoffen aus fossilem, pflanzlichem oder tierischem Ursprung, die im wesentlichen Kohlenwasserstoffmischungen darstellen, auch in Mischungen aus solchen Mitteldestillaten mit Biobrennstoffölen (Biodiesel) eingesetzt werden. Derartige Mischungen werden im Sinne der vorliegenden Erfindung auch von dem Begriff" Mitteldestillat-Kraftstoff" umfasst. Sie sind handelsüblich und enthalten meist die Biobrennstofföle in untergeordneten Mengen, typischerweise in Mengen von 1 bis 30 Gew.-% insbesondere von 3 bis 10 Gew.-%, bezogen auf die Gesamtmenge aus Mitteldestillat fossilen, pflanzlichem oder tierischen Ursprungs und Biobrennstofföl.

Biobrennstofföle basieren in der Regel auf Fettsäureestern, vorzugsweise im wesentlichen auf Alkylester von Fettsäuren, die sich von pflanzlichen und/oder tierischen Ölen und/oder Fetten ableiten. Unter Alkylestern werden üblicherweise Niedrigalkylester, insbesondere C₁- bis C₄-Alkylester, verstanden, die durch Umesterung der in pflanzlichen und/oder tierischen Ölen und/oder Fetten vorkommenden Glyceride, insbesondere Triglyceride, mittels Niedrigalkoholen, beispielsweise Ethanol oder vor allem Methanol ("FAME"), erhältlich sind. Typische Niedrigalkylester auf Basis von pflanzlichen und/oder tierischen Ölen und/oder Fetten, die als Biobrennstofföl oder Komponenten hierfür Verwendung finden, sind beispielsweise Sonnenblumenmethylester, Palmölmethylester ("PME"), Sojaölmethylester ("SME") und insbesondere Rapsölmethylester ("RME").

Besonders bevorzugt handelt es sich bei den Mitteldestillat-Kraftstoffen bzw. Dieselkraftstoffen um solche mit niedrigem Schwefelgehalt, das heißt mit einem Schwefelgehalt von weniger als 0,05 Gew.-%, vorzugsweise von weniger als 0,02 Gew.-%, insbesondere von weniger als 0,005 Gew.-% und speziell von weniger als 0,001 Gew.-% Schwefel.

Als Ottokraftstoffe kommen alle handelsüblichen Ottokraftstoffzusammensetzungen in Betracht. Als typischer Vertreter soll hier der marktübliche Eurosuper Grundkraftstoff gemäß EN 228 genannt werden. Weiterhin sind auch Ottokraftstoffzusammensetzungen der Spezifikation gemäß WO 00/47698 mögliche Einsatzgebiete für die vorliegende Erfindung.

Das erfindungsgemäße quaternisierte Additiv eignet sich insbesondere als Kraftstoffzusatz in Kraftstoffzusammensetzungen, insbesondere in Dieselkraftstoffen, zur Überwindung der eingangs geschilderten Probleme bei direkteinspritzenden Dieselmotoren, vor allem bei solchen mit Common-Rail-Einspritzsystemen.

Die Erfindung wird nun anhand der folgenden Ausführungsbeispiele näher beschrieben. Insbesondere die im Folgenden genannten Testmethoden sind Teil der allgemeine Offenbarung der Anmeldung und nicht auf die konkreten Ausführungsbeispiele beschränkt.

### Experimenteller Teil:

### A. Allgemeine Testmethoden

### 1. DW10 Test - Bestimmung des Leistungsverlusts durch Injektorablagerungen im Common Rail Dieselmotor

Die Tests lehnen sich an die CEC Test Prozedur F-098-08 Issue 5 an. Dabei kommen der gleiche Testaufbau und Motorentyp (PEUGEOT DW10) wie in der CEC Prozedur zum Einsatz.

Änderung und Besonderheiten sind in den folgenden Anwendungsbeispielen beschrieben.

### 2. IDID Test - Bestimmung der Additivwirkung gegen interne Injektorablagerungen

Die Bildung von Ablagerungen im Inneren des Injektors wurde anhand der Abweichungen der Abgastemperaturen der Zylinder am Zylinderausgang beim Kaltstart des DW10-Motors charakterisiert.

Zur Förderung der Bildung von Ablagerungen wurden dem Kraftstoff 1 mg/l Na Salz einer organischen Säure, 20 mg/l Dodecenylbernsteinsäure und 10 mg/l Wasser zugegeben.

Die verwendete Dodecenylbernsteinsäure wurde erhalten durch Hydrolyse von Dodecenylbernsteinsäureanhydrid, Isomerengemisch der Fa. Aldrich, CAS-Nr. 26544-38-7.

Der Test wird als dirty-up-clean-up Test (DU-CU) durchgeführt.

DU-CU lehnt sich an die an die CEC Test Prozedur F-098-08 Issue 5 an.

Der DU - CU Test besteht aus zwei einzelnen Tests, die hintereinander gefahren werden. Der erste Test dient zur Ablagerungsbildung (DU), der zweite zum Entfernen der Ablagerungen (CU).

Nach dem DU Lauf wird nach einer mindestens achtstündigen Stillstands-Phase ein Kaltstart des Motors mit anschließendem 10-minütigen Leerlauf durchgeführt.

Danach wird mit dem CU Kraftstoff der CU gestartet, ohne die Injektoren auszubauen und zu reinigen. Nach dem CU Lauf über 8h wird nach einer mindestens achtstündigen Stillstands-Phase ein Kaltstart des Motors mit anschließendem 10-minütigen Leerlauf durchgeführt. Die Auswertung erfolgt durch den Vergleich der Temperaturverläufe für die einzelnen Zylinder nach Kaltstart des DU- und des CU-Laufs.

Der IDID-Test zeigt die interne Ablagerungsbildung im Injektor an. Als Kenngröße dient bei diesem Test die Abgastemperatur der einzelnen Zylinder. Bei einem Injektorsystem ohne IDID erhöhen sich die Abgastemperaturen der Zylinder gleichmäßig. Bei vorhandenem IDID erhöhen sich die Abgastemperaturen der einzelnen Zylinder nicht gleichmäßig und weichen voneinander ab.

Die Temperatursensoren befinden sich hinter dem Zylinderkopfaustritt im Abgaskrümmer. Signifikante Abweichung der einzelnen Zylindertemperaturen (z.B. > 20°C) zeigen das Vorliegen von internen Injektorablagerungen (IDID) an.

Die Tests (DU und CU) werden mit jeweils 8h Laufzeit durchgeführt. Der einstündige Testzyklus aus der CEC F-098-08 (siehe Figur 1) wird dabei jeweils 8-mal durchfahren. Bei Abweichungen der einzelnen Zylindertemperaturen von größer 45°C zum Mittelwert aller 4 Zylinder wird der Test vorzeitig abgebrochen.

Änderung und Besonderheiten: Gereinigte Injektoren wurden vor jedem DU-Testbeginn eingebaut. Die Reinigungsdauer im Ultraschallbad bei 60°C Wasser + 10% Superdecontamine betrug 4h.

### B. Synthesebeispiele

### Synthesebeispiel 1

### (MSA/C20-C24, in Wibarcan®)

In einem 4 L Glassreaktor mit Ankerrührer wurde eine Mischung aus C₂₀-C₂₄ Olefinen (901,4 g, Durchschnittmolmasse 296 g/mol) und Wibarcan® (1113,0 g, Firma Wibarco) vorgelegt. Die Mischung wurde im Stickstoffstrom und unter Rühren auf 150 °C erhitzt. Hierzu gab man innerhalb von 5 h eine Lösung von Di-tert-Butylperoxid (12,2 g, Fa. Akzo Nobel) in Wibarcan® (107,7 g) und geschmolzenes Maleinsäureanhydrid (298,6 g). Der Reaktionsansatz wurde 1 h bei 150 °C gerührt und dann auf 95 °C abgekühlt. Bei dieser Temperatur wurde Wasser (43,4 g) innerhalb 3 h zugegeben und anschließend 11 h weitergerührt.

GPC (Elutionsmittel THF + 1% Trifluoressigsäure, Polystyrol-Standard) zeigte ein Polymer mit Mn = 619 g/mol, Mw = 2 780 g/mol, Polydispersität 4,5.

### Synthesebeispiel 2

### (MSA/C20-C24, in Solvesso™ 150)

In einem 2 L Glasreaktor mit Ankerrührer wurden eine Mischung aus C₂₀-C₂₄ Olefinen (363,2 g, Durchschnittmolmasse 296 g/mol) und Solvesso™ 150 (270,2 g, DHC Solvent Chemie GmbH) vorgelegt. Die Mischung wurde im Stickstoffstrom und unter Rühren auf 150 °C erhitzt. Hierzu gab man innerhalb von 5 h eine Lösung von Di-tert-Butylperoxid (24,67 g, Fa. Akzo Nobel) in Solvesso™ 150 (217,0 g) und geschmolzenes Maleinsäureanhydrid (120,3 g). Der Reaktionsansatz wurde 1 h bei 150 °C gerührt und dann auf 95 °C abgekühlt. Bei dieser Temperatur wurde Wasser (19,9 g) innerhalb 3 h zugegeben und anschließend 11 h weitergerührt.

GPC (Elutionsmittel THF + 1% Trifluoressigsäure, Polystyrol-Standard) zeigte ein Polymer mit Mn = 1 330 g/mol, Mw = 2 700 g/mol, Polydispersität 2,0.

### Synthesebeispiel 3

### (MSA/C20-C24, in Solvesso™ 150)

In einem 2 L Glasreaktor mit Ankerrührer wurden eine Mischung aus C₂₀-C₂₄ Olefinen (363,2 g, Durchschnittmolmasse 296 g/mol) und Solvesso™ 150 (231,5 g, DHC Solvent Chemie GmbH) vorgelegt. Die Mischung wurde im Stickstoffstrom und unter Rühren auf 160 °C erhitzt. Hierzu gab man innerhalb von 5 h eine Lösung von Di-tert-Butylperoxid (29,6 g, Fa. Akzo Nobel) in Solvesso™ 150 (260,5 g) und geschmolzenes Maleinsäureanhydrid (120,3 g). Der Reaktionsansatz wurde 1 h bei 150 °C gerührt und dann auf 95 °C abgekühlt. Bei dieser Temperatur wurde Wasser (19,9 g) innerhalb 3 h zugegeben und anschließend 11 h weitergerührt.

GPC (Elutionsmittel THF + 1% Trifluoressigsäure, Polystyrol-Standard) zeigte ein Polymer mit Mn = 1 210 g/mol, Mw = 2 330 g/mol, Polydispersität 1,9.

### Synthesebeispiel 4

### (MSA/C20-C24, in Solvesso™ 150)

In einem 2 L Glasreaktor mit Ankerrührer wurden eine Mischung aus C₂₀-C₂₄ Olefinen (371,8 g, Durchschnittmolmasse 296 g/mol) und Solvesso™ 150 (420,7 g, DHC Solvent Chemie GmbH) vorgelegt. Die Mischung wurde im Stickstoffstrom und unter Rühren auf 150 °C erhitzt. Hierzu gab man innerhalb von 3 h eine Lösung von Di-tert-Butylperoxid (5,71 g, Fa. Akzo Nobel) in Solvesso™ 150 (50,2 g) und geschmolzenes Maleinsäureanhydrid (123,2 g). Der Reaktionsansatz wurde 1 h bei 150 °C gerührt und anschließend auf Raumtemperatur abgekühlt. In einem 250 ml Zweihalskolben mit aufgesetztem Rückflußkühler wurden 160 g des so erhaltenen Copolymers vorgelegt und 3,63 g Wasser wurden zugegeben. Die Mischung wurde für 16 h bei 95°C gerührt.

### Synthesebeispiel 5

### Quaternierung

In einem 2 I Autoklaven wird eine Lösung des Reaktionsproduktes aus Synthesebeispiel 2 (234 g, Lösung in Solvesso™ 150) und Kokoyldimethylamin (112,6 g, N,N-Dimethyl-N-C_{12/14}-amin, CAS 68439-70-3 bzw. CAS 112-18-5 mit einer Gesamtaminzahl von 249 mg KOH/g) in 2-Propylheptanol (259 g) vorgelegt. Anschließend wird dreimal mit N₂ gespült, ein Vordruck von ca. 2 bar N₂ eingestellt und die Temperatur auf 50°C erhöht. Propylenoxid (58 g) wird innerhalb von 1 h zudosiert. Anschließend wird 15 h bei 50°C nachgerührt, auf 25°C abgekühlt, mit N₂ gespült und der Reaktor entleert. Das Produkt wird in einen 2 I Doppelmantelreaktor überführt und überschüssiges Propylenoxid wird durch Einleiten eines N₂-Stromes (10 l/h) unter Vakuum (100 mbar) bei 50°C für 6 h entfernt. ¹H-NMR (CDCl₃) bestätigt die Quaternierung (δ = 3.3 ppm, Singulett, R₂N(CH₃)₂).

### D. Anwendungsbeispiele

### Anwendungsbeispiel 1: DW10 Zn Motorentest (clean up)

Der Test wurde mit einem Peugeot DW10 Motor durchgeführt, der nach Standard-CEC F-98-08 Prozedur verwendet wird, wobei in Abwandlung jedoch schärfere Bedingungen im Dirty-up Teil verwendet wurden:

### I. Dirty-up:

Die schärferen Bedingungen erlauben die deutlich schnellere Bildung von Injektorablagerungen und damit eine schnellere power-loss Bestimmung als unter Standard CEC F-98-08 Bedingungen: Der Motor wurde 4.28 h bei Volllast (4000 rpm) mit EN590 B7 Aral, unadditiviert, enthaltend 3 mg/kg Zn, betrieben. Die Ergebnisse sind in folgender Tabelle zusammengefasst:

### II. Clean-up:

Für clean-up-Test, verkürzt auf 8 h nach CEC F-98-08 Prozedur mit 1 ppm Zn und EN590 B7 Aral Kraftstoff, unadditiviert, enthaltend erfindungsgemäße Zusätze wurden die in folgender Tabelle zusammengefasten Resultate erzielt.

| Test | Additive | Motorleistung vor Test , kW | Motorleistung nachTest kW | Leistungsänderung im Test % |
|---|---|---|---|---|
| Dirty-up (Schnellverfahren), full load | 3 ppm Zn | 98,3 | 94,5 | -3,9 |
| Clean-up, 8 h, Prozedur CEC F-98-08 | 1 ppm Zn und 28 ppm aktiver Bestandteil Synthesebeispiel 4 | 94,1 | 96,4 | +2,4 |
| | | | | |
| Dirty-up (Schnellverfahren), full load | 3 ppm Zn | 95,8 | 90,5 | -5,5 |
| Clean-up, 8h, Prozedur CEC F-98-08 | 1 ppm Zn und 50 ppm aktiver Bestandteil Synthesebeispiel 2 | 90,5 | 94,1 | +4,0 |
| | | | | |
| Dirty-up (Schnellverfahren), full load | 3 ppm Zn | 95,4 | 91,5 | -4,1 |
| Clean-up, 8 h, Prozedur CEC F-98-08 | 1 ppm Zn and 70 ppm aktiver Bestandteil Synthesebeispiel 5 | 91,2 | 94,3 | +3,2 |

Die in dieser Erfindung beschriebenen Verbindungen sind wirksam gegen die Bildung von Ablagerung im Direkteinspritzermotoren, wie Peugeot DW10, bei Prüfung nach CEC F-98-08, und sind in der Lage, die gebildeten Ablagerungen früher zu entfernen.

### Anwendungsbeispiel 2: DW10 Na soap IDID test (clean-up)

Zur Untersuchung des Einflusses der Additive auf die Performance von direkteinspritzenden Dieselmotoren wurde als weitere Testmethode der IDID-Motorentest verwendet, bei dem die Abgastemperaturen der Zylinder am Zylinderausgang beim Kaltstart des DW10-Motors bestimmt wurden. Verwendet wurde ein direkteinspritzender Dieselmotor mit Common-Rail-System des Herstellers Peugeot gemäß Testmethoden CEC F-098-08. Als Kraftstoff wurde ein handelsüblicher B7 Dieselkraftstoff gemäß EN 590 der Fa. Aral eingesetzt. Diesem wurden zur künstlichen Anregung der Bildung von Ablagerungen jeweils 1 Gew.-ppm Natriumnaphthenat sowie 20 Gew.-ppm Dodecenylbernsteinsäure zugesetzt.

Ähnlich wie das Verfahren CEC F-98 -08 wird die Motorleistung während des Tests gemessen. Der Test bestand aus zwei Teilen:

### I. Dirty-up:

Der Test wurde ohne Zusatz von Verbindungen gemäß dieser Erfindung durchgeführt. Der Test wurde auf 8 Stunden verkürzt, das CEC F-98 -08 Verfahren wurde ohne Zusatz von Zn wurde durchgeführt. Wenn signifikante Abweichungen von Abgastemperaturen beobachtet wurden, wurde die Prüfung vor Erreichen der 8 Stunden-Marke angehalten, um Motorschäden zu vermeiden. Nach dem dirty up- Lauf, ließ man den Motor abkühlen und danach wurde erneut gestartet und im Leerlauf 5 Minuten betrieben. Während dieser 5 Minuten wurde der Motor aufgewärmt. Die Abgastemperatur von jedem Zylinder wurde aufgezeichnet. Je geringer die Unterschiede zwischen den ermittelten Abgas-Temperaturen sind, um so niedriger ist die Menge an gebildeten IDID.

Es wurden jeweils die Abgastemperaturen der 4 Zylinder ("Z1" bis "Z4") an den Zylinder-ausgängen nach 0 Minuten ("ϑ 0") und nach 5 Minuten ("ϑ 5")gemessen. Die Ergebnisse der Abgastemperatur-Messungen mit Durchschnittswerten ("Δ ") und den größten Abweichungen von Δ nach unten ("-") und oben ("+") für die beiden Testläufe sind in der folgenden Übersicht zusammengefasst.

### II. Clean-up:

Der Test wurde auf 8 Stunden verkürzt, das CEC F-98 -08 Verfahren wurde ohne Zusatz von Zn wurde durchgeführt. Es wurden jedoch jeweils 1 Gew.-ppm Natriumnaphthenat sowie 20 Gew.-ppm Dodecenylbernsteinsäure sowie eine erfindungsgemäße Verbindung zugesetzt, und die Motorenleistung bestimmt.

Nach dem clean up wurde der Motor abgekühlt und erneut gestartet. Die Abgastemperatur von jedem Zylinder wurde aufgezeichnet. Je geringer die Unterschiede zwischen den ermittelten Abgas-Temperaturen sind, um so niedriger ist die Menge an gebildeten IDID.

Es wurden jeweils die Abgastemperaturen der 4 Zylinder ("Z1" bis "Z4") an den Zylinder-ausgängen nach 0 Minuten ("ϑ0") und nach 5 Minuten ("ϑ5")gemessen. Die Ergebnisse der Abgastemperatur-Messungen mit Durchschnittswerten ("Δ") und den größten Abweichungen von Δ nach unten ("-") und oben ("+") sind in der folgenden Übersicht zusammengefasst.

Die folgenden Ergebnisse wurden ermittelt:

### Dirty up - Clean up - Sequenz 1:

### Dirty-up:

Signifikante Abweichungen in Abgastemperaturen wurden während des Tests beobachtet, so dass dieser nach 3 Stunden angehalten wurde, um Motorschäden zu vermeiden.

### Nach dirty up:

| | | | | |
|---|---|---|---|---|
| ϑ 0 | Z1: 34°C | Z2: 31°C | Z3: 28°C | Z4: 27°C |
| ϑ 5 | Z1: 119°C | Z2: 117°C | Z3: 41°C | Z4: 45°C |
| Δ : 80,5°C (+38,5°C / -39,5°C) | | | | |

Wesentliche Abweichungen von dem Mittelwert und signifikante Unterschied zwischen den einzelnen Zylindern belegen die Präsenz von IDID.

### Clean-up:

Nach clean up mit 168 ppm Additiv nach Synthesebeispiel 4 in Gegenwart von 1 ppm Na + 20 ppm Dodecenylbernsteinsäure:

| | | | | |
|---|---|---|---|---|
| ϑ 0 | Z1: 28°C | Z2: 27°C | Z3: 27°C | Z4: 26°C |
| ϑ 5 | Z1: 74°C | Z2: 77°C | Z3: 60°C | Z4: 66°C |
| Δ : 69,3°C (-9,3°C / +7,7°C) | | | | |

Die Abweichung vom Mittelwert der Temperatur der Abgase ist niedrig, was für die Entfernung von IDID spricht.

### Dirty up - Clean up Sequenz 2:

### Nach dirty-up (8h):

| | | | | |
|---|---|---|---|---|
| ϑ 0 | Z1: 40°C | Z2: 28°C | Z3: 38°C | Z4: 30°C |
| ϑ 5 | Z1: 274°C | Z2: 293°C | Z3: 112°C | Z4: 57°C |
| Δ : 184°C (+109°C / -127°C) | | | | |

Extrem hohe Abweichungen von dem Mittelwert und signifikante Unterschied zwischen den einzelnen Zylindern belegen die Präsenz von ausgeprägten IDID.

### Clean-up

Nach clean up mit 140 ppm Additiv nach Synthesebeispiel 4 in Gegenwart von 1 ppm Na + 20 ppm Dodecenylbernsteinsäure:

| | | | | |
|---|---|---|---|---|
| ϑ 0 | Z1: 44°C | Z2: 43°C | Z3: 44°C | Z4: 45°C |
| ϑ 5 | Z1: 78°C | Z2: 78°C | Z3: 83°C | Z4: 80°C |
| Δ : 80°C (-2°C / +3°C) | | | | |

Die Abweichung vom Mittelwert der Temperatur der Abgase ist sehr niedrig, was für die Entfernung der signifikanten IDID spricht.

Die Verbindungen gemäß dieser Erfindung sind somit sehr wirksam gegen IDID Bildung in Motoren mit Direkteinspritzung, wie Peugeot DW10, in einem Test ähnlich zu CEC F-98-08 Prozedur.

### Anwendungsbeispiel 3: DW10 Na Power loss Test

Zur Untersuchung der Wirksamkeit der erfindungsgemäßen Verbindungen gegen power loss, verursacht durch Metalle, wie Na, K und andere (und nicht durch Zn wie oben beschrieben), wurde ein IDID-Motorentest eingesetzt. Während des Laufs wird die Leistung nach CEC F-098-08 gemessen.

| Test | Additiv | Motorenleistung vor dem Test, [kW] | Motorenleistung nach dem Test, [kW] | Leistungsänderung im Test [%] |
|---|---|---|---|---|
| Dirty up, 8 h | 1 ppm Na + 20 ppm Dodecenylbernsteinsäure | 96,8 | 88,8 | -8,3 |
| Clean up, 8 h | 1 ppm Na + 20 ppm Dodecenylbernsteinsäure und 140 ppm aktiver Bestandteil Synthesebeispiel 4 | 88,4 | 91,4 | +3,4 |
| Clean up, 8 h | 1 ppm Na + 20 ppm Dodecenylbernsteinsäure und 100 ppm aktiver Bestandteil Synthesebeispiel 5 | 90,0 | 91,2 | +0,9 |

Die Verbindungen gemäß dieser Erfindung sind gegen Ablagerungen verursacht durch andere Metallen als Zn in Motoren mit Direkteinspritzung wirksam, wie in dem obigen Na Power loss Test gezeigt Die Verbindungen verhindern in wirksamer Weise Leistungsverlust und können auch verwendet werden, um Ablagerungen zu entfernen.

### Anwendungsbeispiel 4: Filbierbarkeitstest (IP 387)

Die Bildung von Rückständen im Kraftstoff- und Einspritzsystem geht zurück auf eine ungenügende Löslichkeit der gebildeten Rückstände, ihrer Bestandteile und Vorläufer.

IP 387/97-Tests wurden durchgeführt um die Tendenz des Kraftstoffes zu bestimmen ein Filter zu blockieren, wobei die Menge an Agglomerat und kleinen unlöslichen Partikeln im Kraftstoff bestimmt wurde. In diesem Test wird Kraftstoff in einer konstanten Flussgeschwindigkeit von 20 ml/min durch ein bestimmtes Glasfaserfiltermedium gefördert. Die Druckdifferenz über das Filter wird verfolgt und das Volumen an durch das Filter gefördertem Kraftstoff bis zum Erreichen einer bestimmten Druckdifferenz gemessen. Der Test wird beendet, wenn entweder 300 ml Kraftstoff filtriert wurden oder dir Druckdifferenz 105 kPa überschreitet. Eine geringere Druckdifferenz nach Filtrierung von 300 ml Kraftstoff zeigen eine geringe Neigung zum Blockieren von Filtern an.

In den Test wurde ein Kraftstoff gemäß EN 590 ohne Leistungsadditive als Basiskraftstoff eingesetzt. Um die Neigung des Kraftstoffes zur Blockierung des Filters durch Salzbildung zu untersuchen, wurde der Kraftstoff mit 3 mg/l Natrium-Ionen (durch Zugabe von Natriumnaphthenat) sowie 20 mg/L Dodecenylbernsteinsäure versetzt.
a) Im IP 387 Test ergab der Basiskraftstoff, versetzt mit 3 mg/l Natrium und 20 mg/L Dodecenylbernsteinsäure, eine Druckdifferenz von 105 kPa bereits nach Filtrierung von 240 ml Kraftstoff.
b) Zugabe von 250 mg/kg des Produktes hergestellt gemäß Synthesebeispiel 4 zu dem Basiskraftstoff zusätzlich zu 3 mg/l Natrium und 20 mg/L Dodecenylbernsteinsäure zeigte nach Filtration von 300 ml Kraftstoff eine Druckdifferenz von lediglich 26 kPa.

Dies zeigt deutlich, dass das erfindungsgemäße Beispiel die Filtrierbarkeit des Kraftstoffes verbessert und somit die Ablagerung von Rückständen im Kraftstoff- und Injektorsystem verhindern kann.

### Anwendungsbeispiel 5: Test zur Bestimmung der Bildung von Ablagerungen in Kraftstoffen bei erhöhter Temperatur (JFTOT Test gemäß ASTM D3241)

In den Test wurde ein Kraftstoff gemäß EN 590 ohne Leistungsadditive als Basiskraftstoff eingesetzt. Der Test wurde gemäß ASTM D3241 ohne Vorfilter durchgeführt. Es wurde eine Temperatur im Heizrohr von 260 °C eingestellt, der Kraftstofffluss betrug 3 ml/min, die Gesamtdauer betrug 150 min.
Der Test wurde beendet sobald der Druckabfall 250 mm Hg überschritt. Der Staudruck am Testende bzw. die Zeit bis zum Erreichen des Druckabfalls von 25 mm Hg wurde verwendet um die Bildungsgeschwindigkeit von Ablagerungen zu bestimmen. Ein niedriger Druckabfall am Testende oder ein langer Zeitraum bis zum Erreichen des Werts von 25 mm Hg im Test zeigen eine geringe Neigung zur Bildung von Ablagerungen.
a) Der Basiskraftstoff, versetzt mit 3 mg/l Natrium und 20 mg/L Dodecenylbernsteinsäure, führte im Test zu einem Staudruck von 250 mm Hg nach 80 min, ein Staudruck von 25 mm Hg wurde nach 12 min erreicht.
b) Zugabe von 500 mg/kg des Produktes hergestellt gemäß Synthesebeispiel 4 zu dem Basiskraftstoff zusätzlich zu 3 mg/l Natrium und 20 mg/l Dodecenylbernsteinsäure zeigte am Testende nach 150 min einen Staudruck von Null.
c) Zugabe von 500 mg/kg eines Dodecenylbernsteinsäureimides von TEPA, hergestellt durch Kondensationsreaktion von Dodecenylbernsteinsäureanhydrid mit Tetraethylenpentamin (TEPA) als 50 Gew%ige Lösung ni 2-Ethylhexanol, zu dem Basiskraftstoff zusätzlich zu 3 mg/l Natrium und 20 mg/l Dodecenylbernsteinsäure führte im Test zu einem Staudruck von 250 mm Hg bereits nach 28 min, ein Staudruck von 25 mm Hg wurde bereits nach 6 min erreicht. Zusätzlich wurden braune Ablagerungen in der Testapparatur festgestellt.
d) Zugabe von 500 mg/kg des Produktes hergestellt gemäß Synthesebeispiel 4 zu dem Kraftstoffgemisch gemäß c) führten am Testende nach 150 min zu einem Staudruck von lediglich 6 mm Hg.

Dies zeigt deutlich, dass das erfindungsgemäße Beispiel die Ablagerung von Rückständen im Kraftstoff bei höheren Temperaturen verhindern kann.

### Anwendungsbeispiel 6: DW10 polymere IDID Test (clean up)

Zur Untersuchung des Einflusses der Additive auf die Performance von direkteinspritzenden Dieselmotoren wurde als weitere Testmethode der IDID-Motorentest durchgeführt, bei dem die Abgastemperatur der Zylinder am Zylinderausgang beim Kaltstart des DW10-Motors bestimmt wurden. Verwendet wurde ein direkteinspritzender Dieselmotor mit Common-Rail-System des Herstellers Peugeot gemäß Testmethoden CEC F-098-008.

Als Kraftstoff wurde Kraftstoff DF-79-07 BATCH 7 der Fa. Haltermann verwendet.

Diesem Kraftstoff wurden 50 mg/kg des Produktes der Kondensationsreaktion von Dodecenylbernsteinsäureanhydrid Isomerengemisch (CAS Nummer 26544-38-7) mit Tetraethylenpentamin (TEPA) (CAS Nummer 112-57-2) zugesetzt, das wie folgt erhalten wurde:
Zu einer Lösung von Dodecenylbernsteinsäureanhydrid Isomerengemisch (1,0 Äq., nach Verseifungszahl) in Solvent Naphtha Naphthalene depleted wurde bei 100°C Tetraethylenpentamin (TEPA) (1,0 Äq, M = 189,3 g/mol) zugetropft. Anschließend wurde auf 170°C erwärmt und entstehendes Wasser abdestilliert. Danach wurde 2-Ethylhexanol zugegeben, abgekühlt und abgelassen.

Die Menge an Lösungsmitteln wurden so gewählt, dass das Produkt eine Konzentration von 50% (w/w) in einem Lösungsmittelgemisch Solvent Naphtha Naphthalene depleted/2-Ethylhexanol 4:1 (w/w) hatte.

### I. Dirty-up

Der Test wurde ohne Zusatz von Verbindungen gemäß dieser Erfindung durchgeführt und auf 8 Stunden verkürzt, das CEC F-98-08 Verfahren wurde ohne Zusatz von Zink durchgeführt.

Nach dem dirty up-Lauf wurde der Motor abgekühlt und erneut gestartet und im Leerlauf 5 Minuten betrieben. Während dieser 5 Minuten wurde der Motor aufgewärmt. Die Abgastemperatur von jedem Zylinder wurde aufgezeichnet. Je geringer die Unterschiede zwischen den ermittelten Abgas-Temperaturen sind, um so niedriger ist die Menge an gebildeten IDID.

Es wurden jeweils die Abgastemperaturen der 4 Zylinder ("Z1" bis "Z4") an den Zylinderausgängen nach 0 Minuten ("ϑ 0") und nach 5 Minuten ("ϑ 5")gemessen. Die Ergebnisse der Abgastemperatur-Messungen mit Durchschnittswerten ("Δ ") und den größten Abweichungen von Δ nach unten ("-") und oben ("+") sind in der folgenden Übersicht zusammengefasst.

### II. Clean-up

Der Test wurde auf 8 Stunden verkürzt, das CEC F-98-08 Verfahren wurde ohne Zusatz von Zink durchgeführt.

50 mg/kg des Produktes der Kondensationsreaktion von Dodecenylbernsteinsäureanhydrid mit Tetraethylenpentamin (TEPA) (hergestellt wie bei Anwendungsbeispiel 6 beschrieben) wurden zur künstlichen Anregung der Bildung von Ablagerungen zugesetzt.

Ferner wurden 100 mg/kg des Produktes hergestellt gemäß Synthesebeispiel 4 zu dem Kraftstoffgemisch zugesetzt.

Die folgenden Ergebnisse wurden ermittelt:

### Nach dirty up

| | | | | |
|---|---|---|---|---|
| ϑ 0 | Z1: 45°C | Z2: 47°C | Z3: 33°C | Z4: 45°C |
| ϑ 5 | Z1: 82°C | Z2: 104°C | Z3: 47°C | Z4: 113°C |
| Δ : 86,5°C (-39,5°C / +26,5°C) | | | | |

Wesentliche Abweichungen von dem Mittelwert und signifikante Unterschiede zwischen den einzelnen Zylindern belegen die Präsenz von IDID.

### Nach clean up

| | | | | |
|---|---|---|---|---|
| ϑ 0 | Z1: 41°C | Z2: 41°C | Z3: 39°C | Z4: 43°C |
| ϑ 5 | Z1: 82°C | Z2: 81°C | Z3: 80°C | Z4: 82°C |
| Δ : 81,3°C (-1,3°C/+0,7°C) | | | | |

Die Abweichung vom Mittelwert der Temperatur der Abgase ist niedrig, was für die Entfernung von IDID spricht.

Das Testergebnis nach clean up zeigt, dass die Verbindungen gemäß der Erfindung sehr effektiv in der Verhinderung der Bildung von polymeren IDID und deren Entfernung sind.

Auf die Offenbarung der hierin zitierten Druckschriften wird ausdrücklich Bezug genommen.

## Patentansprüche

1. Dieselkraftstoff, enthaltend mindestens ein Biodieselöl und (a) mindestens ein Olefin-polymerisierbares Carbonsäure-Copolymer, wobei das Copolymer wenigstens eine freie Carbonsäureseitengruppe enthält, oder (b) mindestens eine mit Epoxid in Gegenwart eines Olefin-polymerisierbaren Carbonsäure-Copolymers, wobei das Copolymer wenigstens eine freie Carbonsäureseitengruppe enthält, quaternisierte Stickstoffverbindung,
wobei die polymerisierbare Carbonsäure eine polymerisierbare Mono- oder Polycarbonsäure ist.

2. Dieselkraftstoff, enthaltend mindestens ein Biodieselöl und mindestens ein Copolymer, ein Copolymer-haltiges Reaktionsprodukt, oder eine Copolymer-haltige Teilfraktion davon, wobei das Copolymer erhältlich ist durch
(1) Copolymerisation von
a) mindestens einem ethylenisch ungesättigten, polymerisierbaren Polycarbonsäureanhydrid mit
b) mindestens einem polymerisierbaren Olefin;
(2) anschließende Derivatisierung des Copolymers aus Schritt (1) durch teilweise oder vollständige Umsetzung der Anhydridreste des Copolymers aus Schritt (1) mit Wasser, oder wenigstens einer Hydroxylverbindung, oder wenigstens einem primären oder sekundären Amin, oder Gemischen davon; unter Bildung eines carboxylgruppenhaltigen Copolymer-Derivats; und gegebenenfalls
(3) Quaternisierung einer quaternisierbaren (insbesondere tertiären) Stickstoffverbindung mit einem Epoxid und dem Copolymer-Derivat aus Schritt (2).

3. Dieselkraftstoff, enthaltend mindestens ein Biodieselöl und mindestens ein Copolymer, ein Copolymer-haltiges Reaktionsprodukt, oder eine Copolymer-haltige Teilfraktion davon, wobei das Copolymer erhältlich ist durch
(1) Copolymerisation von
a) mindestens einer ethylenisch ungesättigten, polymerisierbaren Mono- oder Polycarbonsäure mit
b) mindestens einem polymerisierbaren Olefin;
(2) anschließende Derivatisierung des Copolymers aus Schritt (1) durch teilweise Umsetzung der Carboxylreste des Copolymers mit wenigstens einer Hydroxylverbindung, wenigstens einem primären oder sekundären Amin; oder Gemischen davon, unter Bildung eines Copolymerderivats mit verringertem Gehalt an freien Carboxylgruppen; und gegebenenfalls
(3) Quaternisierung einer quaternisierbaren Stickstoffverbindung mit einem Epoxid und dem Copolymerderivat aus Schritt (2).

4. Dieselkraftstoff, enthaltend mindestens ein Biodieselöl und mindestens ein Copolymer, ein Copolymer-haltiges Reaktionsprodukt, oder eine Copolymer-haltige Teilfraktion davon, wobei das Copolymer erhältlich ist durch
(1) Copolymerisation von
a) mindestens eine ethylenisch ungesättigten, polymerisierbaren Mono- oder Polycarbonsäure mit
b) mindestens einem polymerisierbaren Olefin und gegebenenfalls
(2) Quaternisierung einer quaternisierbaren Stickstoffverbindung mit einem Epoxid und dem Hydrolyseprodukt aus Schritt (1).

5. Dieselkraftstoff nach einem der Ansprüche 1 bis 4 enthaltend zusätzlich mindestens ein weiteres Additiv.

6. Dieselkraftstoff gemäß einem der Ansprüche 1 bis 5, wobei es sich bei dem mindestens einen Biobrennstofföl um mindestens einen C₁- bis C₄-Alkylester handelt, die durch Umesterung der in pflanzlichen und/oder tierischen Ölen und/oder Fetten vorkommenden Glyceride, insbesondere Triglyceride, mittels Niedrigalkoholen, beispielsweise Ethanol oder vor allem Methanol ("FAME"), erhältlich sind.

7. Dieselkraftstoff gemäß einem der Ansprüche 1 bis 6, wobei das Biobrennstofföl ausgewählt ist aus der Gruppe bestehend aus Sonnenblumenmethylester, Palmölmethylester ("PME"), Sojaölmethylester ("SME"), Talgmethylester ("TME") und Rapsölmethylester ("RME").

8. Dieselkraftstoff gemäß einem der Ansprüche 1 bis 7, wobei das Copolymer in Mengen von 10 bis 5000 Gew.-ppm enthalten ist.

9. Dieselkraftstoff nach einem der vorhergehenden Ansprüche, wobei die ethylenisch ungesättigte Carbonsäure, eine ethylenisch ungesättigten C₃-C₄₀-MonoCarbonsäure ist.

10. Dieselkraftstoff nach einem der vorhergehenden Ansprüche , wobei die quaternisierbare Stickstoffverbindung, wie insbesondere ein quaternisierbares Alkylamin, wenigstens eine quaternisierbare, tertiäre Aminogruppe aufweist.

11. Dieselkraftstoff nach einem der vorhergehenden Ansprüche, wobei das Epoxid ein Epoxid der allgemeinen Formel 4 umfasst 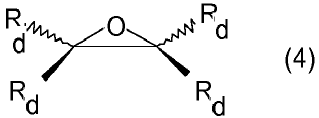 wobei
die darin enthaltenen Reste R_{d} gleich oder verschieden sind und für H oder für einen Hydrocarbylrest stehen, wobei der Hydrocarbylrest für einen aliphatischen oder aromatischen Rest mit 1 bis 20, insbesondere 1 bis 16 Kohlenstoffatomen steht.

12. Dieselkraftstoff nach einem der vorhergehenden Ansprüche, wobei die quaternisierbare Stickstoffverbindung ein quaternisierbares Amin der folgenden allgemeinen Formel 3 umfasst,
RₐR_{b}R_{c}N (3)
worin
wenigstens einer der Reste Rₐ ,R_{b} und R_{c} für einen geradkettigen oder verzweigte, gesättigten oder ungesättigten C₈-C₄₀-Hydrocarbylrest (insbesondere geradkettigen oder verzweigte C₈ - C₄₀-Alkyl) steht und die übrigen Reste für gleiche oder verschiedene, geradkettige oder verzweigte, gesättigte oder ungesättigten C₁-C₆-Hydrocarbylreste (insbesondere C₁-C₆-Alkyl) stehen; oder
worin alle Reste Rₐ ,R_{b} und R_{c} für gleiche oder verschiedene geradkettige oder verzweigte, gesättigten oder ungesättigten C₈-C₄₀-Hydrocarbylreste, insbesondere geradkettige oder verzweigte C₈ - C₄₀-Alkyl-Reste stehen.

13. Dieselkraftstoff nach einem der Ansprüche 1 bis 13, wobei das Copolymer nach einem Verfahren hergestellt wird,
umfassend die
(1) Copolymerisation der der Monomerkomponenten
(2) gegebenenfalls anschließende teilweise oder vollständige Umsetzung des Copolymers aus Schritt (1) mit Wasser, wenigstens einer Hydroxylverbindung, wenigstens einem primären oder sekundären Amin; oder Gemischen davon; und/oder gegebenenfalls
(3) Quaternisierung einer quaternisierbaren Stickstoffverbindung mit einem Epoxid und dem Hydrolyseprodukt aus Schritt (2); oder mit einem Epoxid und dem Copolymer aus Schritt (1) .
